(19) Europäisches Patentamt
European Patent Office
Office européen des brevets

(11) EP 3 828 982 B1

(12) EUROPEAN PATENT SPECIFICATION

(45) Date of publication and mention of the grant of the patent:
**16.08.2023 Bulletin 2023/33**

(21) Application number: **19850705.5**

(22) Date of filing: **16.08.2019**

(51) International Patent Classification (IPC):
***H01M 10/0567*** *(2010.01)* ***H01M 10/054*** *(2010.01)*
***H01M 10/0525*** *(2010.01)*

(52) Cooperative Patent Classification (CPC):
**H01M 10/0525; H01M 10/054; H01M 10/0567;**
H01M 2300/0025; H01M 2300/0045; Y02E 60/10

(86) International application number:
**PCT/JP2019/032140**

(87) International publication number:
**WO 2020/036222 (20.02.2020 Gazette 2020/08)**

# (54) NON-AQUEOUS ELECTROLYTE SOLUTION AND NON-AQUEOUS ELECTROLYTE SECONDARY BATTERY

NICHTWÄSSRIGE ELEKTROLYTLÖSUNG UND SEKUNDÄRBATTERIE MIT NICHTWÄSSRIGEM ELEKTROLYTEN

SOLUTION ÉLECTROLYTIQUE NON-AQUEUSE ET BATTERIE SECONDAIRE À ÉLECTROLYTE NON-AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2018 JP 2018153181**

(43) Date of publication of application:
**02.06.2021 Bulletin 2021/22**

(73) Proprietor: **Central Glass Co., Ltd.**
**Yamaguchi 755-0001 (JP)**

(72) Inventors:
- **MORINAKA, Takayoshi**
  **Ube-shi, Yamaguchi 755-0001 (JP)**
- **KAWAHARA, Kei**
  **Ube-shi, Yamaguchi 755-0001 (JP)**
- **KAWABATA, Wataru**
  **Ube-shi, Yamaguchi 755-0001 (JP)**
- **MORI, Katsumasa**
  **Ube-shi, Yamaguchi 755-0001 (JP)**
- **TAKAHASHI, Mikihiro**
  **Ube-shi, Yamaguchi 755-0001 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 261 166** **EP-A1- 3 349 290**
**WO-A1-2017/111143** **US-A1- 2017 271 715**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 828 982 B1

## Description

TECHNICAL FIELD:

The present invention relates to a nonaqueous electrolyte solution and a nonaqueous electrolyte secondary battery.

BACKGROUND TECHNOLOGY:

The optimization of various battery elements including positive electrode and negative electrode active materials has been investigated as a means for improving the durability of nonaqueous electrolyte secondary batteries until now. Nonaqueous electrolyte solutions are not also exceptions, and it has been proposed to suppress deterioration due to the decomposition of an electrolyte solution on the surfaces of the active positive and negative electrodes, by using various kinds of durability improvers.

Patent Literature 1, for example, discloses that a sulfonate compound in which a cyclic sulfone group is bound to a sulfonate group (a sulfonic acid ester group) is included in an electrolyte solution as an additive to improve a high temperature characteristic and a lifetime characteristic (cycle characteristic) of lithium batteries. It furthermore discloses that the second lithium salt including $N(SO_2F)_2^-$ may be included in the electrolyte solution, and bis(fluorosulfonyl)imide lithium (hereinafter, may be referred to as "LiFSI") is provided as an example of the second lithium salt. In addition, Patent Literatures 2 and 3, for example, disclose that durability such as a high temperature shelf life (high temperature storage characteristic) is improved using an electrolyte solution containing a dicarboxylic acid such as oxalic acid and an imide salt having a phosphoryl group as additives. It is however neither disclosed nor suggested that these additives are used in combination with e.g., a cyclic sulfonate compound at all.

Patent Literature 4 describes a non-aqueous electrolyte solution for lithium secondary battery, comprising a lithium salt dissolved in a carbonate-based solvent, and a cyclic sulfone or cyclic sulfonate compound bearing at least one sulfonate group on the ring.

Patent Literatures 5 and 6 refer to the use of imide salts as co-additive for electrolyte compositions in lithium secondary batteries, like for instance lithium bis(difluorophosphoryl)imide or lithium (difluorophosphoryl)(fluorosulfonyl)imide.

PRIOR ART DOCUMENTS:

PATENT LITERATURES

Patent Literature 1: U.S. Patent Application No. 2017/0271715
Patent Literature 2: WO2011/024251 Pamphlet
Patent Literature 3: Japanese Unexamined Patent Application Publication No. (hereinafter referred to as "JP-A-") 2013-051122
Patent Literature 4 : EP 3 349 290 A1
Patent Literature 5 : EP 3 261 166 A1
Patent Literature 6 : WO 2017/111143 A1

SUMMARY OF INVENTION:

SUBJECT TO BE RESOLVED BY THE INVENTION

As described in Patent Literature 1, an electrolyte solution containing a sulfonate compound in which a cyclic sulfone group is bound to a sulfonate group, and moreover LiFSI as an additive tends to improve the high temperature characteristic and lifetime characteristic (cycle characteristic) of lithium batteries. However, it has been desired that the high temperature storage characteristic and the internal resistance characteristic after storage as demanded for car batteries and large fixed batteries be further improved.

Therefore, the subject of the present invention is to provide a nonaqueous electrolyte solution which is capable of improving the high temperature storage characteristic and the internal resistance characteristic after storage in a more balanced manner as well as a nonaqueous electrolyte secondary battery comprising the nonaqueous electrolyte solution.

MEANS FOR RESOLVING THE SUBJECT

As a result of diligent investigations in view of such subject, the present inventors found that the high temperature storage characteristic and the internal resistance characteristic after storage can be improved in a more balanced manner, by adding a salt having an imide anion having a specific structure, to a nonaqueous electrolyte solution including a nonaqueous solvent, a solute and a sulfonate compound when the electrolyte solution is used for nonaqueous electrolyte secondary batteries, thereby completing the present invention.

The present invention is disclosed in the appended independent claims. Preferred embodiments are described in the subclaims.

Specifically, the present invention relates to a nonaqueous electrolyte solution comprising the following components:

(I) at least one selected from the salts having an imide anion represented by the following general formulae [1] and [2],
(II) a sulfonate compound represented by the following general formula [3],
(III) a nonaqueous organic solvent or an ionic liquid, and
(IV) a solute:

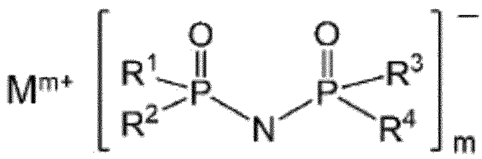

[1]

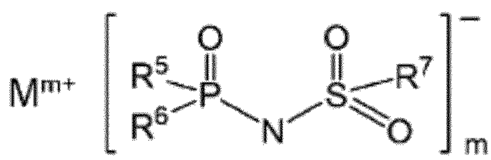

[2]

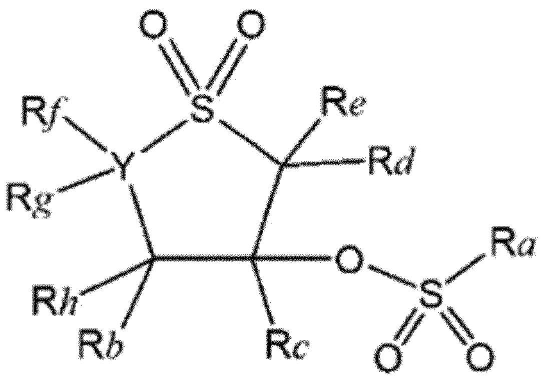

[3]

wherein,

in the general formula [1],
$R^1$ to $R^4$ are each independently a fluorine atom or an organic group selected from a C1-10 linear alkyl group, a C3-10 branched alkyl group, a C1-10 linear alkoxy group, a C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group and a C6-10 aryloxy group, wherein a fluorine atom, an oxygen atom or an unsaturated bond may exist in the organic group, with the proviso that at least one of $R^1$ to $R^4$ is a fluorine atom,
$M^{m+}$ is an alkali metal cation, an alkaline earth metal cation or an onium cation, and
m is an integer which is the same as the valence of the corresponding cation;
in the general formula [2],

$R^5$ to $R^7$ are each independently a fluorine atom or an organic group selected from a C1-10 linear alkyl group, a C3-10 branched alkyl group, a C1-10 linear alkoxy group, a C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group and a C6-10 aryloxy group, wherein a fluorine atom, an oxygen atom or an unsaturated bond may exist in the organic group, with the proviso that at least one of $R^5$ to $R^7$ is a fluorine atom,
$M^{m+}$ is an alkali metal cation, an alkaline earth metal cation or an onium cation, and
m is an integer which is the same as the valence of the corresponding cation; and
in the formula [3],
$R_a$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom,
$R_b$ to $R_h$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom, and
Y is an oxygen atom or a carbon atom, and, when Y is an oxygen atom, $R_f$ and $R_g$ do not exist.

An action mechanism for improving battery characteristics by the present invention is not clear; however, it is important to use at least one selected from salts having an imide anion represented by the general formulae [1] and [2] (Component(I)) described above, and a sulfonate compound represented by the general formula [3] (Component(II)) described above in combination.
It is thought that a part of the above (I) and (II) is decomposed on the interface between a positive electrode and an electrolyte solution and the interface between a negative electrode and an electrolyte solution so as to form a film. This film suppresses a direct contact between the nonaqueous organic solvent and solute, and active materials to prevent the decomposition of the nonaqueous organic solvent and solute during storage at high temperatures, and to suppress the deterioration of battery performance (a capacity reduction and a resistance increase). In addition, while the mechanism is unknown, it is important that an imide anion have a phosphoryl moiety (-P(=O)RR), and it is thought that because both a phosphoryl moiety derived from the above Component (I) and a sulfone moiety derived from the above Component (II) are incorporated into the above composite film, the resultant film is stronger and has higher lithium conductivity, i.e. a film with a low resistance (a film with a good output characteristic). Furthermore, it is thought that the above effect is obtained due to that a moiety having a high electron withdrawing property(e.g. a fluorine atom and a fluorine-containing alkoxy group) is included in an imide anion, thereby further increasing a charge bias, and forming a film having a lower resistance (a film with a better output characteristic). Furthermore, it is presumed that when a hexafluorophosphoric acid anion or a tetrafluoroboric acid anion is included, a composite film including a fluoride thereof is formed, thereby forming a film which is more stable at high temperatures. From the reasons described above, it is assumed that the high temperature storage characteristic and the effect of suppressing an increase in internal resistance at storage are obtained in a balanced manner, by using the nonaqueous electrolyte solution of the present invention.
When the salt having an imide anion has a P-F bond and an S-F bond, an excellent "internal resistance characteristic after storage" is obtained. It is preferred that the number of P-F bonds and S-F bonds in the above salt having an imide anion is higher, because "internal resistance characteristic after storage" can be further improved, and it is further preferred that all of $R^1$ to $R^7$ of the above general formulae [1] and [2] are a fluorine atom.
Further, in the above general formula [1], it is preferred that:

at least one of $R^1$ to $R^4$ be a fluorine atom, and
at least one of remaining $R^1$ to $R^4$ be a group selected from an alkyl group, an alkenyl group, an alkynyl group, an aryl group, an alkoxy group, an alkenyloxy group, an alkynyloxy group and an aryloxy group, which have 6 or less carbon atoms and may include a fluorine atom.

In addition, in the above general formula [1], it is preferred that:

at least one of $R^1$ to $R^4$ be a fluorine atom, and
at least one of remaining $R^1$ to $R^4$ be a group selected from a methyl group, a methoxy group, an ethyl group, an ethoxy group, an n-propyl group, an isopropyl group, an n-propoxy group, an isopropoxy group, a vinyl group, an allyl group, an allyloxy group, an ethynyl group, a 2-propynyl group, a 2-propynyloxy group, a phenyl group, a phenoxy group, a trifluoromethyl group, a trifluoromethoxy group, a 2,2-difluoroethyl group, a 2,2-difluoroethoxy group, a 2,2,2-trifluoroethyl group, a 2,2,2-trifluoroethoxy group, a 2,2,3,3-tetrafluoropropyl group, a 2,2,3,3-tetrafluoropropoxy group, a 1,1,1,3,3,3-hexafluoroisopropyl group and a 1,1,1,3,3,3-hexafluoroisopropoxy group.

Further, in the above general formula [2], it is preferred that:

at least one of $R^5$ to $R^7$ be a fluorine atom, and
at least one of remaining $R^5$ to $R^7$ be a group selected from an alkyl group, an alkenyl group, an alkynyl group, an aryl group, an alkoxy group, an alkenyloxy group, an alkynyloxy group and an aryloxy group, which have 6 or less carbon atoms and may include a fluorine atom.

In addition, in the above general formula [2], it is preferred that:

at least one of $R^5$ to $R^7$ be a fluorine atom, and
at least one of remaining $R^5$ to $R^7$ be a group selected from a methyl group, a methoxy group, an ethyl group, an ethoxy group, an n-propyl group, an isopropyl group, an n-propoxy group, an isopropoxy group, a vinyl group, an allyl group, an allyloxy group, an ethynyl group, a 2-propynyl group, a 2-propynyloxy group, a phenyl group, a phenoxy group, a trifluoromethyl group, a trifluoromethoxy group, a 2,2-difluoroethyl group, a 2,2-difluoroethoxy group, a 2,2,2-trifluoroethyl group, a 2,2,2-trifluoroethoxy group, a 2,2,3,3-tetrafluoropropyl group, a 2,2,3,3-tetrafluoropropoxy group, a 1,1,1,3,3,3-hexafluoroisopropyl group and a 1,1,1,3,3,3-hexafluoroisopropoxy group.

The counter cations of the above salts having an imide anion represented by the general formulae [1] and [2] are preferably selected from the group consisting of a lithium ion, a sodium ion, a potassium ion and a tetraalkylammonium ion.

It is preferred that $R_a$ of the above general formula [3] be an F atom, a Cl atom, a Br atom, an I atom, a methyl group, a methoxy group, an ethyl group, an ethoxy group, an n-propyl group, an n-propoxy group, an isopropyl group, an isopropoxy group, a 2-propenyl group, a 2-propenyloxy group, a 2-propynyl group, an n-butyl group, a tert-butyl group, a trifluoromethyl group, a trifluoroethyl group, a trifluoroethoxy group, a phenyl group, a phenoxy group, a naphthyl group, a perfluorophenyl group, a perfluorophenoxy group, a pyrrolyl group or a pyridinyl group, and the above $R_b$ to $R_h$ be each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

The above sulfonate compound represented by the general formula [3] is preferably a sulfonate compound represented by the following general formula [4] or [5]:

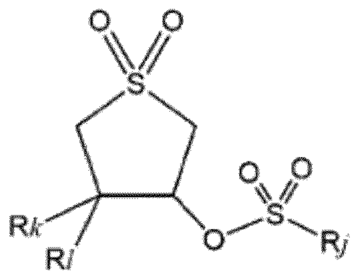

[4]

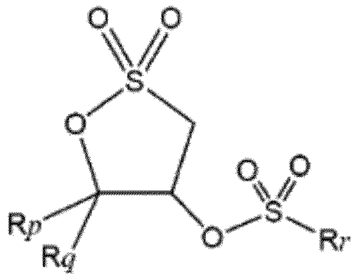

[5]

wherein, in the formula [4], $R_j$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom, and

$R_k$ and $R_l$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom; and

in the formula [5], $R_r$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom, and

$R_p$ and $R_q$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom.

Both $R_k$ and $R_l$ of the above formula [4] are preferably a hydrogen atom from the viewpoint that internal resistance tends to reduce. Similarly, both $R_p$ and $R_q$ of the above formula [5] are also preferably a hydrogen atom.

It is preferred that $R_j$ of the above general formula [4] be an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a methoxy group, a 2-propynyl group, a phenyl group, a naphthyl group, a trifluorophenyl group, a pyrrolyl group or a pyridinyl group, and the above $R_k$ and $R_l$ be each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

It is preferred that $R_r$ of the above general formula [5] be an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a methoxy group, a 2-propynyl group, a phenyl group, a naphthyl group, a trifluorophenyl group, a pyrrolyl group or a pyridinyl group, and the above $R_p$ and $R_q$ be each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

The sulfonate compound represented by the above general formula [3] is preferably at least one selected from compounds represented by the following formulae [6] to [23].

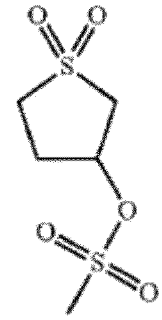
[6]

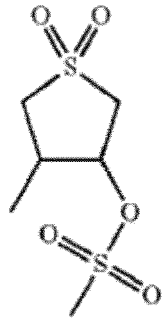
[7]

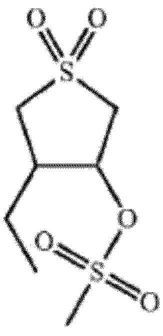
[8]

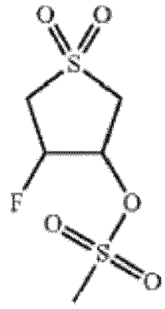
[9]

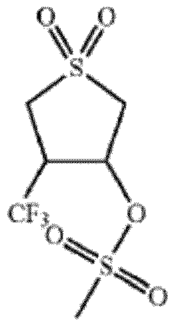
[10]

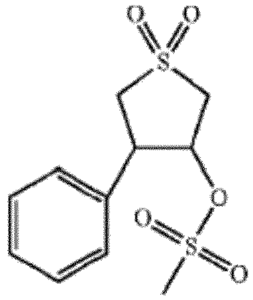
[11]

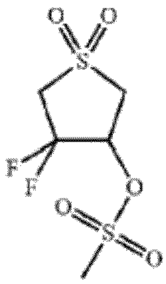
[12]

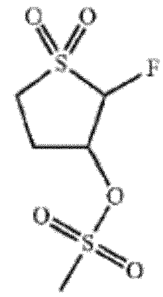
[13]

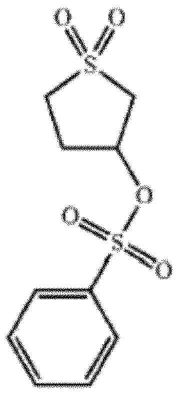
[14]

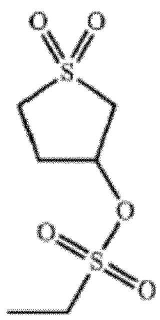
[15]

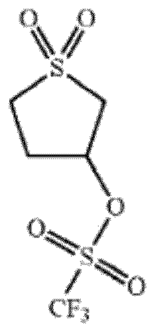
[16]

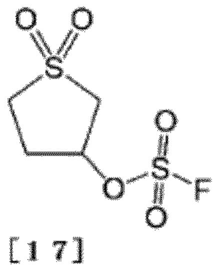
[17]

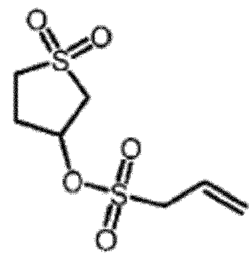
[18]

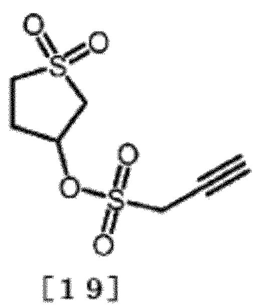
[19]

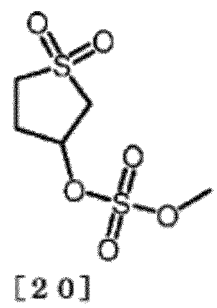
[20]

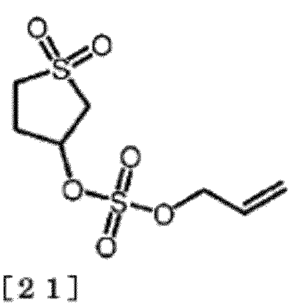
[21]

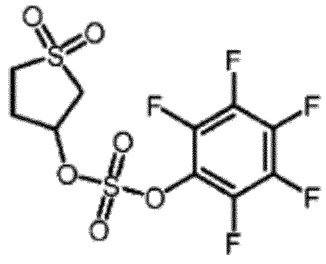

[22]

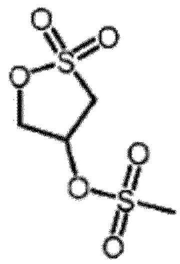

[23]

It is preferred that all of $R_b$ and $R_h$ of the above formula [3], $R_k$ and Rl of the above formula [4], and $R_p$ and $R_q$ of the above formula [5] be a hydrogen atom from the viewpoint that internal resistance tends to reduce. In a case where the compound of the above-described formula [6] is used, for example, internal resistance is excellent compared to a case where the compound of the above-described formula [11] is used. Therefore, the above-described formulae [6] and [13] to [23] wherein all of $R_b$ and $R_h$ of the above formula [3], $R_k$ and $R_l$ of the above formula [4], and $R_p$ and $R_q$ of the above formula [5] are a hydrogen atom are more preferred. Among them, more preferred are the above-described formulae [6], [13], [14], [16], [17], [19], [20] and [23], and particularly preferred are the formula [6], [13], [14], [17] and [23] from the viewpoint that both the high temperature storage characteristic and internal resistance characteristic after storage are improved.

The sulfonate compound of the component (II) can be manufactured by various methods. The compound of the above formula [6], for example, can be obtained by a manufacturing method described in paragraph [0107] to [0116] of Patent Literature 1. Other sulfonate compounds can be also obtained by changing corresponding materials in the same manufacturing method.

The amount of the component (I) to be included is preferably 0.005 to 12.0 mass% with respect to the total amount of the components (I) to (IV). When the amount is above 12.0 mass%, there is a risk that the viscosity of the resultant electrolyte solution increases and characteristics are reduced at low temperatures, and when the amount is less than 0.005 mass%, there is a risk that the formation of a film is insufficient and the effect of improving characteristics is difficult to obtain.

The amount of the component (II) to be included is preferably 0.01 to 10.0 mass%, more preferably 0.1 to 5.0 mass%, and particularly preferably 0.2 to 1.5 mass% with respect to the total amount of the components (I) to (IV).

The component (III) is preferably at least one selected from the group consisting of cyclic carbonates, chain carbonates, cyclic esters, chain esters, cyclic ethers, chain ethers, sulfone compounds, sulfoxide compounds and ionic liquids. It is further preferred to include a cyclic carbonate, and it is particularly preferred to contain one or more selected from ethylene carbonate, propylene carbonate, fluoroethylene carbonate, vinylene carbonate, vinylethylene carbonate.

The component (IV) is preferably at least one selected from the group consisting of $LiPF_6$, $LiBF_4$, $LiSbF_6$, $LiAsF_6$, $LiClO_4$, $LiCF_3SO_3$, $LiC_4F_9SO_3$, $LiAlO_2$, $LiAlCl_4$, $LiN(C_xF_{2x+1}SO_2)$ $(C_yF_{2y+1}SO_2)$ (wherein $2 \leq x \leq 20$ and $2 \leq y \leq 20$), LiCl, LiI, $LiPF_2$ $(C_2O_4)_2$, $LiPF_4(C_2O_4)$, $LiP(C_2O_4)_3$, $LiBF_2$ $(C_2O_4)$, $LiB(C_2O_4)_2$, $LiPO_2F_2$, $LiN(CF_3SO_2)_2$, $LiN(CF_3SO_2)(FSO_2)$, $LiSO_3F$, $NaPF_6$, $NaBF_4$, $NaSbF_6$, $NaAsF_6$, $NaClO_4$, $NaCF_3SO_3$, $NaC_4F_9SO_3$, $NaAlO_2$, $NaAlCl_4$, NaN $(C_xF_{2x+1}SO_2)(C_yF_{2y}+_1SO_2)$ (wherein $2 \leq x \leq 20$ and $2 \leq y \leq 20$), NaCl, NaI, $NaPF_2(C_2O_4)_2$, $NaPF_4(C_2O_4)$, $NaP(C_2O_4)_3$, $NaBF_2$ $(C_2O_4)$, $NaB(C_2O_4)_2$, $NaPO_2F_2$, $NaN(CF_3SO_2)_2$, $NaN(CF_3SO_2)(FSO_2)$ and $NaSO_3F$.

In addition, lithium batteries and lithium ion batteries preferably contain at least $LiPF_6$ as the component (IV). When $LiPF_6$ and another component (IV) are used in combination, it is preferred to use at least one selected from the group consisting of $LiBF_4$, $LiSbF_6$, $LiAsF_6$, $LiClO_4$, $LiCF_3SO_3$, $LiC_4F_9SO_3$, $LiAlO_2$, $LiAlCl_4$, LiCl, LiI, $LiPF_2$ $(C_2O_4)_2$, $LiPF_4(C_2O_4)$, $LiP(C_2O_4)_3$, $LiBF_2(C_2O_4)$, LiB $(C_2O_4)_2$, $LiPO_2F_2$ and $LiSO_3F$ as such another component (IV).

Further, sodium ion batteries preferably contain at least $NaPF_6$ as the component (IV). When $NaPF_6$ and another component (IV) are used in combination, it is preferred to use at least one selected from the group consisting of $NaBF_4$, $NaSbF_6$, $NaAsF_6$, $NaClO_4$, $NaCF_3SO_3$, $NaC_4F_9SO_3$, $NaAlO_2$, $NaAlCl_4$, NaCl, NaI, $NaPF_2$ $(C_2O_4)_2$, $NaPF_4(C_2O_4)$, NaP $(C_2O_4)_3$, $NaBF_2$ $(C_2O_4)$, NaB $(C_2O_4)_2$, $NaPO_2F_2$, and $NaSO_3F$ as such another component (IV) .

Furthermore, at least one additive selected from the group consisting of vinylene carbonate, vinylethylene carbonate, fluoroethylene carbonate, 1,6-diisocyanatohexane, ethynylethylene carbonate, trans-difluoroethylene carbonate, propane sultone, propene sultone, 1,3,2-dioxathiolane-2,2-dioxide, 4-propyl-1,3,2-dioxathiolane-2,2-dioxide, methanesulfonyl fluoride, methylene methanedisulfonate, 1,2-ethanedisulfonic anhydride, tris(trimethylsilyl)borate, succinonitrile, (ethoxy)pentafluorocyclotriphosphazene, methanesulfonyl fluoride, t-butylbenzene, t-amylbenzene, fluorobenzene and cyclohexylbenzene may be contained in the above nonaqueous electrolyte solution.

The present invention relates to a nonaqueous electrolyte secondary battery comprising at least a positive electrode, a negative electrode and the above nonaqueous electrolyte solution.

EFFECT OF INVENTION:

According to the present invention, it is possible to provide a nonaqueous electrolyte solution which is capable of improving a high temperature storage characteristic and a internal resistance characteristic after storage in a more balanced manner, as well as a nonaqueous electrolyte secondary battery comprising the nonaqueous electrolyte solution.

DESCRIPTION OF EMBODIMENT:

The present invention will now be described in detail. In this case, the description of constituent features below is an example of the embodiments of the present invention, and the present invention is not limited to these specific contents. The present invention can be carried out with various modifications within the scope of its gist.

1. Nonaqueous electrolyte solution

The nonaqueous electrolyte solution of the present invention comprises at least one selected from salts having an imide anion represented by the above general formulae [1] and [2] (Component (I)), a sulfonate compound represented by the above general formula [3] (Component (II)), a nonaqueous organic solvent or an ionic liquid (Component (III)), and a solute (Component (IV)).

(I) Salt having an imide anion represented by above general formula [1]:

It is important that at least one of $R^1$ to $R^4$ of the above general formula [1] is a fluorine atom. While the reason is not clear, the effect of suppressing the internal resistance increase of batteries using the electrolyte solution is not sufficient when at least one fluorine atom is not included.

In addition, examples of the alkyl group and alkoxyl group represented by $R^1$ to $R^4$ of the above general formula [1] include C1-10 alkyl groups and fluorine-containing alkyl groups such as a methyl group, an ethyl group, a propyl group, an isopropyl group, a butyl group, a secondary butyl group, a tertiary butyl group, a pentyl group, a 2,2-difluoroethyl group, a 2,2,2-trifluoroethyl group, a 2,2,3,3-tetrafluoropropyl group, and 1,1,1,3,3,3-hexafluoroisopropyl group, and alkoxy groups derived from these groups.

Examples of the alkenyl group and alkenyloxy group include C2-10 alkenyl groups and fluorine-containing alkenyl groups such as a vinyl group, an allyl group, a 1-propenyl group, an isopropenyl group, a 2-butenyl group, and a 1,3-butadienyl group, and alkenyloxy groups derived from these groups.

Examples of the alkynyl group and alkynyloxy group include C2-10 alkynyl groups and fluorine-containing alkynyl groups such as an ethynyl group, a 2-propynyl group, and a 1,1-dimethyl-2-propynyl group, and alkynyloxy groups derived from these groups.

Examples of the cycloalkyl group and cycloalkoxy group include C3-10 cycloalkyl groups and fluorine-containing cycloalkyl groups such as a cyclopentyl group and a cyclohexyl group, and cycloalkoxy groups derived from these groups.

Examples of the cycloalkenyl group and cycloalkenyloxy group include C3-10 cycloalkenyl groups and fluorine-containing cycloalkenyl groups such as a cyclopentenyl group and a cyclohexenyl group, and cycloalkenyloxy groups derived from these groups.

Examples of the aryl group and aryloxy group include C6-10 aryl groups and fluorine-containing aryl groups such as a phenyl group, a tolyl group and a xylyl group, and aryloxy groups derived from these groups.

More specific examples of negative ions of salts having an imide anion represented by the above general formula [1] include Compounds No. 1 to No. 9 below, etc. However, the salts having an imide anion used in the present invention are not restricted in any way by examples below.

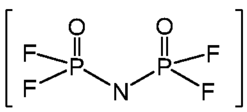
Compound No.1

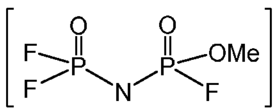
Compound No. 2

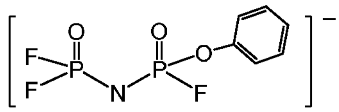
Compound No.3

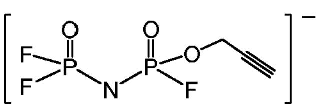
Compound No.4

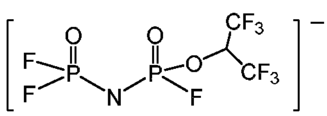
Compound No.5

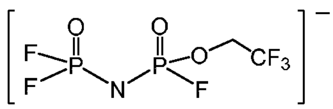
Compound No.6

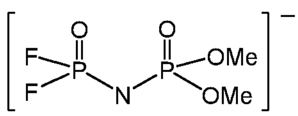

Compound No.7

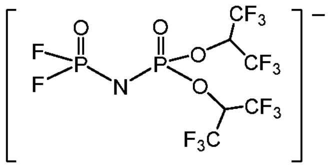

Compound No.8

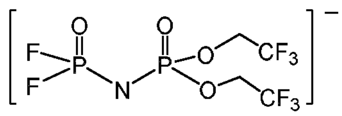

Compound No.9

In the above general formula [1], it is preferred that at least one of $R^1$ to $R^4$ be a fluorine atom and at least one of $R^1$ to $R^4$ be a group selected from an alkyl group, an alkenyl group, an alkynyl group, an aryl group, an alkoxy group, an alkenyloxy group, an alkynyloxy group and an aryloxy group which have 6 or less carbon atoms and may include a fluorine atom. When the above number of carbon atoms is above 6, internal resistance of a film formed on an electrode tends to be relatively high. It is preferred that the above number of carbon atoms be 6 or less because the above internal resistance tends to be lower, and it is particularly preferred that $R^1$ to $R^4$ be at least one group selected from a methyl group, an ethyl group, a propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, a 1,1,1,3,3,3-hexafluoroisopropyl group, and alkoxy groups, alkenyloxy groups, and alkynyloxy groups derived from these groups because a nonaqueous electrolyte secondary battery which is capable of providing a cycle characteristic and an internal resistance characteristic in a balanced manner is obtained. Among them, the above Compounds No. 1, No. 2, No. 3 and No. 5 are particularly preferred from the viewpoint that both the high temperature storage characteristic and internal resistance characteristic after storage are improved.

The salt having an imide anion represented by the above general formula [1] preferably has a high purity, and in particular the amount of Cl (chlorine) included in the salt having an imide anion as a material before being dissolved in an electrolyte solution is preferably 5000 ppm by mass or less, more preferably 1000 ppm by mass or less, and further preferably 100 ppm by mass or less. The use of a salt having an imide anion in which Cl (chlorine) remains at a high concentration is not preferred because battery members tend to corrode.

The salt having an imide anion represented by the above general formula [1] can be manufactured by various methods. The manufacturing method is not limited, and the salt can be obtained, for example, by the following method: allowing a corresponding phosphoric amide ($H_2NP(=O)R^1R^2$) and a corresponding phosphoryl halide ($P(=O)R^3R^4X$; X is a halogen atom) to react in the presence of an organic base or inorganic base.

As described in JP-A-2010-254554, a method for obtaining an imide anion by allowing a corresponding phosphoryl halide and ammonia to react in the presence of an organic base or inorganic base can be also used. Furthermore, a corresponding substituent (alkoxide, etc.) can be also introduced after obtaining an imide anion by the method.

(I) Salt having an imide anion represented by above general formula [2]:

It is important that at least one of $R^5$ to $R^7$ of the above general formula [2] be a fluorine atom. The reason is not clear; however, the effect of suppressing the internal resistance increase of batteries using the electrolyte solution is not sufficient when at least one fluorine atom is not included.

In addition, examples of the alkyl group and alkoxyl group represented by $R^5$ to $R^7$ of the above general formula [2] include C1-10 alkyl groups and fluorine-containing alkyl groups such as a methyl group, an ethyl group, a propyl group, an isopropyl group, a butyl group, a secondary butyl group, a tertiary butyl group, a pentyl group, a 2,2-difluoroethyl group, a 2,2,2-trifluoroethyl group, a 2,2,3,3-tetrafluoropropyl group, and 1,1,1,3,3,3-hexafluoroisopropyl group, and alkoxy groups derived from these groups.

Examples of the alkenyl group and alkenyloxy group include C2-10 alkenyl groups and fluorine-containing alkenyl groups such as a vinyl group, an allyl group, a 1-propenyl group, an isopropenyl group, a 2-butenyl group, and a 1,3-butadienyl group, and alkenyloxy groups derived from these groups.

Examples of the alkynyl group and alkynyloxy group include C2-10 alkynyl groups and fluorine-containing alkynyl groups such as an ethynyl group, a 2-propynyl group, and a 1,1-dimethyl-2-propynyl group, and alkynyloxy groups derived from these groups.

Examples of the cycloalkyl group and cycloalkoxy group include C3-10 cycloalkyl groups and fluorine-containing cycloalkyl groups such as a cyclopentyl group and a cyclohexyl group, and cycloalkoxy groups derived from these groups.

Examples of the cycloalkenyl group and cycloalkenyloxy group include C3-10 cycloalkenyl groups and fluorine-containing cycloalkenyl groups such as a cyclopentenyl group and a cyclohexenyl group, and cycloalkenyloxy groups derived from these groups.

Examples of the aryl group and aryloxy group include C6-10 aryl groups and fluorine-containing aryl groups such as a phenyl group, a tolyl group and a xylyl group, and aryloxy groups derived from these groups.

More specific examples of negative ions of the salts having an imide anion represented by the above general

formula [2] include Compounds No. 10 to No. 27 below, and the like. However, the salts having an imide anion used in the present invention are not restricted in any way by these examples.

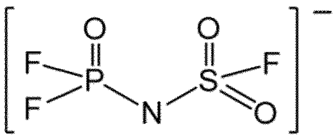

Compound No. 10

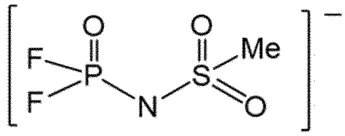

Compound No. 11

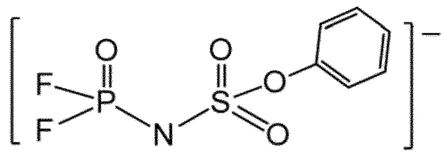

Compound No. 12

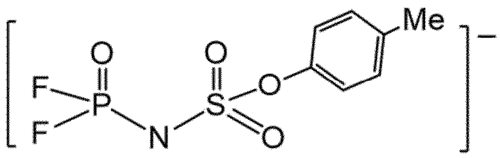

Compound No. 13

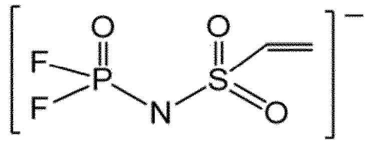

Compound No. 14

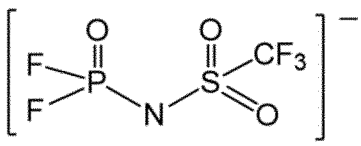

Compound No. 15

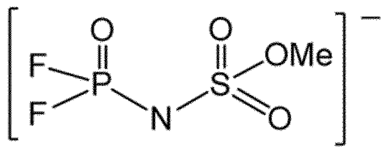

Compound No. 16

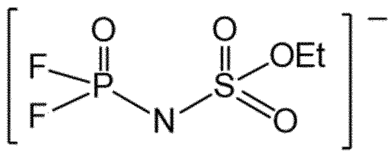

Compound No. 17

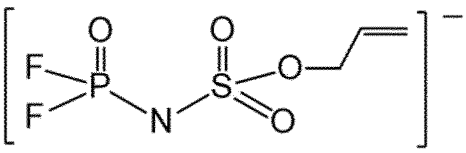

Compound No. 18

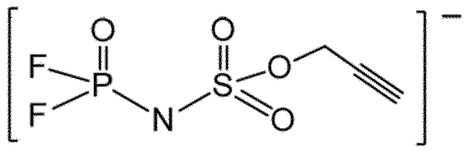

Compound No. 19

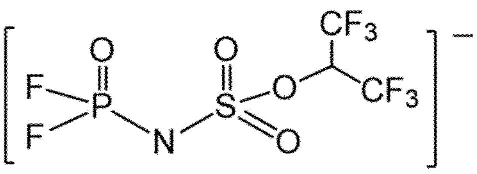

Compound No. 20

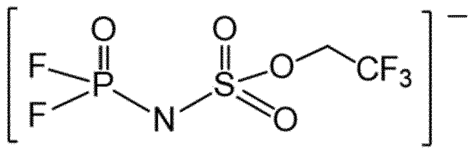

Compound No. 21

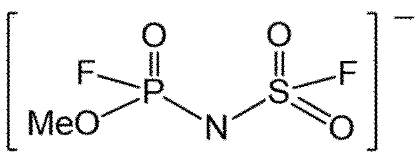

Compound No. 22

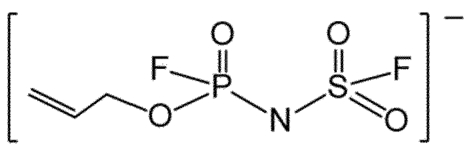

Compound No. 23

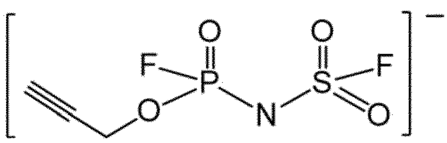

Compound No. 24

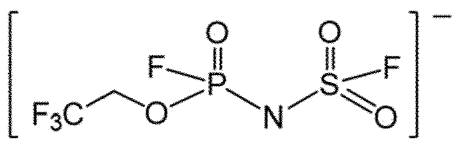

Compound No. 25

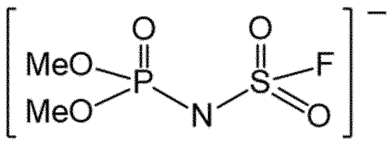

Compound No. 26

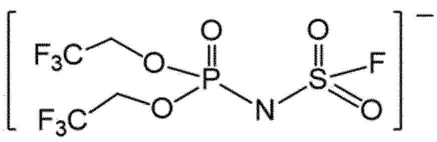

Compound No. 27

In the above general formula [2], it is preferred that at least one of $R^5$ to $R^7$ be a fluorine atom and at least one of $R^5$ to $R^7$ be a group selected from an alkyl group, an alkenyl group, an alkynyl group, an aryl group, an alkoxy group, an alkenyloxy group, an alkynyloxy group and an aryloxy group, which have 6 or less carbon atoms and may include a fluorine atom. When the above number of carbon atoms is above 6, the internal resistance of a film formed on an electrode tends to be relatively high. It is preferred that the above number of carbon atoms be 6 or less because the above internal resistance tends to be lower, and it is particularly preferred that $R^5$ to $R^7$ be at least one group selected from a methyl group, an ethyl group, a propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, a 1,1,1,3,3,3-hexafluoroisopropyl group, and alkoxy groups, alkenyloxy groups, and alkynyloxy groups derived from these groups, because a nonaqueous electrolyte secondary battery which is capable of providing a cycle characteristic and an internal resistance characteristic in a balanced manner is obtained. Among them, the above Compounds No. 10, No. 11, No. 14 and No. 15 are particularly preferred from the viewpoint that both the high temperature storage characteristic and internal resistance characteristic after storage are improved.

The salt having an imide anion represented by the above general formula [2] preferably has a high purity, and in particular the amount of Cl (chlorine) included in the salt having an imide anion as a material before being dissolved in an electrolyte solution is preferably 5000 ppm by mass or less, more preferably 1000 ppm by mass or less, and further preferably 100 ppm by mass or less. The use of the salt having an imide anion in which Cl (chlorine) remains at a high concentration is not preferred because battery members tend to corrode.

The salt having an imide anion represented by the above general formula [2] can be manufactured by various methods. The manufacturing method is not limited, and the salt can be obtained, for example, by the following methods:

allowing a corresponding phosphoric amide ($H_2NP(=O)R^5R^6$) and a corresponding sulfonyl halide ($R^7SO_2X$; X is a halogen atom) to react in the presence of an organic base or inorganic base, and
allowing a corresponding sulfonyl amide ($H_2NSO_2R^7$) and a corresponding phosphoryl halide ($R^5R^6P(=O)X$; X is a halogen atom) to react in the presence of an organic base or inorganic base.

As described in, for example, CN101654229A and CN102617414A, a salt having an imide anion, in which a halogen atom other than a fluorine atom exists in the fluorine moiety of a corresponding salt having an imide anion, is obtained by the above method, and the salt having an imide anion represented by the above general formula [2] can be then obtained by the fluorination of the resultant salt.

The amount of the salt having an imide anion (I) used in the present invention is, as a suitable lower limit, 0.005 mass% or more with respect to the total amount of the above components (I) to (IV), preferably 0.05 mass% or more, further preferably 0.1 mass% or more, and, as a suitable upper limit, 12.0 mass% or less, preferably 6.0 mass% or less, and further preferably 3.0 mass% or less.
When the above amount added is less than 0.005 mass%, it is difficult to sufficiently obtain the effect of improving battery characteristics and accordingly such amount is not preferred. On the other hand, when the above amount to be added is larger than 12.0 mass%, there is a risk that the viscosity of the electrolyte solution increases and characteristics are reduced at low temperatures. So long as the amount of the salt having an imide anion is not larger than 12.0 mass%, the salt can be used individually or two or more of the salts can be used in any combination at any ratio depending on usage.

(II) Sulfonate compound represented by above general formula [3] :

The sulfonate compound represented by the above general formula [3] is preferably a sulfonate compound represented by the general formula [4] or general formula [5] in which the number of carbons bound to the carbon atom at the $\alpha$ position of the sulfone group is smaller from the viewpoint that internal resistance tends to reduce. Furthermore, it is more preferred that all of $R_k$ and $R_l$ of the general formula [4] and $R_p$ and $R_q$ of the general formula [5] be a hydrogen atom.

From the same viewpoint above, $R_j$ of the general formula [4] and $R_r$ of the general formula [5] are preferably a group selected from an alkyl group, an alkenyl group, an alkynyl group, an aryl group, an alkoxy group, an alkenyloxy group, an alkynyloxy group and an aryloxy group, which have 6 or less carbon atoms and may include a fluorine atom. When the above number of carbons is above 6, internal resistance of a film formed on an electrode tends to be relatively

high. It is preferred that the above number of carbon atoms be 6 or less because the above internal resistance tends to be lower, and it is particularly preferred that $R_j$ and $R_r$ be at least one group selected from a methyl group, an ethyl group, a propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, a 1,1,1,3,3,3-hexafluoroisopropyl group, and alkoxy groups, alkenyloxy groups, and alkynyloxy groups derived from these groups because the resultant nonaqueous electrolyte secondary battery which is capable of providing a storage characteristic and an internal resistance characteristic in a balanced manner is obtained.

The sulfonate compound represented by the above general formula [3] preferably has a high purity, and in particular the amount of Cl (chlorine) included in the sulfonate compound as a material before being dissolved in an electrolyte solution is preferably 5000 ppm by mass or less, more preferably 1000 ppm by mass or less, and further preferably 100 ppm by mass or less. The use of a sulfonate compound in which Cl (chlorine) remains at a high concentration is not preferred because battery members tend to corrode.

The amount of the sulfonate compound (II) to be used in the present invention is, as a suitable lower limit, 0.01 mass% or more with respect to the total amount of the above components(I) to (IV), preferably 0.1 mass% or more, further preferably 0.2 mass% or more, and, as a suitable upper limit, 10.0 mass% or less, preferably 5.0 mass% or less, and further preferably 1.5 mass% or less.

When the above amount to be added is less than 0.01 mass%, it is difficult to sufficiently obtain the effect of improving battery characteristics and accordingly such amount is not preferred. On the other hand, when the above amount to be added is above 10.0 mass%, not only any further effect is not obtained and the above component (II) is wasted, but also resistance increases due to excess formation of a film to easily cause the deterioration of battery performance and accordingly such amount is not preferred. So long as the amount of the sulfonate compound is not larger than 10.0 mass%, the compound can be used individually or two or more of the compounds can be used in any combination at any ratio depending on usage.

(III) Nonaqueous organic solvent:

The type of the nonaqueous organic solvent (III) is not particularly limited, and any nonaqueous organic solvent can be used. Specific examples thereof include cyclic carbonates such as propylene carbonate (hereinafter, may be referred to as "PC"), ethylene carbonate (hereinafter, may be referred to as "EC") and butylene carbonate; chain carbonates such as diethyl carbonate (hereinafter, may be referred to as "DEC"), dimethyl carbonate (hereinafter, may be referred to as "DMC") and ethyl methyl carbonate (hereinafter, may be referred to as "EMC"); cyclic esters such as γ-butyrolactone and γ-valerolactone; chain esters such as methyl acetate, methyl propionate and ethyl propionate (hereinafter, may be referred to as "EP"); cyclic ethers such as tetrahydrofuran, 2-methyltetrahydrofuran and dioxane; chain ethers such as dimethoxyethane and diethylether; sulfone compounds and sulfoxide compounds such as dimethylsulfoxide and sulfolane, and the like. In addition, e.g., an ionic liquid, which is in a category different from that of the nonaqueous organic solvent, can be also included. In addition, the nonaqueous organic solvent to be used in the present invention can be used singly or two or more of the nonaqueous organic solvents can be used in any combination at any ratio depending on usage. Among them, particularly preferred are propylene carbonate, ethylene carbonate, diethyl carbonate, dimethyl carbonate, ethyl methyl carbonate, methyl propionate and ethyl propionate from the viewpoint of the electrochemical stability to oxidation-reduction and chemical stability relating to heat and reaction with the above solute.

For example, a nonaqueous organic solvent containing one or more cyclic carbonates having a high permittivity and one or more chain carbonates or chain esters having a low liquid viscosity is preferred because the ion conductivity of an electrolyte solution increases. Specifically, those including the following combinations are more preferred:

(1) a combination of EC and EMC,
(2) a combination of EC and DEC,
(3) a combination of EC, DMC and EMC,
(4) a combination of EC, DEC and EMC,
(5) a combination of EC, EMC and EP,
(6) a combination of PC and DEC,
(7) a combination of PC and EMC,
(8) a combination of PC and EP,
(9) a combination of PC, DMC and EMC,
(10) a combination of PC, DEC and EMC,
(11) a combination of PC, DEC and EP,
(12) a combination of PC, EC and EMC,
(13) a combination of PC, EC, DMC and EMC,

(14) a combination of PC, EC, DEC and EMC, and
(15) a combination of PC, EC, EMC and EP.

(IV) Solute:

Specific examples of the solute to be used in the nonaqueous electrolyte solution of the present invention include, in the case of lithium batteries and lithium ion batteries, electrolyte salts exemplified by $LiPF_6$, $LiBF_4$, $LiSbF_6$, $LiAsF_6$, $LiClO_4$, $LiCF_3SO_3$, $LiC_4F_9SO_3$, $LiAlO_2$, $LiAlCl_4$, LiN $(C_xF_{2x+1}SO_2)(C_yF_{2y+1}SO_2)$ (wherein $2 \leq x \leq 20$ and $2 \leq y \leq 20$), LiCl, LiI, $LiPF_2$ $(C_2O_4)_2$, $LiPF_4$ $(C_2O_4)$, LiP $(C_2O_4)$ $_3$, $LiBF_2$ $(C_2O_4)$, LiB $(C_2O_4)_2$, $LiPO_2F_2$, LiN $(CF_3SO_2)_2$, LiN $(C_2F_5SO_2)_2$, LiN $(CF_3SO_2)(FSO_2)$, $LiSO_3F$, LiC $(CF_3SO_2)_3$, $LiPF_3(C_3F_7)_3$, $LiB(CF_3)_4$, $LiBF_3(C_2F_5)$ and the like, and include, in the case of sodium ion batteries, electrolyte salts exemplified by $NaPF_6$, $NaBF_4$, $NaSbF_6$, $NaAsF_6$, $NaClO_4$, $NaCF_3SO_3$, $NaC_4F_9SO_3$, $NaAlO_2$, $NaAlCl_4$, NaN $(C_xF_{2x+1}SO_2)(C_yF_{2y+1}SO_2)$ (wherein $2 \leq x \leq 20$ and $2 \leq y \leq 20$), NaCl, NaI, $NaPF_2(C_2O_4)_2$, $NaPF_4(C_2O_4)$, NaP $(C_2O_4)_3$, $NaBF_2(C_2O_4)$, NaB $(C_2O_4)_2$, $NaPO_2F_2$, $NaN(CF_3SO_2)_2$, NaN $(C_2F_5SO_2)_2$, NaN $(CF_3SO_2)(FSO_2)$, $NaSO_3F$, $NaC(CF_3SO_2)_3$, $NaPF_3$ $(C_3F_7)_3$, NaB $(CF_3)_4$, $NaBF_3(C_2F_5)$ and the like. These solutes can be used individually or two or more of these solutes can be used in any combination at any ratio depending on usage. Among them, it is preferred to contain at least $LiPF_6$ as the above component (IV) in the case of lithium batteries and lithium ion batteries in terms of the energy density, output characteristics, life, etc. of batteries. In addition, when $LiPF_6$ is used in combination with another component (IV), it is preferred to use at least one selected from the group consisting of $LiBF_4$, $LiSbPF_6$, $LiAsF_6$, $LiClO_4$, $LiCF_3SO_3$, $LiC_4F_9SO_3$, $LiAlO_2$, $LiAlCl_4$, LiCl, LiI, $LiPF_2$ $(C_2O_4)_2$, $LiPF_4(C_2O_4)$, $LiP(C_2O_4)_3$, $LiBF_2(C_2O_4)$, $LiB(C_2O_4)_2$, $LiPO_2F_2$, and $LiSO_3F$ as such another component (IV).

In addition, it is preferred to contain at least $NaPF_6$ as the above component (IV) in the case of sodium ion batteries. When $NaPF_6$ is used in combination with another component (IV), it is preferred to use at least one selected from the group consisting of $NaBF_4$, $NaSbF_6$, $NaAsF_6$, $NaClO_4$, $NaCF_3SO_3$, $NaC_4F_9SO_3$, $NaAlO_2$, $NaAlCl_4$, NaCl, NaI, $NaPF_2(C_2O_4)_2$, $NaPF_4$ $(C_2O_4)$, NaP $(C_2O_4)$ $_3$, $NaBF_2$ $(C_2O_4)$, NaB $(C_2O_4)_2$, $NaPO_2F_2$, and $NaSO_3F$ as such another component (IV).

The concentration of the solute (IV) is not particularly restricted, and the suitable lower limit is 0.5 mol/L or more, preferably 0.7 mol/L or more, and further preferably 0.9 mol/L or more, and the suitable upper limit is 2.5 mol/L or less, preferably 2.0 mol/L or less, and further preferably 1.5 mol/L or less. When the concentration is lower than 0.5 mol/L, the cycle characteristics and output characteristic of the resultant nonaqueous electrolyte secondary battery tend to reduce due to reduction in ion conductivity. On the other hand, when the concentration exceeds 2.5 mol/L, ion conductivity still tends to reduce due to increase in viscosity of the resultant nonaqueous electrolyte solution, and there is a risk that the cycle characteristics and output characteristics of a nonaqueous electrolyte secondary battery are reduced.

When a large amount of the solute described above is dissolved in a nonaqueous solvent at one time, the temperature of the nonaqueous electrolyte solution can increase due to the heat of dissolution of the solute. When the temperature of the liquid significantly increases, there is a risk that the decomposition of a lithium salt containing a fluorine atom is promoted to form hydrogen fluoride. Hydrogen fluoride is not preferred because it deteriorates battery performance. Therefore, while the temperature of the liquid when the solute is dissolved in the nonaqueous solvent is not particularly limited, it is preferably -20 to 80°C and more preferably 0 to 60°C.

Other additives:

The basic constitution of the nonaqueous electrolyte solution of the present invention is described above. In this case, any additives generally used can be also added to the nonaqueous electrolyte solution of the present invention at any ratio, without departing from the gist of the present invention. Specific examples thereof include cyclohexylbenzene, biphenyl, t-butylbenzene, t-amylbenzene, fluorobenzene, vinylene carbonate (hereinafter may be referred to as "VC"), vinylethylene carbonate, difluoroanisole, fluoroethylene carbonate (hereinafter may be referred to as "FEC"), 1,6-diisocyanatohexane, ethynylethylene carbonate, trans-difluoroethylene carbonate, propane sultone, propene sultone, dimethylvinylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, (ethoxy)pentafluorocyclotriphosphazene, methanesulfonyl fluoride and the like. Alkali metal salts other than the above solutes (lithium salt, sodium salt) and salts having an imide anion represented by the above general formulae [1] and [2] (lithium salt, sodium salt) may be also used as additives. Specific examples thereof include carboxylic acid salts such as lithium acrylate, sodium acrylate, lithium methacrylate and sodium methacrylate; sulfuric acid ester salts such as lithium methyl sulfate, sodium methyl sulfate, lithium ethyl sulfate and sodium methyl sulfate, and the like.

In addition, the nonaqueous electrolyte solution can be made into a quasi-solid by a gelling agent and a crosslinking polymer as in the case of a nonaqueous electrolyte solution used for a nonaqueous electrolyte secondary battery called a lithium polymer battery.

In the nonaqueous electrolyte solution of the present invention, the total of alkali metal salts may be 4 types or more by using plural types of the above solutes (lithium salt, sodium salt) and salts having an imide anion represented by the above general formulae [1] and [2] (lithium salt, sodium salt) in combination depending on demand characteristics.

For example, as the case where 4 types of lithium salts are contained, it is thought:

to use $LiPF_6$ as a first solute, and one of $LiBF_4$, $LiSbF_6$, $LiAsF_6$, $LiClO_4$, $LiCF_3SO_3$, $LiC_4F_9SO_3$, $LiAlO_2$, $LiAlCl_4$, LiCl, LiI, $LiPF_2(C_2O_4)_2$, $LiPF_4(C_2O_4)$, LiP $(C_2O_4)_3$, $LiBF_2(C_2O_4)$, $LiB(C_2O_4)_2$, $LiPO_2F_2$, and $LiSO_3F$ and the like as a second solute, and further two of lithium salts of e.g., the above Compounds Nos. 1 to 27 as the salt having an imide anion represented by the general formulae [1] and [2]; or

to use $LiPF_6$ as a first solute, and two of the above second solutes, and further one of the above lithium salts having an imide anion.

Specifically, it is preferred to contain 4 types of lithium salts as follows:

(1) a combination of $LiPF_6$, the lithium salt of Compound No. 1, the lithium salt of Compound No. 2 and $LiPF_2(C_2O_4)_2$,
(2) a combination of $LiPF_6$, the lithium salt of Compound No. 1, the lithium salt of Compound No. 5 and $LiPO_2F_2$,
(3) a combination of $LiPF_6$, the lithium salt of Compound No. 1, the lithium salt of Compound No. 10, and $LiPO_2F_2$, and
(4) a combination of $LiPF_6$, the lithium salt of Compound No. 10, $LiPF_2(C_2O_4)_2$ and $LiPO_2F_2$.

By the combinations above, the effect of suppressing an increase in an internal resistance at a low temperature is larger.

In addition, the above additives other than those compounds may be further added as required.

Furthermore, the total of the above alkali metal salts may be 5 types or more. For example, when 5 types of lithium salts are contained, it is thought:

to use $LiPF_6$ as a first solute, and one of the above second solutes, and further three of lithium salts of e.g., the above Compound Nos. 1 to 27;

to use $LiPF_6$ as a first solute, and two of the above second solutes, and further two of lithium salts of e.g., the above Compound Nos. 1 to 27; and

to use $LiPF_6$ as a first solute, and three of the above second solutes, and further one of lithium salts of e.g. the above Compound Nos. 1 to 27.

Specifically, it is preferred to contain five types of lithium salts as follows:

(1) a combination of $LiPF_6$, the lithium salt of Compound No. 1, the lithium salt of Compound No. 4, $LiPF_4(C_2O_4)$ and $LiPF_2(C_2O_4)_2$;
(2) a combination of $LiPF_6$, the lithium salt of Compound No. 10, $LiBF_2(C_2O_4)$, $LiPO_2F_2$ and LiSOsF;
(3) a combination of $LiPF_6$, the lithium salt of Compound No. 1, the lithium salt of Compound No. 2, the lithium salt of Compound No. 15 and $LiPO_2F_2$;
(4) a combination of $LiPF_6$, the lithium salt of Compound No. 14, $LiPF_4(C_2O_4)$, $LiPF_2(C_2O_4)_2$ and $LiPO_2F_2$; and
(5) a combination of $LiPF_6$, the lithium salt of Compound No. 15, $LiBF_2(C_2O_4)$, $LiPO_2F_2$, and $LiSO_3F$.

By the combinations above, the effect of suppressing an increase in an internal resistance at a low temperature is larger. In addition, lithium salts other than those compounds above (the above additives) may be further added, if necessary.

2. Nonaqueous electrolyte secondary battery:

The structure of the nonaqueous electrolyte secondary battery of the present invention will now be described. The nonaqueous electrolyte secondary battery of the present invention is characterized by using the above nonaqueous electrolyte solution of the present invention. As the other constituent members, those members which had been used for general nonaqueous electrolyte secondary batteries are used. That is, the battery may comprise positive and negative electrodes which are capable of absorbing and releasing lithium, a current collector, a separator, a container, etc.

Negative electrode materials are not particularly limited, and, in the case of lithium batteries and lithium ion batteries, lithium metal, an alloy of lithium metal and another metal, or intermetallic compounds and various carbon materials (artificial graphite, natural graphite, etc.), metal oxides, metal nitrides, tin (simple substance), tin compounds, silicon (simple substance), silicon compounds, activated carbons, conductive polymers and the like are used.

Examples of carbon materials are easily graphitizable carbon, hardly-graphitizable carbon (hard carbon) having

a plane spacing of the (002) plane of 0.37 nm or more, and graphite having a plane spacing of the (002) plane of 0.34 nm or less, and the like. More specific examples thereof are pyrolytic carbons, cokes, glassy carbon fibers, fired products of high molecular organic compounds, activated carbons or carbon blacks and the like. Among them, for example, pitch coke, needle coke or petroleum coke are included as coke. The fired products of high molecular organic compounds indicate those obtained by firing phenol resin, furan resin and the like at a suitable temperature for carbonization. The carbon materials are preferred because changes in crystal structure associated with the absorption and release of lithium are very few, thereby obtaining high energy density and also obtaining an excellent cycle characteristic. In this case, the carbon materials may be in any form of fiber, ball, grain or flake. In addition, amorphous carbon and graphite materials whose surface is coated with amorphous carbon are more preferred because the reactivity between the surface of the materials and an electrolyte solution is low.

Positive electrode materials are not particularly limited, and in the case of lithium batteries and lithium ion batteries, for example, lithium-containing transition metal composite oxides such as $LiCoO_2$, $LiNiO_2$, $LiMnO_2$ and $LiMn_2O_4$, those lithium-containing transition metal composite oxides wherein a plurality of transition metals such as Co, Mn and Ni are mixed, those lithium-containing transition metal composite oxides wherein a part of the transition metals is replaced with a metal other than the transition metals, phosphoric acid compounds of transition metals (referred to as olivine) such as $LiFePO_4$, $LiCoPO_4$ and $LiMnPO_4$, oxides such as $TiO_2$, $V_2O_5$ and MoOs, sulfides such as $TiS_2$ and FeS, or conductive polymers such as polyacetylene, polyparaphenylene, polyaniline and polypyrrole, activated carbons, radical generating polymers, carbon materials and the like are used.

To the positive and negative electrode materials, acetylene black, Ketjen Black, carbon fiber, graphite as a conductive material, and polytetrafluoroethylene, polyvinylidene difluoride, SBR resin, polyimide and the like as a binder are added, and the resultant mixture can be formed into a sheet to obtain an electrode sheet.

As a separator to prevent a contact between the positive electrode and negative electrode, a nonwoven fabric or a porous sheet made from e.g., polypropylene, polyethylene, paper or glass fibers are used.

Nonaqueous electrolyte secondary batteries in the shape of coin, cylinder, prismatic cell, aluminum laminated sheet and the like are assembled from the elements described above.

In addition, the nonaqueous electrolyte secondary batteries may be nonaqueous electrolyte secondary batteries comprising (a) the above nonaqueous electrolyte solution, as well as (b) a positive electrode, (c) a negative electrode, and (d) a separator which will be described below.

[(b) Positive electrode]

The positive electrode (b) preferably includes at least one oxide and/or polyanion compound as a positive electrode active material.

[Positive electrode active material]

In the case of lithium ion secondary batteries wherein the cation in the nonaqueous electrolyte solution is lithium as a main cation, the positive electrode active material forming the positive electrode (b) is not particularly limited and various kinds of materials can be used as the positive electrode active material, so long as they can be charged and discharged. The examples thereof include those containing at least one of: lithium transition metal composite oxides containing at least one or more metals of nickel, manganese and cobalt and having a layered structure (A), lithium manganese composite oxides having a spinel structure (B), lithium-containing olivine phosphates (C), and lithium-excess layered transition metal oxides having a layered rock salt structure (D).

((A) Lithium transition metal composite oxide)

Positive electrode active material (A):

Examples of (A) the lithium transition metal composite oxides containing at least one or more metals of nickel, manganese and cobalt and having a layered structure include lithium cobalt composite oxides, lithium nickel composite oxides, lithium nickel cobalt composite oxides, lithium nickel cobalt aluminum composite oxides, lithium cobalt manganese composite oxides, lithium nickel manganese composite oxides, lithium nickel manganese cobalt composite oxides and the like. In addition, those in which a part of transition metal atoms mainly constituting these lithium transition metal composite oxides is replaced with other elements such as Al, Ti, V, Cr, Fe, Cu, Zn, Mg, Ga, Zr, Si, B, Ba, Y and Sn may be used.

As specific examples of the lithium cobalt composite oxides and lithium nickel composite oxides, $LiCoO_2$, $LiNiO_2$ and lithium cobaltate to which different elements such as Mg, Zr, Al and Ti are added ($LiCO_{0.98}Mg_{0.01}Zr_{0.01}O_2$, $LiCo_{0.98}Mg_{0.01}Al_{0.01}O_2$, $LiCO_{0.975}Mg_{0.01}Zr_{0{\cdot}005}Al_{0.01}O_2$, etc.), lithium cobaltate having rare earth compounds fixed onto

the surface thereof described in WO2014/034043 and the like may be used. As described in e.g., JP-A-2002-151077, those in which a part of the surface of particles of $LiCoO_2$ particle powder is covered with an aluminum oxide may be also used.

Lithium nickel cobalt composite oxides and lithium nickel cobalt aluminum composite oxides are represented by the general formula (1-1):

$$Li_aNi_{1-b-c}CO_bM^1{}_cO_2 \qquad (1\text{-}1).$$

In the formula (1-1), the conditions that $M^1$ be at least one element selected from the group consisting of Al, Fe, Mg, Zr, Ti and B, a be $0.9 \leq a \leq 1.2$, and b and c be $0.01 \leq b \leq 0.3$ and $0 \leq c \leq 0.1$ are satisfied.

These composite oxides can be prepared in accordance with e.g., a manufacturing method described in, for example, JP-A-2009-137834. Specific examples thereof include $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.90}Co_{0.07}Al_{0\cdot03}O_2$, $LiNi_{0\cdot6}Co_{0.3}Al_{0\cdot1}O_2$ and the like.

Specific examples of lithium cobalt manganese composite oxides and lithium nickel manganese composite oxides include $LiNi_{0.5}Mn_{0.5}O_2$, $LiCo_{0.5}Mn_{0.5}O_2$ and the like.

Examples of lithium nickel manganese cobalt composite oxides include lithium-containing composite oxides represented by the general formula (1-2):

$$Li_dNi_eMn_fCo_gM^2{}_hO_2 \qquad (1\text{-}2).$$

In the formula (1-2), the conditions that $M^2$ be at least one element selected from the group consisting of Al, Fe, Mg, Zr, Ti, B and Sn, d be $0.9 \leq d \leq 1.2$, and e, f, g and h be $e + f + g + h = 1$, $0 \leq e \leq 0.9$, $0 \leq f \leq 0.5$, $0 \leq g \leq 0.5$, and $h \geq 0$ are satisfied.

Preferred lithium nickel manganese cobalt composite oxides are those which contain manganese within the range shown in the general formula (1-2) to increase structural stability and to improve stability of lithium secondary batteries at high temperatures, and particularly more preferred are those which further contain cobalt within the range shown in the general formula (1-2) to increase a high rate characteristic of lithium ion secondary batteries.

Specific examples thereof include $Li[Ni_{1/3}Mn_{1/3}Co_{1/3}]O_2$, $Li[Ni_{0.45}Mn_{0.35}Co_{0.2}]O_2$, $Li[Ni_{0.5}Mn_{0.3}Co_{0.2}]_2$, $Li[Ni_{0.6}Mn_{0.2}Co_{0\cdot2}]O_2$, $Li[Ni_{0.8}Mn_{0.1}Co_{0.1}]O_2$, $Li[Ni_{0.49}Mn_{0.3}Co_{0.2}Zr_{0.01}]O_2$, $Li[Ni_{0.49}Mn_{0.3}Co_{0.2}Mg_{0.01}]O_2$ having charge and discharge areas in 4.3 V or more and the like.

((B) Lithium manganese composite oxide having spinel structure)

Positive electrode active material (B):

Examples of (B) the lithium manganese composite oxides having a spinel structure include spinel type lithium manganese composite oxides represented by the general formula (1-3):

$$Li_j(Mn_{2-k}M^3{}_k)O_4 \qquad (1\text{-}3).$$

In the formula (1-3), $M^3$ is at least one metal element selected from the group consisting of Ni, Co, Fe, Mg, Cr, Cu, Al and Ti, and j is $1.05 \leq j \leq 1.15$, and k is $0 \leq k \leq 0.20$.

Specific examples thereof include $LiMn_2O_4$, $LiMn_{1.95}Al_{0.05}O_4$, $LiMn_{1.9}Al_{0.1}O_4$, $LiMn_{1.9}Ni_{0.1}O_4$, $LiMn_{1.5}Ni_{0.5}O_4$ and the like.

((C) Lithium-containing olivine phosphate)

Positive electrode active material(C):

Examples of (C) the lithium-containing olivine phosphates include those represented by the general formula (1-4) :

$$LiFe_{1-n}M^4{}_nPO_4 \qquad (1\text{-}4) .$$

In the formula (1-4), $M^4$ is at least one selected from Co, Ni, Mn, Cu, Zn, Nb, Mg, Al, Ti, W, Zr and Cd, and n is $0 \leq n \leq 1$.

Specific examples thereof include $LiFePO_4$, $LiCoPO_4$, $LiNiPO_4$, $LiMnPO_4$ and the like, and among these, preferred are $LiFePO_4$ and/or $LiMnPO_4$.

((D) Lithium-excess layered transition metal oxide) Positive electrode active material(D):

Examples of (D) the lithium-rich layered transition metal oxides having a layered rock salt structure include those represented by the general formula (1-5):

$$xLiM^5O_2•(1-x)Li_2M^6O_3 \qquad (1-5).$$

In the formula (1-5), x is a number satisfying $0 < x < 1$, $M^5$ is at least one metal element having an average oxidation number of $3^+$, and $M^6$ is at least one metal element having an average oxidation number of $4^+$. In the formula (1-5), while $M^5$ is preferably one metal element selected from trivalent Mn, Ni, Co, Fe, V and Cr, an average trivalent oxidation number may be used by using equal amounts of divalent and tetravalent metals.
In the formula (1-5), $M^6$ is preferably one or more metal elements selected from Mn, Zr and Ti. Specific examples thereof include $0.5[LiNi_{0.5}Mn_{0.5}O_2]•0.5[Li_2MnO_3]$, $0.5[LiNi_{1/3}Co_{1/3}Mn_{1/3}O_2]•0.5[Li_2MnO_3]$, $0.5[LiNi_{0.375}Co_{0.25}Mn_{0.375}O_2]•0.5[Li_2MnO_3]$, $0.5[LiNi_{0.375}Co_{0.125}Fe_{0.125}Mn_{0.375}O_2]•0.5[Li_2MnO_3]$, $0.45 [LiNi_{0.375}Co_{0.25}Mn_{0·375}O_2]•0.10[Li_2TiO_3]•0.45[Li_2MnO_3]$ and the like.
It is known that the positive electrode active material (D) represented by the general formula (1-5) shows a high capacity at a high voltage charging of 4.4 V or more (in terms of Li) (e.g., US Patent No. 7,135,252).
These positive electrode active materials can be prepared in accordance with e.g., manufacturing methods described in, for example, JP-A-2008-270201, WO2013/118661, and JP-A-2013-030284.
It is sufficient that the positive electrode active material contains at least one selected from the above positive electrode active materials (A) to (D) as a main component, and the examples of positive electrode active materials to be included other than the above include transition element chalcogenides such as $FeS_2$, $TiS_2$, $V_2O_5$, MoOs and $MoS_2$, or conductive polymers such as polyacetylene, polyparaphenylene, polyaniline and polypyrrole, activated carbons, radical generating polymers, carbon materials and the like.

[Positive electrode current collector]

The positive electrode (b) has a positive electrode current collector. As the positive electrode current collector, for example, aluminum, stainless steel, nickel, titanium or alloys thereof or the like can be used.

[Positive electrode active material layer]

In the positive electrode (b), for example, a positive electrode active material layer is formed on at least one surface of the positive electrode current collector. The positive electrode active material layer is constituted of, for example, the above-described positive electrode active material, a binder and, as required, a conducting agent.
Examples of binders include polytetrafluoroethylene, polyvinylidene fluoride or styrene-butadiene rubber (SBR) resin and the like.
As the conducting agent, for example, a carbon material such as acetylene black, Ketjen Black, carbon fiber or graphite (granular graphite or flake graphite) can be used. In the positive electrode, acetylene black and Ketjen Black, which have low crystallizability, are preferably used.

[(c) Negative electrode]

The negative electrode (c) preferably includes at least one negative electrode active material.

[Negative electrode active material]

In the case of lithium ion secondary batteries in which the cation in the nonaqueous electrolyte solution is lithium as a main cation, the negative electrode active materials constituting the negative electrode (c) are those in which lithium ion can be doped and de-doped, and the examples thereof include carbon materials having a d value of the lattice plane (002 plane) of 0.340 nm or less according to X-ray diffraction (E), carbon materials having a d value of the lattice plane (002 plane) exceeding 0.340 nm according to X-ray diffraction (F), oxides of one or more metals selected from Si, Sn and Al (G), one or more metals selected from Si, Sn and Al or alloys including these metals, or alloys of these metals or alloys with lithium (H), and those containing at least one selected from lithium titanium oxides (I). These negative electrode active materials can be used individually or two or more of the materials can be used in combination.

((E) Carbon material having d value of lattice plane (002 plane) of 0.340 nm or less according to X-ray diffraction)

Examples of carbon materials having a d value of the lattice plane (002 plane) of 0.340 nm or less according to X-ray diffraction (E) as a negative electrode active material include pyrolytic carbons, cokes (e.g., pitch coke, needle coke, petroleum coke, etc.), graphite, fired products of high molecular organic compounds (e.g., those obtained by firing phenol resin, furan resin, or the like at a suitable temperature for carbonization), carbon fibers, activated carbons and the like, and these materials may be also graphited. The carbon materials are those materials having a plane spacing (d002) of (002) plane of 0.340 nm or less measured according to X-ray diffraction, and among them, graphite having a true density of $1.70 g/cm^3$ or more or high crystallinity carbon materials having properties close to that of the graphite are preferred.

((F) Carbon material having d value of lattice plane (002 plane) exceeding 0.340 nm according to X-ray diffraction)

Examples of the carbon materials having a d value of the lattice plane (002 plane) exceeding 0.340 nm according to X-ray diffraction (F) as a negative electrode active material include amorphous carbon, and this is a carbon material in which the lamination system is not almost changed even when heat treated at a high temperature of 2000 °C or higher. Examples thereof include hardly-graphitizable carbon (hard carbon), mesocarbon microbeads (MCMB) and mesophase pitch carbon fibers (MCF) fired at 1500°C or lower, and the like. Typical examples thereof are CARBOTRON (registered trademark) P manufactured by KUREHA CORPORATION and the like.

((G) Oxide of one or more metals selected from Si, Sn and Al)

Examples of the oxides of one or more metals selected from Si, Sn and Al (G) as a negative electrode active material include silicon oxide, tin oxide and the like in which lithium ion can be doped and de-doped.

There are e.g. $SiO_x$ having a structure in which Si ultrafine particles are dispersed in $Si0_2$. When this material is used as a negative electrode active material, charging and discharging are smoothly carried out because Si reacting with Li is in the form of ultrafine particles. On the other hand, since $SiO_x$ particles having the above structure themselves have a small surface area, paintability when they are made into a composition (paste) to form a negative electrode active material layer and adhesiveness of a negative electrode mixture layer to a current collector are good.

In this case, because $SiO_x$ has large volume changes associated with charging and discharging, both a high capacity and good charging and discharging cycle characteristics can be obtained by using $SiO_x$ and graphite as the above-described negative electrode active material (E) in combination at a specific ratio for the negative electrode active material.

((H) One or more metals selected from Si, Sn and Al or alloys including these metals, or alloys of these metals or alloys with lithium)

Examples of one or more metals selected from Si, Sn and Al or alloys including these metals or alloys of these metals or alloys with lithium (H) as a negative electrode active material include metals such as silicon, tin and aluminum, silicon alloy, tin alloy, aluminum alloy and the like, and materials in which these metals and alloys are alloyed with lithium associated with charging and discharging can be also used.

Specific preferred examples thereof include simple metals such as silicon (Si) and tin (Sn) (e.g. powder metal), alloys of the metals, compounds containing the metals, alloys including the metals with tin (Sn) and cobalt (Co), and the like described in e.g., WO2004/100293, and JP-A-2008-016424. These metals are preferably used for electrodes because a high charging capacity can be provided and the expansion and contraction of the volume associated with charging and discharging are relatively less. In addition, it is known that when used for the negative electrode of lithium ion secondary batteries, these metals are alloyed with Li at the time of charging and thus shows a high charging capacity. These metals are preferred also in this respect.

Furthermore, for example, a negative electrode active material formed from silicon pillar with a submicron diameter, a negative electrode active material including fiber formed from silicon and the like described in WO2004/042851, WO2007/083155, etc. may be used.

((I) Lithium titanium oxide)

Examples of the lithium titanium oxides (I) as a negative electrode active material can include lithium titanate having a spinel structure, lithium titanate having a ramsdellite structure and the like.

Examples of lithium titanate having a spinel structure can include $Li_{4+\alpha}Ti_5O_{12}$ ($\alpha$ varies within $0 \leq \alpha \leq 3$ due to the charging and discharging reaction). Examples of lithium titanate having a ramsdellite structure can include $Li_2$+p$Ti_3O_7$

(β varies within $0 \leq \beta \leq 3$ due to the charging and discharging reaction). These negative electrode active materials can be prepared in accordance with e.g., manufacturing methods described in, for example, JP-A-2007-018883, and JP-A-2009-176752.

In the case of sodium ion secondary batteries in which cations in a nonaqueous electrolyte solution are mainly sodium, for example, hard carbon and oxides such as $TiO_2$, $V_2O_5$ and MoOs and the like are used as the negative electrode active material. In the case of sodium ion secondary batteries in which cations in a nonaqueous electrolyte solution are mainly sodium, for example, sodium-containing transition metal composite oxides such as $NaFeO_2$, $NaCrO_2$, $NaNiO_2$, $NaMnO_2$ and $NaCoO_2$, those oxides in which a plurality of transition metals such as Fe, Cr, Ni, Mn and Co are mixed in the sodium-containing transition metal composite oxides, those oxides in which a part of the transition metals contained in the sodium-containing transition metal composite oxides is replaced with a metal other than the transition metals, phosphoric acid compounds of transition metals such as $Na_2FeP_2O_7$ and $NaCo_3(PO_4)_2P_2O_7$, sulfides such as $TiS_2$ and $FeS_2$, or conductive polymers such as polyacetylene, polyparaphenylene, polyaniline and polypyrrole, activated carbons, radical generating polymers, carbon materials and the like are used as a positive electrode active material.

[Negative electrode current collector]

The negative electrode (c) has a negative electrode current collector. As the negative electrode current collector, for example, copper, aluminum, stainless steel, nickel, titanium or alloys thereof or the like can be used.

[Negative electrode active material layer]

In the negative electrode (c), for example, a negative electrode active material layer is formed on at least one surface of the negative electrode current collector. The negative electrode active material layer is constituted of, for example, the above-described negative electrode active material, a binder and, as needed, a conducting agent.

Examples of the binders include polytetrafluoroethylene, polyvinylidene fluoride or styrenebutadiene rubber (SBR) resin, and the like.

As the conducting agent, for example, a carbon material such as acetylene black, Ketjen Black, carbon fiber or graphite (granular graphite or flake graphite) can be used.

[Method for manufacturing electrodes ((b) positive electrode and (c) negative electrode)]

Electrodes can be obtained, for example, by dispersing an active material, a binder and, as needed, a conducting agent in a solvent such as N-methyl-2-pyrrolidone (NMP) or water in predetermined amounts, kneading the resultant mixture, and applying the resultant paste to a current collector and drying it to form an active material layer. It is preferred that the resultant electrode be compressed by a method such as roll pressing and adjusted to a suitable density.

[(d) Separator]

The above nonaqueous electrolyte secondary battery comprises a separator (d) . As a separator to prevent a contact between the positive electrode (b) and the negative electrode (c), a nonwoven fabric or porous sheet made from e.g., a polyolefin such as polypropylene or polyethylene, cellulose, paper or glass fiber is used. These films are preferably microporous films into which the electrolyte solution soaks and ions easily penetrate.

Examples of polyolefin separators include films which electrically insulate the positive electrode and negative electrode and into which lithium ion can penetrate, such as microporous polymer films e.g., porous polyolefin films. As specific examples of porous polyolefin films, for example, a porous polyethylene film can be used singly or a multilayered film having a porous polyethylene film and a porous polypropylene film laminated can be used. In addition, e.g., a composite film of a porous polyethylene film and a polypropylene film can be also used.

[Exterior body]

When forming a nonaqueous electrolyte secondary battery, a metal can in the shape of coin, cylinder, square or the like and a laminate exterior body, for example, can be used as the exterior body for the nonaqueous electrolyte secondary battery. Examples of metal can materials include a nickel plated iron and steel plate, a stainless steel plate, a nickel-plated stainless steel plate, aluminum or an alloy thereof, nickel, titanium and the like.

Laminate films such as an aluminum laminated film, an SUS laminated film, silica-coated polypropylene, and polyethylene, and the like, for example, can be used as the laminate exterior body.

The structure of the nonaqueous electrolyte secondary battery according to the present embodiment is not particularly restricted, and the structure in which electrode elements having the positive electrode and negative electrode

facing each other and the nonaqueous electrolyte solution are included in an exterior body, for example, can be used. The shape of the nonaqueous electrolyte secondary battery is not particularly limited, and an electrochemical device in the shape of e.g., coin, cylinder, square or aluminum laminated sheet is assembled from the elements described above.

Examples

The present invention will now be described in detail by way of examples thereof. In this case, the scope of the present invention is not limited by the examples.

<Lithium ion battery>

(Production of electrolyte solution No. 1Li1-[6]1)

A mixed solvent of ethylene carbonate, dimethyl carbonate and ethyl methyl carbonate at a volume ratio of 2.5 : 4 : 3.5 was used as a nonaqueous organic solvent (III), and $LiPF_6$ as a solute (IV), the lithium salt of Compound No. 1 as a salt having an imide anion (I) (the amount of Cl included in the salt having an imide anion as a material before being dissolved in an electrolyte solution is 40 ppm by mass), and the compound of the formula [6] as a sulfonate compound (II) were dissolved in the solvent so that each had the concentration shown in Table 1 to prepare the electrolyte solution No. 1Li1-[6]1. The above preparation was carried out, while maintaining a liquid temperature at 20 to 30°C. In this case, the concentration of a free acid in the electrolyte solution was 35 ppm by mass.

[Table 1]

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentrat ion [mass%] | Type | Type | Concentra tion [mol/L] | Type | Concentrat ion [mass%] |
| 1Li1-[6]1 | $Li^+$ | 1 | 1.000 | [6] | 1.000 | EC/ DMC/ EMC =2.5/4/ 3.5 by volume ratio | $LiPF_6$ | 1.000 | n/a | - |
| 1Li1-[7]1 | | | | [7] | | | | | | |
| 1Li1-[11]1 | | | | [11] | | | | | | |
| 1L11-[13]1 | | | | [13] | | | | | | |
| 1L11-[15]1 | | | | [15] | | | | | | |
| 1Li1-[16]1 | | | | [16] | | | | | | |
| 1Li 1- [17]1 | | | | [17] | | | | | | |
| 1Lil1-[18]1 | | | | [18] | | | | | | |
| 1Li1-[19]1 | | | | [19] | | | | | | |
| 1Li1-[20]1 | | | | [20] | | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentration [mass%] | Type | Type | Concentration [mol/L] | Type | Concentration [mass%] |
| 1Li1-[21]1 | | | | [21] | | | | | | |
| 1Li1-[22]1 | | | | [22] | | | | | | |
| 1Li1-[23]1 | | | | [23] | | | | | | |
| 10Li1-[6]1 | | 10 | | [6] | | | | | | |
| 10Li1-[7]1 | | | | [7] | | | | | | |
| 10Li1-[16]1 | | | | [16] | | | | | | |
| 10Li1-[23]1 | | | | [23] | | | | | | |
| 11Li1-[6]1 | | 11 | | [6] | | | | | | |
| 11Li1- [7] 1 | | | | [7] | | | | | | |
| 11LiI- [16] 1 | | | | [16] | | | | | | |
| 11Li1-[23]1 | | | | [23] | | | | | | |
| 15Li1-[6]1 | | 15 | | [6] | | | | | | |
| 15Li1-[7]1 | | | | [7] | | | | | | |
| 15Li1-[16]1 | | | | [16] | | | | | | |
| 15Li1-[23]1 | | | | [23] | | | | | | |
| 0-[6]1-LiFSI1 | n/a | | - | [6] | 1.000 | | | | LiFSI | 1.000 |
| 0-[7]1-LiFSI1 | | | | [7] | | | | | | |
| 0-[11]1-LiFSI1 | | | | [11] | | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentrat ion [mass%] | Type | Type | Concentra tion [mol/L] | Type | Concentrat ion [mass%] |
| 0-[13]1-LiFSI1 | | | [13] | | | | | | | |
| 0-[15]1-LiFSI1 | | | [15] | | | | | | | |
| 0-[16]1-LiFSI1 | | | [16] | | | | | | | |
| 0-[17]1-LiFSI1 | | | [17] | | | | | | | |
| 0-[18]1-LiFSI1 | | | [18] | | | | | | | |
| 0-[19]1-LiFSI1 | | | [19] | | | | | | | |
| 0-[20]1-LiFSI1 | | | [20] | | | | | | | |
| 0-[21]1-LiFSI1 | | | [21] | | | | | | | |
| 0-[22]1-LiFSI1 | | | [22] | | | | | | | |
| 0-[23]1-LiFSI1 | | | [23] | | | | | | | |

(Production of electrolyte solution Nos. 1Li1-[7] 1 to 1Li1-[23]1, electrolyte solution Nos. 10Li1-[6]1 to 10Li1-[23]1, electrolyte solution Nos. 11Li1-[6]1 to 11Li1-[23]1, and electrolyte solution Nos. 15Li1-[6]1 to 15Li1-[23]1)

As shown in Table 1, various kinds of electrolyte solutions were prepared in the same manner as for the electrolyte solution No. 1Li1-[6]1 except that:

the lithium salts of Compound Nos. 10, 11 and 15 were used as the salt having an imide anion (I) instead of the lithium salt of Compound No. 1 (the amount of Cl included in the salt having an imide anion as a material before being dissolved in an electrolyte solution is about 40 ppm by mass in each case), and
the compounds of the formulae [7], [11], [13] and [15] to [23] were used as the sulfonate compound (II) instead of the compound of the formula [6]. In this case, the concentration of a free acid in each of the electrolyte solutions was about 40 ppm by mass.

(Production of electrolyte solution Nos. 0-[6]1-LiFSI1 to 0-[23] 1-LiFSI1)

Electrolyte solutions No. 0-[6]1-LiFSI1 to 0-[23]1-LiFSI1 were prepared in the same manner as for the electrolyte solution Nos. 1Li1-[6]1 to 1Li1-[23]1 except that LiFSI was dissolved to a concentration shown in Table 1 without using the salt having an imide anion (I), as shown in Table 1. In this case, the concentration of a free acid in each of the electrolyte solutions was about 45 ppm by mass.

(Production of electrolyte solution Nos. 2Li1-[6]1 to 27Li1-[6] 1)

Electrolyte solution Nos. 2Li1-[6]1 to 27Li1-[6]1 were prepared in the same manner as for the electrolyte solution No. 1Li1-[6] 1 except that the lithium salts of Compound Nos. 2, 3, 5, 8, 9, 12 to 14 and 16 to 27 were used as the salt having an imide anion (I) instead of the lithium salt of Compound No. 1 as shown in Table 2 (the amount of Cl included in the salt having an imide anion as a material before being dissolved in an electrolyte solution is about 40 ppm by mass in each case). In this case, the concentration of a free acid in each of the electrolyte solutions was about 40 ppm by mass.

[Table 2]

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentration [mass%] | Type | Type | Concentration [mol/L] | Type | Concentration [mass%] |
| 2Li1-[6]1 | $Li^+$ | 2 | 1.000 | [6] | 1.000 | EC/ DMC/ EMC =2.5/4/3 .5 by volume ratio | $LiPF_6$ | 1.000 | n/a | - |
| 3Li1-[6]1 | | 3 | | | | | | | | |
| 5Li1-[6]1 | | 5 | | | | | | | | |
| 8Li1-[6]1 | | 8 | | | | | | | | |
| 9Li1-[6]1 | | 9 | | | | | | | | |
| 12Li1-[6]1 | | 12 | | | | | | | | |
| 13Li1-[6]1 | | 13 | | | | | | | | |
| 14Li1-[6]1 | | 14 | | | | | | | | |
| 16Li1- [6] 1 | | 16 | | | | | | | | |
| 17Li1-[6]1 | | 17 | | | | | | | | |
| 18LH- [6] 1 | | 18 | | | | | | | | |
| 19Li1-[6]1 | | 19 | | | | | | | | |
| 20Li1-[6]1 | | 20 | | | | | | | | |
| 21LH- [6] 1 | | 21 | | | | | | | | |
| 22LH- [6] 1 | | 22 | | | | | | | | |
| 23LH- [6] 1 | | 23 | | | | | | | | |
| 24LH- [6] 1 | | 24 | | | | | | | | |
| 25Li1-[6]1 | | 25 | | | | | | | | |
| 26LH- [6] 1 | | 26 | | | | | | | | |
| 27LH- [6] 1 | | 27 | | | | | | | | |

(Production of electrolyte solutions in which concentration of component (I) or concentration of component (II) is changed)

Electrolyte solutions were prepared in the same manner as for the electrolyte solution No. 1Li1-[6]1 except that the concentration of the component (I) or the concentration of component (II) was changed as shown in Table 3. In this case, the concentration of a free acid in each of the electrolyte solutions was about 40 ppm by mass.

[Table 3]

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentration [mass%] | Type | Type | Concentration [mol/L] | Type | Concentration [mass%] |
| 0-[6]1 | n/a | | - | | | | | | | |
| 1Li0.004-[6]1 | | | 0.004 | | | | | | | |
| 1Li0.03-[6]1 | | | 0.030 | | | | | | | |
| 1Li0.08-[6]1 | | | 0.080 | | | | | | | |
| 1Li0.3-[6]1 | $Li^+$ | 1 | 0.300 | [6] | 1.000 | EC/ DMC/ EMC =2.5/4/3 .5 by volume ratio | $LiPF_6$ | 1.000 | n/a | - |
| 1Li1-[6]1 | | | 1.000 | | | | | | | |
| lLi2.5-[6]1 | | | 2.500 | | | | | | | |
| lLi5-[6]1 | | | 5.000 | | | | | | | |
| 1L18-[6]1 | | | 8.000 | | | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concentration [mass%] | Compound No. | Concentration [mass%] | Type | Type | Concentration [mol/L] | Type | Concentration [mass%] |
| 1Li13-[6]1 | | | 13.000 | | | | | | | |
| 10Li0.5-[6]1 | | 10 | 0.500 | | | | | | | |
| 10Li1-[6]1 | | | 1.000 | | | | | | | |
| 10Li2.5-[6]1 | | | 2.500 | | | | | | | |
| 11Li0.5-[6]1 | | 11 | 0.500 | | | | | | | |
| 11Li1-[6]1 | | | 1.000 | | | | | | | |
| 11Li2.5-[6]1 | | | 2.500 | | | | | | | |
| 15Li0.5-[6]1 | | 15 | 0.500 | | | | | | | |
| 15Li1- [6] 1 | | | 1.000 | | | | | | | |
| 15Li2.5-[6]1 | | | 2.500 | | | | | | | |
| 1Li1-0 | | 1 | 1.000 | n/a | - | | | | | |
| 10Li1-0 | | 10 | | | | | | | | |
| 11Li1-0 | | 11 | | | | | | | | |
| 15LiI-0 | | 15 | | | | | | | | |
| 1Li1- [6]0.008 | | 1 | 1.000 | [6] | 0.008 | | | | | |
| 1Li1-[6]0.05 | | | | | 0.050 | | | | | |
| 1Li1-[6]0.15 | | | | | 0.150 | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concentr ation [mass%] | Comp ound No. | Concent ration [mass%] | Type | Type | Concentra tion [mol/L] | Type | Concent ration [mass%] |
| 1Li1-[6]2 | | | | | 2.000 | | | | | |
| 1Li1-[6]8 | | | | | 8.000 | | | | | |
| 1Li1-[6]11 | | | | | 11.000 | | | | | |
| 10Li1-[6]0.3 | | 10 | | | 0.300 | | | | | |
| 10Li1-[6]0.5 | | | | | 0.500 | | | | | |
| 11Li1-[6]0.3 | | 11 | | | 0.300 | | | | | |
| 11Li1-[6]0.5 | | | | | 0.500 | | | | | |
| 15Li1-[6]0.3 | | 15 | | | 0.300 | | | | | |
| 15Li1-[6]0.5 | | | | | 0.500 | | | | | |

[Examples 1-1 to 1-25 and Comparative Examples 1-1 to 1-13]

A cell was produced using an electrolyte solution shown in Table 1, and $LiNi_{0.8}Coo_{0.1}Mn_{0.1}O_2$ as the positive electrode material and graphite containing silicon as the negative electrode material, and the discharge capacity retention rate and internal resistance characteristic after storage were evaluated. The evaluation results are shown in Table 4. In this case, a test cell was produced as described below.

Five mass% of polyvinylidene fluoride (hereinafter referred to as "PVDF") as a binder and 5 mass% of acetylene black as a conductive material were mixed with 90 mass% of $LiNi_{0.8}CO_{0.1}Mn_{0.1}O_2$ powder, and N-methylpyrrolidone was further added to the resultant mixture to obtain a paste. This paste was applied onto aluminum foil and dried to obtain a test positive electrode body.

In addition, 5 mass% of silicon powder and 10 mass% of PVDF as a binder were mixed with 85 mass% of graphite powder, and N-methylpyrrolidone was further added to the resultant mixture to obtain a slurry. This slurry was applied onto copper foil and dried at 120°C for 12 hours to obtain a test negative electrode body.

An electrolyte solution was allowed to soak into a polyethylene separator and a 50 mAh cell with an aluminum laminate exterior body was assembled.

[Evaluation of high temperature storage characteristic]

A battery was charged to 4.3 V at a constant current of 0.2 $mA/cm^2$ at 25°C and then discharged to 3.0 V at a constant current of 0.2 $mA/cm^2$. Charging and discharging were repeated 10 cycles in the same manner as stated above. The discharge capacity at the 10th cycle is defined as the initial discharge capacity. After this, the battery was charged to 4.3 V at a constant current of 0.2 $mA/cm^2$ and then charged at a constant voltage of 4.3 V until a current value reached 0.1 $mA/cm^2$. This was stored at 65°C for 4 weeks, the battery was cooled to room temperature and then discharged to 3.0 V at a constant current of 0.2 $mA/cm^2$ at 25°C. It was charged to 4.3 V at a constant current of 0.2 $mA/cm^2$ and then charged at a constant voltage of 4.3 V until a current value reached 0.1 $mA/cm^2$, and then discharged to 3.0 V at a constant current of 0.2 $mA/cm^2$. The discharge capacity at this time is defined as the recovery capacity. The capacity retention rate at storage was determined by the following formula.

<Capacity retention rate at storage>

Capacity retention rate at storage (%) = (recovery capacity/initial discharge capacity) x 100

[Evaluation of internal resistance characteristics after storage]

The cell after the determination of the above recovery capacity was charged to 4.3 V at a constant current of 0.2 $mA/cm^2$, and then charged at constant voltage of 4.3 V until a current value reached 0.1 $mA/cm^2$. The internal resistance of the battery was then measured at an environmental temperature of -20°C.

[Table 4]

| | Electrolyte solution No. | Capacity retention rate at storage | Internal resistance characteristic after storage |
|---|---|---|---|
| Example 1-1 | 1Li1- [6] 1 | 109 | 80 |
| Example 1-2 | 1Li1-[7]1 | 103 | 92 |
| Example 1-3 | 1Li1- [11] 1 | 102 | 94 |
| Example 1-4 | 1Li1- [13] 1 | 113 | 81 |
| Example 1-5 | 1Li1- [15] 1 | 102 | 90 |
| Example 1-6 | 1Li1- [16] 1 | 103 | 89 |
| Example 1-7 | 1Li1- [17] 1 | 107 | 88 |

(continued)

| | Electrolyte solution No. | Capacity retention rate at storage | Internal resistance characteristic after storage |
|---|---|---|---|
| Example 1-8 | 1Li1- [18] 1 | 101 | 91 |
| Example 1-9 | 1Li1- [19] 1 | 105 | 88 |
| Example 1-10 | 1Li1- [20] 1 | 107 | 89 |
| Example 1-11 | 1Li1- [21] 1 | 105 | 91 |
| Example 1-12 | 1Li1- [22] 1 | 104 | 94 |
| Example 1-13 | 1L11-[23]1 | 110 | 87 |
| Example 1-14 | 10Li1-[6]1 | 110 | 82 |
| Example 1-15 | 10Li1- [7] 1 | 103 | 88 |
| Example 1-16 | 10Li1- [16] 1 | 107 | 84 |
| Example 1-17 | 10Li1- [23] 1 | 106 | 85 |
| Example 1-18 | 11Li1-[6]1 | 106 | 84 |
| Example 1-19 | 11Li1- [7]1 | 103 | 89 |
| Example 1-20 | 11Li1-[16]1 | 105 | 88 |
| Example 1-21 | 11Li1-[23]1 | 104 | 83 |
| Example 1-22 | 15Li1-[6] 1 | 110 | 83 |
| Example 1-23 | 15Li1- [7]1 | 106 | 85 |
| Example 1-24 | 15Li1- [16] 1 | 108 | 84 |
| Example 1-25 | 15Li1- [23] 1 | 107 | 84 |
| Comparative Example 1-1 | 0-[6]1-LiFSI1 | 100 | 100 |
| Comparative Example 1-2 | 0-[7]1-LiFSI1 | 100 | 100 |
| Comparative Example 1-3 | 0-[11]1-LiFSI1 | 100 | 100 |
| Comparative Example 1-4 | 0-[13]1-LiFSI1 | 100 | 100 |
| Comparative Example 1-5 | 0-[15]1-LiFSI1 | 100 | 100 |
| Comparative Example 1-6 | 0-[16]1-LiFSI1 | 100 | 100 |
| Comparative Example 1-7 | 0-[17]1-LiFSI1 | 100 | 100 |
| Comparative Example 1-8 | 0-[18]1-LiFSI1 | 100 | 100 |
| Comparative Example 1-9 | 0-[19]1-LiFSI1 | 100 | 100 |
| Comparative Example 1-10 | 0-[20]1-LiFSI1 | 100 | 100 |
| Comparative Example 1-11 | 0-[21]1-LiFSI1 | 100 | 100 |

(continued)

| | Electrolyte solution No. | Capacity retention rate at storage | Internal resistance characteristic after storage |
|---|---|---|---|
| Comparative Example 1-12 | 0-[22]1-LiFSI1 | 100 | 100 |
| Comparative Example 1-13 | 0-[23]1-LiFSI1 | 100 | 100 |

Evaluation results of the Examples are relative values when evaluation results of the Comparative Example using corresponding components (II) are designated as 100. It is desired that the "capacity retention rate at storage" have a higher value, and it is desired that the "internal resistance characteristic after storage" have a lower value.

From the evaluation results in Table 4, it was confirmed that in the case where the component (I) and the component (II) of the present invention were used in combination, the high temperature storage characteristic (capacity retention rate at storage) and the internal resistance characteristic after storage can be improved in a balanced manner compared to cases where LiFSI and the component (II) were used in combination. It was confirmed that in the Examples in which the compounds of the formulae [6], [13], [16], [17], [19], [20] and [23] were used as the component (II), both the high temperature storage characteristic and internal resistance characteristic after storage can be improved. It was confirmed that particularly in the Examples in which the compounds of the formulae [6], [13], [17] and [23] were used, the improvement effect described above was large. It is confirmed that also in the case where the compound of the formula [14] was used, the improvement effect described above was large, although this case is not described as an Example.

[Examples 2-1 to 2-20]

Cells were produced in the same manner as in Example 1-1 except that the electrolyte solutions shown in Table 2 were used, and the capacity retention rate at storage and internal resistance characteristic after storage were evaluated. The evaluation results are shown in Table 5.

[Table 5]

| | Electrolyte solution No. | Capacity retention rate at storage | Internal resistance characteristic after storage |
|---|---|---|---|
| Example 1-1 | 1Li1-[6]1 | 109 | 80 |
| Example 2-1 | 2Li1-[6]1 | 105 | 84 |
| Example 2-2 | 3Li1-[6]1 | 104 | 85 |
| Example 2-3 | 5Li1-[6]1 | 105 | 84 |
| Example 2-4 | 8Li1-[6]1 | 102 | 93 |
| Example 2-5 | 9Li1-[6]1 | 101 | 94 |
| Example 1-14 | 10Li1- [6]1 | 110 | 83 |
| Example 1-18 | 11Li1-[6]1 | 106 | 84 |
| Example 2-6 | 12Li1-[6]1 | 106 | 85 |
| Example 2-7 | 13Li1-[6]1 | 104 | 87 |
| Example 2-8 | 14Li1-[6]1 | 108 | 85 |
| Example 1-22 | 15Li1-[6]1 | 110 | 85 |
| Example 2-9 | 16LH-[6]1 | 105 | 86 |
| Example 2-10 | 17Li1-[6]1 | 104 | 89 |
| Example 2-11 | 18Li1-[6]1 | 104 | 90 |
| Example 2-12 | 19Li1-[6]1 | 102 | 92 |

(continued)

| | Electrolyte solution No. | Capacity retention rate at storage | Internal resistance characteristic after storage |
|---|---|---|---|
| Example 2-13 | 20LH-[6]1 | 103 | 89 |
| Example 2-14 | 21Li1-[6]1 | 105 | 87 |
| Example 2-15 | 22Li1-[6]1 | 106 | 88 |
| Example 2-16 | 23Li1-[6]1 | 110 | 85 |
| Example 2-17 | 24LH-[6]1 | 108 | 87 |
| Example 2-18 | 25Li1-[6]1 | 106 | 88 |
| Example 2-19 | 26Li1-[6]1 | 101 | 96 |
| Example 2-20 | 27Li1-[6]1 | 102 | 94 |
| Comparative Example 1-1 | 0-[6]1-LiFSI1 | 100 | 100 |

Evaluation results of the Examples are relative values when evaluation results of Comparative Example 1-1 are designated as 100. It is desired that the "capacity retention rate at storage" have a higher value, and it is desired that the "internal resistance characteristic after storage" have a lower value.

From the evaluation results in Table 5, it was confirmed that in the case where the component (I) and the component (II) of the present invention were used in combination, the high temperature storage characteristic (capacity retention rate at storage) and the internal resistance characteristic after storage can be improved in a balanced manner compared to the case where LiFSI and the component (II) were used in combination. In this case, it is seen that when the component (I) having more P-F bonds and S-F bonds is used, "internal resistance characteristic after storage" tends to be better.

[Examples 3-1 to 3-14 and Comparative Example 3-1]

Cells were produced in the same manner as in Example 1-1 except that the electrolyte solutions shown in Table 3 were used, and the capacity retention rate at storage and internal resistance characteristic after storage were evaluated. The evaluation results are shown in Table 6.

[Table 6]

| | Electrolyte solution No. | Capacity retention rate at storage | Internal resistance characteristic after storage |
|---|---|---|---|
| Comparative Example 3-1 | 0-[6]1 | 100 | 100 |
| Example 3-1 | 1Li0.004-[6]1 | 102 | 99 |
| Example 3-2 | 1Li0.03-[6]1 | 102 | 96 |
| Example 3-3 | 1Li0.08-[6]1 | 104 | 93 |
| Example 3-4 | 1Li0.3-[6]1 | 107 | 89 |
| Example 1-1 | 1Li1-[6]1 | 110 | 81 |
| Example 3-5 | 1Li2.5-[6]1 | 109 | 81 |
| Example 3-6 | 1Li5-[6]1 | 109 | 83 |
| Example 3-7 | 1Li8-[6]1 | 109 | 85 |
| Example 3-8 | 1Li13-[6]1 | 105 | 89 |
| Example 3-9 | 10Li0.5-[6]1 | 109 | 83 |
| Example 1-14 | 10Li1-[6]1 | 111 | 84 |

(continued)

| | Electrolyte solution No. | Capacity retention rate at storage | Internal resistance characteristic after storage |
|---|---|---|---|
| Example 3-10 | 10Li2.5-[6]1 | 112 | 83 |
| Example 3-11 | 11Li0.5-[6]1 | 104 | 86 |
| Example 1-18 | 11Li1-[6]1 | 108 | 83 |
| Example 3-12 | HLi2.5-[6]1 | 107 | 84 |
| Example 3-13 | 15Li0.5-[6]1 | 104 | 87 |
| Example 1-22 | 15Li1-[6]1 | 111 | 83 |
| Example 3-14 | 15Li2.5-[6]1 | 112 | 82 |

Evaluation results of the Examples are relative values when evaluation results of Comparative Example 3-1 are designated as 100. It is desired that the "capacity retention rate at storage" have a higher value, and it is desired that the "internal resistance characteristic after storage" have a lower value.

From the evaluation results in Table 6, it was confirmed that in the case where the component (I) and the component (II) of the present invention were used in combination, the high temperature storage characteristic (capacity retention rate at storage) and the internal resistance characteristic after storage can be improved in a balanced manner compared to Comparative Example 3-1 to which the component (I) was not added. It was confirmed that in the Examples in which the amount of the component (I) added is in a suitable range of "0.005 to 12.0 mass%" with respect to the total amount of the components (I) to (IV), both the capacity retention rate at storage and internal resistance characteristic after storage can be well improved. It was also confirmed that in the Examples in which the amount of the component (I) added is in a more suitable range of 0.05 to 6.0 mass%, the effect of addition of the above component (I) was larger, and in the Examples in which the amount of the component (I) added is in a particularly suitable range of 0.1 to 3.0 mass%, the effect of addition of the above component (I) was particularly larger.

[Examples 3-15 to 3-26 and Comparative Examples 3-2 to 3-5]

Cells were produced in the same manner as in Example 1-1 except that the electrolyte solutions shown in Table 3 were used, and the capacity retention rate at storage and internal resistance characteristic after storage were evaluated. The evaluation results are shown in Table 7.

[Table 7]

| | Electrolyte solution No. | Capacity retention rate at storage | Internal resistance characteristic after storage |
|---|---|---|---|
| Comparative Example 3-2 | 1Li1-0 | 100 | 100 |
| Comparative Example 3-3 | 10Li1-0 | 100 | 100 |
| Comparative Example 3-4 | 11Li1-0 | 100 | 100 |
| Comparative Example 3-5 | 15Li1-0 | 100 | 100 |
| Example 3-15 | 1Li1-[6]0.008 | 100 | 99 |
| Example 3-16 | 1Li1-[6]0.05 | 103 | 97 |
| Example 3-17 | 1Li1-[6]0.15 | 104 | 96 |
| Example 1-1 | 1Li1-[6]1 | 114 | 80 |
| Example 3-18 | 1Li1-[6]2 | 111 | 81 |
| Example 3-19 | 1Li1-[6]8 | 112 | 84 |

(continued)

| | Electrolyte solution No. | Capacity retention rate at storage | Internal resistance characteristic after storage |
|---|---|---|---|
| Example 3-20 | 1Li1-[6]11 | 109 | 86 |
| Example 3-21 | 10Li1-[6]0.3 | 104 | 89 |
| Example 3-22 | 10Li1-[6]0.5 | 108 | 86 |
| Example 1-14 | 10Li1-[6]1 | 113 | 82 |
| Example 3-23 | 11Li1-[6]0.3 | 104 | 89 |
| Example 3-24 | 11Li1-[6]0.5 | 105 | 84 |
| Example 1-18 | 11Li1-[6]1 | 109 | 83 |
| Example 3-25 | 15Li1-[6]0.3 | 103 | 90 |
| Example 3-26 | 15Li1-[6]0.5 | 105 | 85 |
| Example 1-22 | 15Li1-[6]1 | 110 | 81 |

Evaluation results of the Examples are relative values when evaluation results of the Comparative Examples using the corresponding component (I) are designated as 100. It is desired that the "capacity retention rate at storage" have a higher value, and it is desired that the "internal resistance characteristic after storage" have a lower value.

From the evaluation results in Table 7, it was confirmed that in the case where the component (I) and the component (II) of the present invention were used in combination, the high temperature storage characteristic (capacity retention rate at storage) and the internal resistance characteristic after storage can be improved in a balanced manner compared to Comparative Examples to which the component (II) was not added. It was confirmed that in the Examples in which the amount of the component (II) added is in a suitable range of "0.01 to 10.0 mass%" with respect to the total amount of the components (I) to (IV), both the capacity retention rate at storage and internal resistance characteristic after storage can be well improved. It was also confirmed that in the Examples in which the amount of the component (II) added is in a more suitable range of 0.1 to 5.0 mass%, the effect of addition of the above component (II) was larger, and in the Examples in which the amount of the component (II) added is in a particularly suitable range of 0.2 to 1.5 mass%, the effect of addition of the above component (II) was particularly larger.

<Sodium ion battery>

(Production of electrolyte solution No. 1Na1-[6]1)

A mixed solvent of propylene carbonate, ethylene carbonate and diethyl carbonate at a volume ratio of 1 : 2 : 7 was used as the nonaqueous organic solvent (III), and $NaPF_6$ as the solute (IV), the sodium salt of Compound No. 1 as the salt having an imide anion (I) (the amount of Cl included in the salt having an imide anion as a material before being dissolved in an electrolyte solution was 30 ppm by mass), and the compound of the formula [6] as the sulfonate compound (II) were dissolved in the solvent so that they had the concentrations shown in Table 8 so as to prepare the electrolyte solution No. 1Na1-[6]1. The above preparation was carried out while maintaining a liquid temperature at 20 to 30°C. In this case, the concentration of a free acid in the electrolyte solution was 10 ppm by mass.

[Table 8]

| Electrolyte solution No. | (I) | | | (II) | | (III) | (IV) | | Other additives or components | |
|---|---|---|---|---|---|---|---|---|---|---|
| | Counter cation | Imide anion Compound No. | Concentr ation [mass%] | Compou nd No. | Concent ration [mass%] | Type | Type | Concentra tion [mol/L] | Type | Concent ration [mass%] |
| 1Na1-[6]1 | $Na^+$ | 1 | 1.000 | [6] | 1.000 | PC/ EC/ DEC =1/2/ 7 by volum e ratio | $NaPF_6$ | 1.000 | n/a | - |
| 1Na1-[7]1 | | | | [7] | | | | | | |
| 1NaI-[13]1 | | | | [13] | | | | | | |
| 1Na1-[16]1 | | | | [16] | | | | | | |
| 1Na1-[18]1 | | | | [18] | | | | | | |
| 1Na1-[20]1 | | | | [20] | | | | | | |
| 1Na1-[21]1 | | | | [21] | | | | | | |
| 1Na1-[23]1 | | | | [23] | | | | | | |
| 10Na1-[6]1 | | 10 | | [6] | | | | | | |
| 10Na1-[7]1 | | | | [7] | | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion Compound No. | Concentr ation [mass%] | Compou nd No. | Concent ration [mass%] | Type | Type | Concentra tion [mol/L] | Type | Concent ration [mass%] |
| 10Na1-[16]1 | | | | [16] | | | | | | |
| 10Na1-[23]1 | | | | [23] | | | | | | |
| 11Na1-[6]1 | | 11 | | [6] | | | | | | |
| 11Na1-[7]1 | | | | [7] | | | | | | |
| 11Na1-[16]1 | | | | [16] | | | | | | |
| 11Na1-[23]1 | | | | [23] | | | | | | |
| 15Na1-[6]1 | | 15 | | [6] | | | | | | |
| 15Na1-[7]1 | | | | [7] | | | | | | |
| 15Na1-[16]1 | | | | [16] | | | | | | |
| 15Na1-[23]1 | | | | [23] | | | | | | |
| 0-[6]1-NaFSI1 | n/a | | - | [6] | 1.000 | | | | NaFSI | 1.000 |
| 0-[7]1-NaFSI1 | | | | [7] | | | | | | |
| 0-[13]1-NaFSI1 | | | | [13] | | | | | | |
| 0-[16]1-NaFSI1 | | | | [16] | | | | | | |
| 0-[18]1-NaFSI1 | | | | [18] | | | | | | |
| 0-[20]1-NaFSI1 | | | | [20] | | | | | | |
| 0-[21]1-NaFSI1 | | | | [21] | | | | | | |
| 0-[23]1-NaFSI1 | | | | [23] | | | | | | |

(Production of electrolyte solutions No. 1Na1-[7]1 to 1Na1-[23]1, electrolyte solutions No. 10Na1-[6]1 to 10Na1-[23]1, electrolyte solutions No. 11Na1-[6]1 to 11Na1-[23]1, and electrolyte solutions No. 15Nal-[6]1 to 15Na1-[23]1)

As shown in Table 8, various kinds of electrolyte solutions were prepared in the same manner as for the electrolyte solution No. 1Na1-[6]1 except that the sodium salts of Compound Nos. 10, 11 and 15 were used as the salt having an imide anion (I) instead of the sodium salt of Compound No. 1 (the amount of Cl included in the salt having an imide anion as a material before being dissolved in an electrolyte solution was about 30 ppm by mass in each case), and that the compounds of the formulae [7], [13], [16], [18], [20], [21] and [23] were used as the sulfonate compound (II) instead of the compound of the formula [6]. In this case, the concentration of a free acid in each of the electrolyte solutions was about 10 ppm by mass.

(Production of electrolyte solutions Nos. 0-[6]1-NaFSI1 to 0-[23]1-NaFSI1)

Electrolyte solutions Nos. 0-[6]1-NaFSI1 to 0-[23]1-NaFSI1 were prepared in the same manner as for the electrolyte solution Nos. 1Na1-[6]1 to 1Na1-[23]1 except that sodium bis(fluorosulfonyl)imide (hereinafter may be referred to as "NaFSI") was dissolved to the concentration shown in Table 8 instead of the salt having an imide anion (I) as shown in Table 8. In this case, the concentration of a free acid in each of the electrolyte solutions was about 20 ppm by mass.

(Production of electrolyte solution Nos. 2Na1-[6]1 to 27Na1-[6] 1)

Electrolyte solution Nos. 2Na1-[6]1 to 27Na1-[6]1 were prepared in the same manner as for the electrolyte solution No. 1Na1-[6]1 except that the sodium salts of Compound Nos. 2, 3, 5, 8, 14, 18, 20, 21, 25 and 27 were used as the salt having an imide anion (I) instead of the sodium salt of Compound No. 1 as shown in Table 9 (the amount of Cl included in the salt having an imide anion as a material before being dissolved in an electrolyte solution was about 30 ppm by mass in each case). In this case, the concentration of a free acid in each of the electrolyte solutions was about 20 ppm by mass.

[Table 9]

| Electrolyte solution No. | (I) | | | (II) | | (III) | (IV) | | Other additives or components | |
|---|---|---|---|---|---|---|---|---|---|---|
| | Counter cation | Imide anion compound No. | Concentrat ion [mass%] | Compou nd No. | Concent ration [mass%] | Type | Type | Concentra tion [mol/L] | Type | Concent ration [mass%] |
| 2Na1-[6]1 | $Na^+$ | 2 | 1.000 | [6] | 1.000 | PC/ EC/ DEC =1/2/ 7 by volum e ratio | $NaPF_6$ | 1.000 | n/a | - |
| 3Na1-[6]1 | | 3 | | | | | | | | |
| 5Na1-[6]1 | | 5 | | | | | | | | |
| 8Na1-[6]1 | | 8 | | | | | | | | |
| 14Na1-[6]1 | | 14 | | | | | | | | |
| 18Na1-[6]1 | | 18 | | | | | | | | |
| 20Na1-[6]1 | | 20 | | | | | | | | |
| 21Na1-[6]1 | | 21 | | | | | | | | |
| 25Na1-[6]1 | | 25 | | | | | | | | |
| 27Na1-[6]1 | | 27 | | | | | | | | |

(Production of electrolyte solutions in which concentration of component (I) and concentration of component (II) are changed)

Electrolyte solutions were prepared in the same manner as for the electrolyte solution No. 1 Na1-[6]1 except that the concentration of the component (I) and the concentration of the component (II) were changed as shown in Table 10. In this case, the concentration of a free acid in each of the electrolyte solutions was about 20 ppm by mass.

[Table 10]

| Electrolyte solution No. | (I) | | | (II) | | (III) | (IV) | | Other additives or components | |
|---|---|---|---|---|---|---|---|---|---|---|
| | Counter cation | Imide anion compound No. | Concent ration [mass%] | Compo und No. | Concent ration [mass%] | Type | Type | Concentra tion [mol/L] | Type | Concent ration [mass%] |
| 0-[6]1 | n/a | | - | [6] | 1.000 | PC/EC/DEC=1/2/7 by volum e ratio | $NaPF_6$ | 1.000 | n/a | - |
| INa0.004-[6]1 | $Na^+$ | 1 | 0.004 | | | | | | | |
| 1Na0.03-[6]1 | | | 0.030 | | | | | | | |
| 1Na0.08-[6]1 | | | 0.080 | | | | | | | |
| INa0.3-[6]1 | | | 0.300 | | | | | | | |
| 1Na1-[6]1 | | | 1.000 | | | | | | | |
| 1Na2.5-[6]1 | | | 2.500 | | | | | | | |
| 1Na5-[6]1 | | | 5.000 | | | | | | | |
| 1Na8-[6]1 | | | 8.000 | | | | | | | |
| 1Na13- [6] 1 | | | 13.000 | | | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concent ration [mass%] | Compo und No. | Concent ration [mass%] | Type | Type | Concentra tion [mol/L] | Type | Concent ration [mass%] |
| 10Na0.5-[6]1 | | 10 | 0.500 | | | | | | | |
| 10Na1-[6]1 | | | 1.000 | | | | | | | |
| 10Na2.5-[6]1 | | | 2.500 | | | | | | | |
| 11Na0.5-[6]1 | | 11 | 0.500 | | | | | | | |
| 11Na1- [6] 1 | | | 1.000 | | | | | | | |
| 11Na2.5-[6]1 | | | 2.500 | | | | | | | |
| 15Na0.5-[6]1 | | 15 | 0.500 | | | | | | | |
| 15Na1-[6]1 | | | 1.000 | | | | | | | |
| 15Na2.5-[6]1 | | | 2.500 | | | | | | | |
| 1Na1-0 | | 1 | 1.000 | n/a | - | | | | | |
| 10Na1-0 | | 10 | | | | | | | | |
| 11Na1-0 | | 11 | | | | | | | | |
| 15Na1-0 | | 15 | | | | | | | | |
| 1Na1-[6] 0.008 | | 1 | 1.000 | [6] | 0.008 | | | | | |
| 1Na1-[6]0.05 | | | | | 0.050 | | | | | |
| 1Na1-[6]0.15 | | | | | 0.150 | | | | | |
| 1Na1-[6]2 | | | | | 2.000 | | | | | |
| 1Na1-[6]8 | | | | | 8.000 | | | | | |

(continued)

| Electrolyte solution No. | (I) | | | (II) | | (III) | (IV) | | Other additives or components | |
|---|---|---|---|---|---|---|---|---|---|---|
| | Counter cation | Imide anion compound No. | Concent ration [mass%] | Compo und No. | Concent ration [mass%] | Type | Type | Concentra tion [mol/L] | Type | Concent ration [mass%] |
| 1Na1-[6]11 | | | | | 11.000 | | | | | |
| 10Na1-[6]0.3 | | 10 | | | 0.300 | | | | | |
| 10Na1-[6]0.5 | | | | | 0.500 | | | | | |
| 11Na1-[6]0.3 | | 11 | | | 0.300 | | | | | |
| 11Na1-[6]0.5 | | | | | 0.500 | | | | | |
| 15Na1-[6]0.3 | | 15 | | | 0.300 | | | | | |
| 15Na1-[6]0.5 | | | | | 0.500 | | | | | |

[Examples 4-1 to 4-20 and Comparative Examples 4-1 to 4-8]

(Production of battery)

Cells were produced in the same manner as in Example 1-1 except that the electrolyte solutions shown in Table 8 were used and O3-type $NaNi_{0.5}Ti_{0.3}Mn_{0.2}O_2$ as the positive electrode material and hard carbon as the negative electrode material were used. The resultant batteries were evaluated in the same manner as in Example 1-1. In this case, the positive electrode body having $NaNi_{0.5}Ti_{0.3}Mn_{0.2}O_2$ as the positive electrode active material was produced by mixing 5 mass% of PVDF as a binder and 5 mass% of acetylene black as a conductive material with 90 mass% of $NaNi_{0.5}Ti_{0.3}Mn_{0.2}O_2$ powder and further adding NMP to the resultant mixture and applying the resultant paste onto aluminum foil and drying it. The negative electrode body having hard carbon as the negative electrode active material was produced by mixing 8 mass% of PVDF as a binder and 2 mass% of acetylene black as a conductive material with 90 mass% of hard carbon powder and further adding NMP to the resultant mixture and applying the resultant paste onto aluminum foil and drying it. The final charge voltage when evaluating the batteries was 4.25 V and the final discharge voltage was 1.7 V. The evaluation results are shown in Table 11.

[Table 11]

| | Electrolyte solution No. | Capacity retention rate at storage | Internal resistance characteristic after storage |
|---|---|---|---|
| Example 4-1 | 1Na1-[6]1 | 115 | 82 |
| Example 4-2 | 1Na1-[7]1 | 108 | 93 |
| Example 4-3 | 1Na1-[13]1 | 112 | 80 |
| Example 4-4 | 1Na1-[16]1 | 102 | 90 |
| Example 4-5 | 1Na1-[18]1 | 102 | 89 |
| Example 4-6 | 1Na1- [20] 1 | 108 | 87 |
| Example 4-7 | 1Na1-[21]1 | 105 | 93 |
| Example 4-8 | 1Na1-[23]1 | 110 | 81 |
| Example 4-9 | 10Na1-[6]1 | 108 | 83 |
| Example 4-10 | 10Na1-[7]1 | 107 | 92 |
| Example 4-11 | 10Na1- [16] 1 | 107 | 90 |
| Example 4-12 | 10Na1-[23]1 | 111 | 85 |
| Example 4-13 | 11Na1-[6]1 | 109 | 85 |
| Example 4-14 | 11Na1- [7] 1 | 101 | 93 |
| Example 4-15 | 11Na1-[16]1 | 102 | 90 |
| Example 4-16 | 11Na1-[23]1 | 116 | 84 |
| Example 4-17 | 15Na1-[6]1 | 110 | 83 |
| Example 4-18 | 15Na1-[7]1 | 104 | 87 |
| Example 4-19 | 15Na1-[16]1 | 104 | 85 |
| Example 4-20 | 15Na1-[23]1 | 112 | 81 |
| Comparative Example 4-1 | 0-[6]1-NaFSI1 | 100 | 100 |
| Comparative Example 4-2 | 0-[7]1-NaFSI1 | 100 | 100 |
| Comparative Example 4-3 | 0-[13]1-NaFSI1 | 100 | 100 |

(continued)

| | Electrolyte solution No. | Capacity retention rate at storage | Internal resistance characteristic after storage |
|---|---|---|---|
| Comparative Example 4-4 | 0-[16]1-NaFSI1 | 100 | 100 |
| Comparative Example 4-5 | 0-[18]1-NaFSI1 | 100 | 100 |
| Comparative Example 4-6 | 0-[20]1-NaFSI1 | 100 | 100 |
| Comparative Example 4-7 | 0-[21]1-NaFSI1 | 100 | 100 |
| Comparative Example 4-8 | 0-[23]1-NaFSI1 | 100 | 100 |

Evaluation results of the Examples are relative values when evaluation results of the Comparative Examples using the corresponding component (II) are designated as 100. It is desired that the "capacity retention rate at storage" have a higher value, and it is desired that the "internal resistance characteristic after storage" have a lower value.

From the evaluation results in Table 11, it was confirmed that in the case where the component (I) and the component (II) of the present invention were used in combination, the high temperature storage characteristic (capacity retention rate at storage) and the internal resistance characteristic after storage can be improved in a balanced manner compared to the case where NaFSI and the component (II) were used in combination. It was confirmed that in the Examples in which the compounds of the formulae [6], [13], [20] and [23] were used as the component (II), both the high temperature storage characteristic and internal resistance characteristic after storage can be improved. It was confirmed that particularly in the Examples in which the compounds of the formulae [6], [13] and [23] were used, the improvement effect described above was large. It was confirmed that in the case where the compound of the formula [14] was used, the improvement effect was also large, although this case is not described as an Example.

[Examples 5-1 to 5-10]

Cells were produced in the same manner as in Example 4-1 except that the electrolyte solutions shown in Table 9 were used, and the capacity retention rate at storage and the internal resistance characteristic after storage were evaluated. The evaluation results are shown in Table 12.

[Table 12]

| | Electrolyte solution No. | Capacity retention rate at storage | Internal resistance characteristic after storage |
|---|---|---|---|
| Example 4-1 | 1Na1-[6]1 | 114 | 81 |
| Example 5-1 | 2Na1-[6]1 | 106 | 84 |
| Example 5-2 | 3Na1-[6]1 | 105 | 84 |
| Example 5-3 | 5Na1-[6]1 | 103 | 83 |
| Example 5-4 | 8Na1-[6]1 | 105 | 90 |
| Example 4-9 | 10Na1-[6]1 | 113 | 82 |
| Example 4-13 | 1Na1-[6]1 | 108 | 85 |
| Example 5-5 | 14Na1-[6]1 | 109 | 86 |
| Example 4-17 | 15Na1-[6]1 | 110 | 85 |
| Example 5-6 | 18Na1-[6]1 | 101 | 93 |
| Example 5-7 | 20Na1-[6]1 | 104 | 88 |
| Example 5-8 | 21Na1-[6]1 | 105 | 86 |

(continued)

| | Electrolyte solution No. | Capacity retention rate at storage | Internal resistance characteristic after storage |
|---|---|---|---|
| Example 5-9 | 25Na1-[6]1 | 102 | 88 |
| Example 5-10 | 27Na1-[6]1 | 101 | 97 |
| Comparative Example 4-1 | 0-[6]1-NaFSI1 | 100 | 100 |

Evaluation results of each Example are relative values when evaluation results of Comparative Example 4-1 are considered 100. It is desired that the "capacity retention rate at storage" have a higher value, and it is desired that the "internal resistance characteristics after storage" have a lower value.

From the evaluation results in Table 12, it was verified that in cases where the component (I) and the component (II) of the present invention were used in combination, the high temperature storage characteristic (capacity retention rate at storage) and the internal resistance characteristic after storage can be improved in a balanced manner compared to the case where NaFSI and the component (II) were used in combination. In this case, when the component (I) having more P-F bonds and S-F bonds was used, "internal resistance characteristic after storage" tends to be better.

[Examples 6-1 to 6-14 and Comparative Example 6-1]

Cells were produced in the same manner as in Example 4-1 except that the electrolyte solutions shown in Table 10 were used, and the capacity retention rate at storage and internal resistance characteristic after storage were evaluated. The evaluation results are shown in Table 13.

[Table 13]

| | Electrolyte solution No. | Capacity retention rate at storage | Internal resistance characteristic after storage |
|---|---|---|---|
| Comparative Example 6-1 | 0-[6]1 | 100 | 100 |
| Example 6-1 | 1Na0.004-[6]1 | 100 | 99 |
| Example 6-2 | 1Na0.03-[6]1 | 101 | 97 |
| Example 6-3 | 1Na0.08-[6]1 | 103 | 95 |
| Example 6-4 | 1Na0.3-[6]1 | 107 | 90 |
| Example 4-1 | 1Na1-[6]1 | 110 | 83 |
| Example 6-5 | 1Na2.5-[6]1 | 115 | 81 |
| Example 6-6 | 1Na5-[6]1 | 109 | 83 |
| Example 6-7 | 1Na8-[6]1 | 107 | 86 |
| Example 6-8 | 1Na13-[6]1 | 103 | 91 |
| Example 6-9 | 10Na0.5-[6]1 | 107 | 83 |
| Example 4-9 | 10Na1-[6]1 | 110 | 83 |
| Example 6-10 | 10Na2.5-[6]1 | 109 | 84 |
| Example 6-11 | 11Na0.5-[6]1 | 103 | 87 |
| Example 4-13 | 11Na1-[6]1 | 106 | 86 |
| Example 6-12 | HNa2.5- [6] 1 | 108 | 84 |
| Example 6-13 | 15Na0.5-[6]1 | 109 | 83 |
| Example 4-17 | 15Na1-[6]1 | 114 | 80 |
| Example 6-14 | 15Na2.5-[6]1 | 111 | 82 |

Evaluation results of the Examples are relative values when evaluation results of Comparative Example 6-1 are designated as 100. It is desired that the "capacity retention rate at storage" have a higher value, and it is desired that the "internal resistance characteristic after storage" have a lower value.

From the evaluation results in Table 13, it was confirmed that in the case where the component (I) and the component (II) of the present invention were used in combination, the high temperature storage characteristic (capacity retention rate at storage) and the internal resistance characteristic after storage can be improved in a balanced manner compared to Comparative Example 6-1 to which the component (I) was not added. It was confirmed that in the Examples in which the amount of the component (I) added is in a suitable range of "0.005 to 12.0 mass%" with respect to the total amount of the components (I) to (IV), both the capacity retention rate at storage and internal resistance characteristic after storage can be well improved. It was also confirmed that in the Examples in which the amount of the component (I) added is in a more suitable range of 0.05 to 6.0 mass%, the effect of addition of the above component (I) was larger, and in the Examples in which the amount of the component (I) added is in a particularly suitable range of 0.1 to 3.0 mass%, the effect of addition of the above component (I) was particularly larger.

[Examples 6-15 to 6-26 and Comparative Examples 6-2 to 6-5]

Cells were produced in the same manner as in Example 4-1 except that the electrolyte solutions shown in Table 10 were used, and the capacity retention rate at storage and the internal resistance characteristic after storage were evaluated. The evaluation results are shown in Table 14.

[Table 14]

| | Electrolyte solution No. | Capacity retention rate at storage | Internal resistance characteristic after storage |
|---|---|---|---|
| Comparative Example 6-2 | 1Na1-0 | 100 | 100 |
| Comparative Example 6-3 | 10Na1-0 | 100 | 100 |
| Comparative Example 6-4 | 11Na1-0 | 100 | 100 |
| Comparative Example 6-5 | 15Na1-0 | 100 | 100 |
| Example 6-15 | 1Na1-[6]0.008 | 99 | 98 |
| Example 6-16 | 1Na1-[6]0.05 | 101 | 97 |
| Example 6-17 | 1Na1-[6]0.15 | 106 | 92 |
| Example 4-1 | 1Na1-[6]1 | 116 | 81 |
| Example 6-18 | 1Na1-[6]2 | 115 | 82 |
| Example 6-19 | 1Na1-[6]8 | 115 | 84 |
| Example 6-20 | 1Na1-[6]11 | 110 | 85 |
| Example 6-21 | 10Na1-[6]0.3 | 105 | 88 |
| Example 6-22 | 10Na1-[6]0.5 | 107 | 84 |
| Example 4-9 | 10Na1-[6]1 | 111 | 82 |
| Example 6-23 | 11Na1-[6]0.3 | 101 | 89 |
| Example 6-24 | 11Na1-[6]0.5 | 104 | 87 |
| Example 4-13 | 11Na1-[6]1 | 109 | 84 |
| Example 6-25 | 15Na1-[6]0.3 | 105 | 89 |
| Example 6-26 | 15Na1-[6]0.5 | 107 | 86 |
| Example 4-17 | 15Na1- [6] 1 | 113 | 82 |

Evaluation results of the Examples are relative values when evaluation results of the Comparative Examples using the corresponding component (I) are designated as 100. It is desired that the "capacity retention rate at storage" have a higher value, and it is desired that the "internal resistance characteristic after storage" have a lower value.

From the evaluation results in Table 14, it was confirmed that in the case where the component (I) and the component (II) of the present invention were used in combination, the high temperature storage characteristic (capacity retention rate at storage) and the internal resistance characteristic after storage can be improved in a balanced manner compared to the Comparative Examples to which the component (II) was not added. It was confirmed that in the Examples in which the amount of the component (II) added is in a suitable range of "0.01 to 10.0 mass%" with respect to the total amount of the components (I) to (IV), both the capacity retention rate at storage and internal resistance characteristic after storage can be well improved. It was also confirmed that in the Examples in which the amount of the component (II) added is in a more suitable range of 0.1 to 5.0 mass%, the effect of addition of the above was larger, and in Examples in which the amount of the component (II) added is in a particularly suitable range of 0.2 to 1.5 mass%, the effect of addition of the above component (II) was particularly larger.

## Claims

**1.** A nonaqueous electrolyte solution, comprising:

(I) at least one selected from salts having an imide anion represented by the general formulae [1] and [2] below;
(II) a sulfonate compound represented by the general formula [3] below;
(III) a nonaqueous organic solvent or an ionic liquid; and
(IV) a solute.

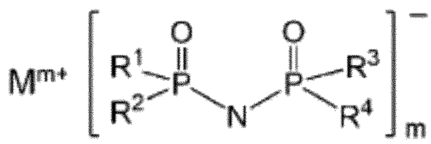

[1]

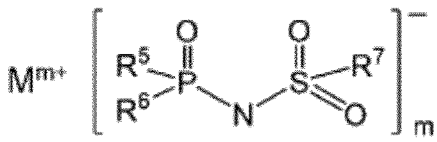

[2]

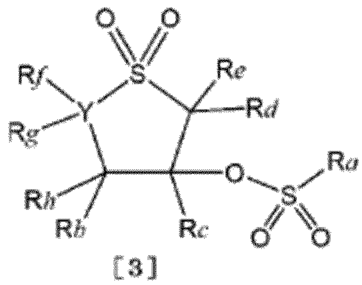

[3]

wherein,

in the general formula [1],
$R^1$ to $R^4$ are each independently a fluorine atom or an organic group selected from a C1-10 linear alkyl group, a C3-10 branched alkyl group, a C1-10 linear alkoxy group, a C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group and a C6-10 aryloxy group, and a fluorine atom, an oxygen atom or an unsaturated bond can exist in the organic group, with a proviso that at least one of $R^1$ to $R^4$ is a fluorine atom,
$M^{m+}$ is an alkali metal cation, an alkaline earth metal cation or an onium cation, and
m is an integer which is the same as a valence of a corresponding cation;

in the general formula [2],
$R^5$ to $R^7$ are each independently a fluorine atom or an organic group selected from a C1-10 linear alkyl group, a C3-10 branched alkyl group, a C1-10 linear alkoxy group, a C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group and a C6-10 aryloxy group, and a fluorine atom, an oxygen atom or an unsaturated bond can also exist in the organic group, with a proviso that at least one of $R^5$ to $R^7$ is a fluorine atom,
$M^{m+}$ is an alkali metal cation, an alkaline earth metal cation or an onium cation, and
m is an integer which is the same as a valence of a corresponding cation; and
in the formula [3],
$R_a$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom,
$R_b$ to $R_h$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom, and
Y is an oxygen atom or a carbon atom, and when Y is an oxygen atom, $R_f$ and $R_g$ do not exist.

2. The nonaqueous electrolyte solution according to claim 1, wherein in the general formulae [1] and [2], all of $R^1$ to $R^7$ are a fluorine atom.

3. The nonaqueous electrolyte solution according to claim 1, wherein in the general formula [1], at least one of $R^1$ to $R^4$ is a fluorine atom, and at least one of remaining $R^1$ to $R^4$ is a group selected from an alkyl group, an alkenyl group, an alkynyl group, an aryl group, an alkoxy group, an alkenyloxy group, an alkynyloxy group, and an aryloxy group, which have 6 or less carbon atoms and may comprise a fluorine atom.

4. The nonaqueous electrolyte solution according to claim 1 or 3, wherein in the general formula [1], at least one of $R^1$ to $R^4$ is a fluorine atom, and at least one of remaining $R^1$ to $R^4$ is a group selected from a methyl group, a methoxy group, an ethyl group, an ethoxy group, an n-propyl group, an isopropyl group, an n-propoxy group, an isopropoxy group, a vinyl group, an allyl group, an allyloxy group, an ethynyl group, a 2-propynyl group, a 2-propynyloxy group, a phenyl group, a phenoxy group, a trifluoromethyl group, a trifluoromethoxy group, a 2,2-difluoroethyl group, a 2,2-difluoroethoxy group, a 2,2,2-trifluoroethyl group, a 2,2,2-trifluoroethoxy group, a 2,2,3,3-tetrafluoropropyl group, a 2,2,3,3-tetrafluoropropoxy group, a 1,1,1,3,3,3-hexafluoroisopropyl group and a 1,1,1,3,3,3-hexafluoroisopropoxy group.

5. The nonaqueous electrolyte solution according to claim 1, wherein in the general formula [2], at least one of $R^5$ to $R^7$ is a fluorine atom, and at least one of remaining $R^5$ to $R^7$ is a group selected from an alkyl group, an alkenyl group, an alkynyl group, an aryl group, an alkoxy group, an alkenyloxy group, an alkynyloxy group and an aryloxy group, which have 6 or less carbon atoms and may comprise a fluorine atom.

6. The nonaqueous electrolyte solution according to claim 1 or 5, wherein in the general formula [2], at least one of $R^5$ to $R^7$ is a fluorine atom, and at least one of remaining $R^5$ to $R^7$ is a group selected from a methyl group, a methoxy group, an ethyl group, an ethoxy group, an n-propyl group, an isopropyl group, an n-propoxy group, an isopropoxy group, a vinyl group, an allyl group, an allyloxy group, an ethynyl group, a 2-propynyl group, a 2-propynyloxy group, a phenyl group, a phenoxy group, a trifluoromethyl group, a trifluoromethoxy group, a 2,2-difluoroethyl group, a 2,2-difluoroethoxy group, a 2,2,2-trifluoroethyl group, a 2,2,2-trifluoroethoxy group, a 2,2,3,3-tetrafluoropropyl group, a 2,2,3,3-tetrafluoropropoxy group, a 1,1,1,3,3,3-hexafluoroisopropyl group, and a 1,1,1,3,3,3-hexafluoroisopropoxy group.

7. The nonaqueous electrolyte solution according to any one of claims 1 to 6, wherein a counter cation of said salt having an imide anion represented by the general formulae [1] and [2] is selected from a group consisting of a lithium ion, a sodium ion, a potassium ion and a tetraalkylammonium ion.

8. The nonaqueous electrolyte solution according to claim 1, wherein a negative ion of said salt having an imide anion and being represented by the general formula [1] is selected from the group consisting of the following negative ions:

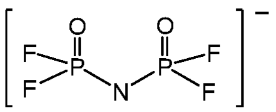
Compound No.1

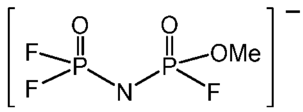
Compound No. 2

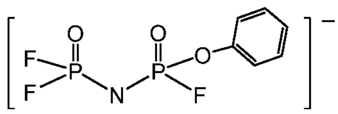
Compound No.3

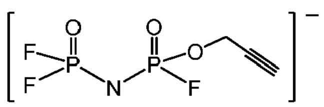
Compound No.4

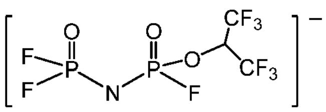
Compound No.5

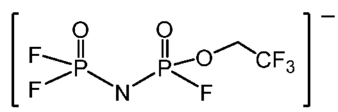
Compound No.6

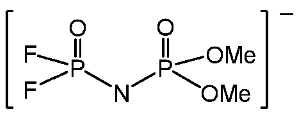
Compound No.7

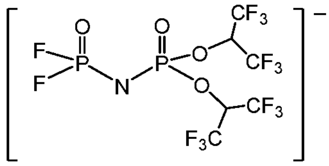
Compound No.8

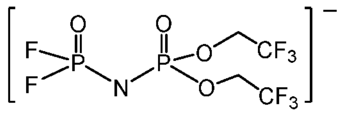
Compound No.9

9. The nonaqueous electrolyte solution according to claim 8, wherein the negative ion of said salt having an imide anion and being represented by the general formula [1] is selected from the group consisting of the compound Nos. 1, 2, 3, and 5.

10. The nonaqueous electrolyte solution according to claim 1, wherein a negative ion of said salt having an imide anion and being represented by the general formula [2] is selected from the group consisting of the following negative ions:

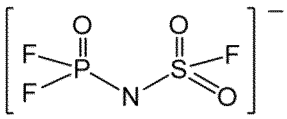
Compound No. 10

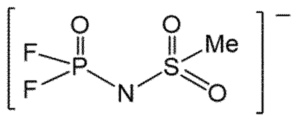
Compound No. 11

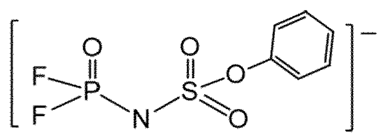
Compound No. 12

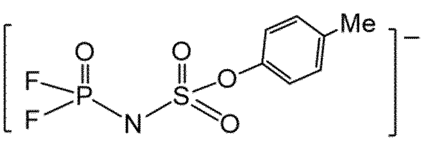
Compound No. 13

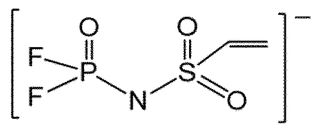
Compound No. 14

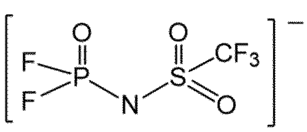
Compound No. 15

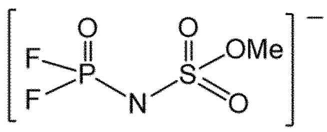
Compound No. 16

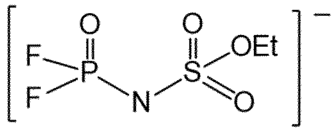
Compound No. 17

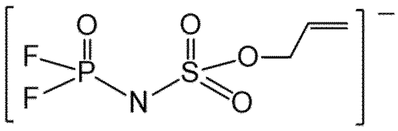

Compound No. 18

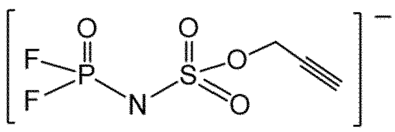

Compound No. 19

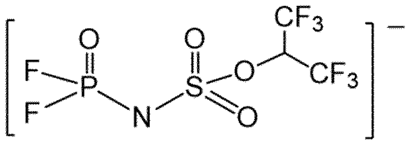

Compound No. 20

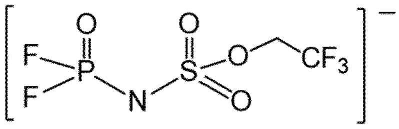

Compound No. 21

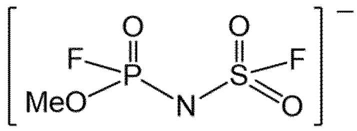

Compound No. 22

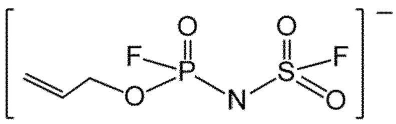

Compound No. 23

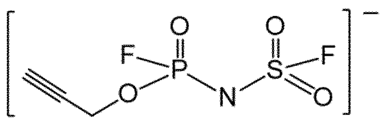

Compound No. 24

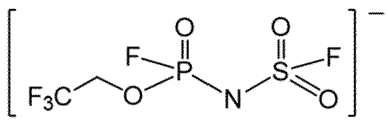

Compound No. 25

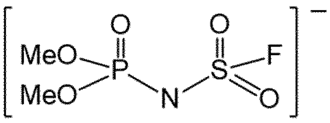

Compound No. 26

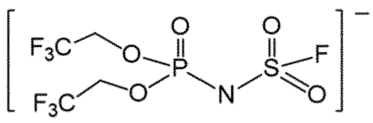

Compound No. 27

**11.** The nonaqueous electrolyte solution according to claim 10, wherein the negative ion of said salt having an imide anion and being represented by the general formula [2] is selected from the group consisting of the compound Nos. 10, 11, 14, and 15.

**12.** The nonaqueous electrolyte solution according to any one of claims 1 to 11, wherein $R_a$ of the general formula [3] is an F atom, a Cl atom, a Br atom, an I atom, a methyl group, a methoxy group, an ethyl group, an ethoxy group, an n-propyl group, an n-propoxy group, an isopropyl group, an isopropoxy group, a 2-propenyl group, a 2-propenyloxy group, a 2-propynyl group, an n-butyl group, a tert-butyl group, a trifluoromethyl group, a trifluoroethyl group, a trifluoroethoxy group, a phenyl group, a phenoxy group, a naphthyl group, a perfluorophenyl group, a perfluorophenoxy group, a pyrrolyl group or a pyridinyl group, and the $R_b$ to $R_h$ are each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

**13.** The nonaqueous electrolyte solution according to any one of claims 1 to 11, wherein the sulfonate compound represented by the general formula [3] is a sulfonate compound represented by a general formula [4] or [5] below.

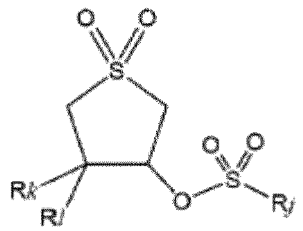

[4]

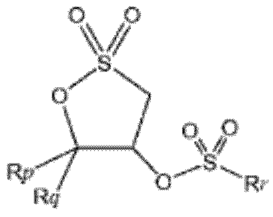

[5]

wherein

in the formula [4],
$R_j$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom, and
$R_k$ and $R_l$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom; and
in the formula [5],
$R_r$ is a halogen atom, a C1-20 alkyl group which may be substituted with a halogen atom, a C5-20 cycloalkyl group which may be substituted with a halogen atom, a C2-20 alkenyl group which may be substituted with a halogen atom, a C2-20 alkynyl group which may be substituted with a halogen atom, a C6-40 aryl group which may be substituted with a halogen atom, a C2-40 heteroaryl group which may be substituted with a halogen atom, a C1-20 alkoxy group which may be substituted with a halogen atom, a C5-20 cycloalkoxy group which may be substituted with a halogen atom, a C2-20 alkenyloxy group which may be substituted with a halogen atom, a C2-20 alkynyloxy group which may be substituted with a halogen atom, a C6-40 aryloxy group which may be substituted with a halogen atom, or a C2-40 heteroaryloxy group which may be substituted with a halogen atom, and $R_p$ and $R_q$ are each independently a hydrogen atom, a halogen atom, a C1-20 alkyl group which may be substituted with a halogen atom, a C2-20 alkenyl group which may be substituted with a halogen atom, a C2-20 alkynyl group which may be substituted with a halogen atom, a C1-20 alkoxy group which may be substituted with a halogen atom, a C5-20 cycloalkyl group which may be substituted with a halogen atom, a C6-40 aryl group which may be substituted with a halogen atom, or a C2-40 heteroaryl group which may be substituted with a halogen atom.

**14.** The nonaqueous electrolyte solution according to claim 13, wherein both $R_k$ and $R_l$ of the formula [4] are a hydrogen atom.

**15.** The nonaqueous electrolyte solution according to claim 13, wherein both $R_p$ and $R_q$ of the formula [5] are a hydrogen atom.

**16.** The nonaqueous electrolyte solution according to claim 13, wherein $R_j$ of the general formula [4] is an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a methoxy group, a 2-propynyl group, a phenyl group, a naphthyl group, a trifluorophenyl group, a pyrrolyl group or a pyridinyl group, and the $R_k$ and $R_l$ are each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

**17.** The nonaqueous electrolyte solution according to claim 13, wherein $R_r$ of the general formula [5] is an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a methoxy group, a 2-propynyl group, a phenyl group, a naphthyl group, a trifluorophenyl group, a pyrrolyl group or a pyridinyl group, and the $R_p$ and $R_q$ are each independently a hydrogen atom, an F atom, a Cl atom, a Br atom, an I atom, a methyl group, an ethyl group, an n-propyl group, an isopropyl group, an n-butyl group, a tert-butyl group, a trifluoromethyl group, a trifluoroethyl group, a phenyl group, a naphthyl group, a trifluorophenyl group, a pyrrolyl group or a pyridinyl group.

**18.** The nonaqueous electrolyte solution according to any one of claims 1 to 13, 15 and 17, wherein the sulfonate compound represented by the general formula [3] is at least one selected from the compounds represented by formulae [6] to [23] below.

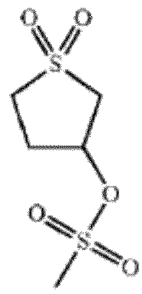
[6]

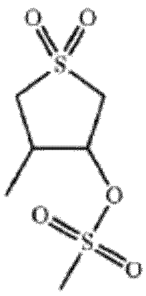
[7]

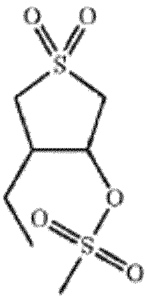
[8]

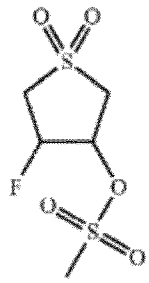
[9]

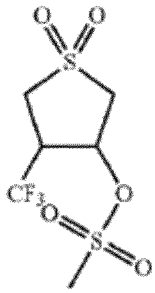
[10]

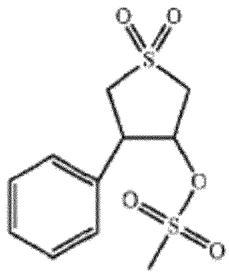
[11]

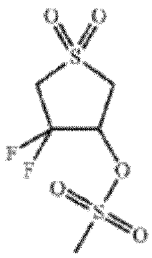
[12]

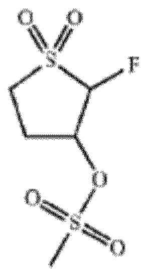
[13]

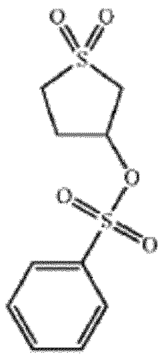
[14]

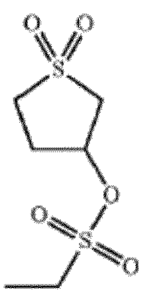
[15]

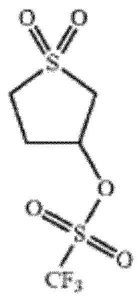
[16]

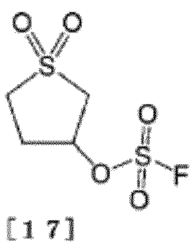
[17]

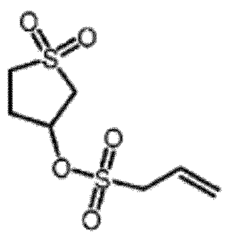
[18]

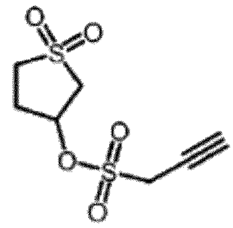
[19]

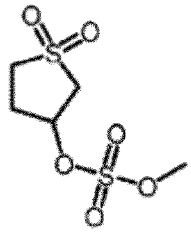
[20]

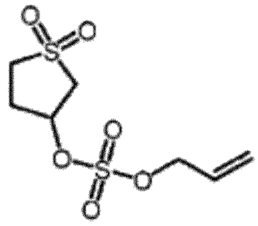
[21]

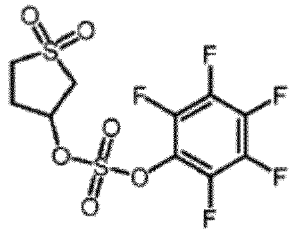
[22]

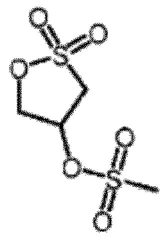
[23]

19. The nonaqueous electrolyte solution according to claim 18, wherein the sulfonate compound represented by the general formula [3] is selected from the compounds represented by formulae [6], and [13] to [23].

20. The nonaqueous electrolyte solution according to claim 19, wherein the sulfonate compound represented by the general formula [3] is selected from the compounds represented by formulae [6], [13], [14], [16], [17], [19], [20] and [23] .

21. The nonaqueous electrolyte solution according to claim 19, wherein the sulfonate compound represented by the general formula [3] is selected from the compounds represented by formulae [6], [13], [14], [17] and [23].

22. The nonaqueous electrolyte solution according to any one of claims 1 to 21, wherein the amount of the component (I) with respect to a total amount of the components (I) to (IV) is 0.005 to 12.0 mass%.

23. The nonaqueous electrolyte solution according to any one of claims 1 to 22, wherein the amount of the component (II) with respect to a total amount of the components (I) to (IV) is 0.01 to 10.0 mass%.

24. The nonaqueous electrolyte solution according to claim 1, further comprising at least one additive selected from the group consisting of cyclohexylbenzene, biphenyl, t-butylbenzene, t-amylbenzene, fluorobenzene, vinylene carbonate, vinylethylene carbonate, difluoroanisole, fluoroethylene carbonate, 1,6-diisocyanatohexane, ethynylethylene carbonate, trans-difluoroethylene carbonate, propane sultone, propene sultone, dimethylvinylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, (ethoxy)pentafluorocyclotriphosphazene, methanesulfonyl fluoride, lithium acrylate, sodium acrylate, lithium methacrylate, sodium methacrylate, lithium methyl sulfate, sodium methyl sulfate, lithium ethyl sulfate, a gelling agent, and a cross-linking polymer.

25. The nonaqueous electrolyte solution according to claim 1, wherein a total of alkali metal salts comprises four types or more of alkali metal salts.

26. The nonaqueous electrolyte solution according to claim 1, wherein a total of alkali metal salts comprises five types or more of alkali metal salts.

27. A nonaqueous electrolyte secondary battery, comprising at least a positive electrode, a negative electrode, and a nonaqueous electrolyte solution according to any one of claims 1 to 26.

28. The nonaqueous electrolyte secondary battery according to claim 27, wherein a material of the negative electrode is selected from the group consisting of a lithium metal, an alloy of lithium metal and another metal, an intermetallic compound, a carbon material, a metal oxide, a metal nitride, an activated carbon, and a conductive polymer.

**29.** The nonaqueous electrolyte secondary battery according to claim 28, wherein said carbon material is artificial graphite or natural graphite.

**30.** The nonaqueous electrolyte secondary battery according to claim 27, wherein an active material of said negative electrode comprises graphite and $SiO_x$.

**31.** The nonaqueous electrolyte secondary battery according to claim 28, wherein said carbon material is easily graphitizable carbon, hardly-graphitizable carbon (hard carbon) having a plane spacing of the (002) plane of 0.37 nm or more, or graphite having a plane spacing of the (002) plane of 0.34 nm or less.

**32.** The nonaqueous electrolyte secondary battery according to claim 27, wherein a material of said positive electrode comprises at least one selected from the group consisting of lithium-containing transition metal composite oxides, lithium-containing transition metal composite oxides wherein a plurality of transition metals are mixed, lithium-containing transition metal composite oxides wherein a part of the transition metals is replaced with a metal other than the transition metals, phosphoric acid compounds of transition metals, $TiO_2$, $V_2O_5$ MoOs, $TiS_2$, FeS, conductive polymers, activated carbon, radical generating polymers and carbon materials.

**33.** The nonaqueous electrolyte secondary battery according to claim 27, wherein a material of said positive electrode comprises at least one selected from the group consisting of lithium-containing transition metal composite oxides, and lithium-containing transition metal composite oxides wherein a plurality of transition metals selected from Co, Mn and Ni are mixed.

**34.** The nonaqueous electrolyte secondary battery according to claim 32 or 33, wherein said lithium-containing transition metal composite oxide is selected from the group consisting of $LiCoO_2$, $LiNiO_2$, $LiMnO_2$, $LiMn_2O_4$, $LiNi_{0.8}Co_{0.1}Mn_{0.1}O_2$ and $NaNi_{0.5}Ti_{0.3}Mn_{0.2}O_2$.

**35.** The nonaqueous electrolyte secondary battery according to claim 32, wherein said phosphoric acid compound of transition metals is selected from the group consisting of $LiFePO_4$, $LiCoPO_4$ and $LiMnPO_4$.

**36.** The nonaqueous electrolyte secondary battery according to claim 32, wherein said conductive polymer is selected from the group consisting of polyacetylene, polyparaphenylene, polyaniline and polypyrrole.

**37.** The nonaqueous electrolyte secondary battery according to claim 27, wherein a material of said negative electrode comprises a conductive material selected from the group consisting of acetylene black, Ketjen Black, carbon fiber and graphite, and a binder selected from the group consisting of polytetrafluoroethylene, polyvinylidene difluoride, SBR resin and polyimide.

**38.** The nonaqueous electrolyte secondary battery according to claim 27, wherein a material of said positive electrode comprises a conductive material selected from the group consisting of acetylene black, Ketjen Black, carbon fiber and graphite, and a binder selected from the group consisting of polytetrafluoroethylene, polyvinylidene difluoride, SBR resin and polyimide.

**39.** The nonaqueous electrolyte secondary battery according to claim 27 further comprising a separator, wherein said separator is a nonwoven fabric or porous sheet made from polypropylene, polyethylene, paper or glass fiber.

**40.** The nonaqueous electrolyte secondary battery according to claim 27, wherein a material of the positive electrode comprises $LiNi_{0.8}Co_{0.1}Mn_{0.1}O_2$ or $NaNi_{0.5}Ti_{0.3}Mn_{0.2}O_2$.

**41.** The nonaqueous electrolyte secondary battery according to claim 27, wherein a material of said negative electrode comprises graphite containing silicon or hard carbon.

**Patentansprüche**

**1.** Nicht-wässrige Elektrolytlösung, umfassend:

(I) mindestens eines, welches aus durch die nachstehenden allgemeinen Formeln [1] und [2] dargestellten Salzen, die ein Imid-Anion aufweisen, ausgewählt ist;

(II) eine durch die nachstehende allgemeine Formel [3] dargestellte Sulfonatverbindung;
(III) ein nicht-wässriges organisches Lösemittel oder eine ionische Flüssigkeit; und
(IV) einen gelösten Stoff,

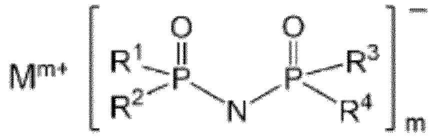
[1]

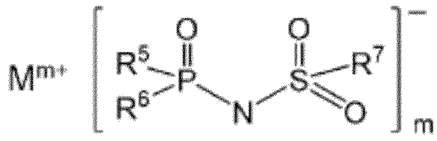
[2]

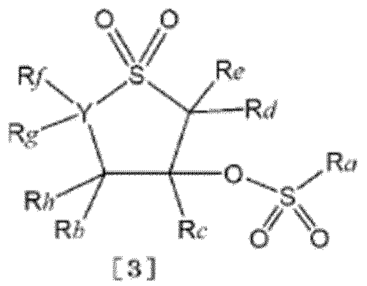
[3]

wobei

in der allgemeinen Formel [1]
$R^1$ bis $R^4$ jeweils unabhängig voneinander ein Fluoratom oder eine organische Gruppe sind, welche ausgewählt ist aus einer linearen C1-10-Alkylgruppe, einer verzweigten C3-10-Alkylgruppe, einer linearen C1-10-Alkoxygruppe, einer verzweigten C3-10-Alkoxygruppe, einer C2-10-Alkenylgruppe, einer C2-10-Alkenyloxygruppe, einer C2-10-Alkinylgruppe, einer C2-10-Alkinyloxygruppe, einer C3-10-Cycloalkylgruppe, einer C3-10-Cycloalkoxygruppe, einer C3-10-Cycloalkenylgruppe, einer C3-10-Cycloalkenyloxygruppe, einer C6-10-Arylgruppe und einer C6-10-Aryloxygruppe, und in der organischen Gruppe ein Fluoratom, ein Sauerstoffatom oder eine ungesättigte Bindung vorhanden sein kann, mit einer Maßgabe, dass mindestens eines von $R^1$ bis $R^4$ ein Fluoratom ist,
$M^{m+}$ ein Alkalimetallkation, ein Erdalkalimetallkation oder ein Onium-Kation ist, und
m eine ganze Zahl ist, die gleich einer Wertigkeit eines entsprechenden Kations ist;
in der allgemeinen Formel [2]
$R^5$ bis $R^7$ jeweils unabhängig voneinander ein Fluoratom oder eine organische Gruppe sind, welche ausgewählt ist aus einer linearen C1-10-Alkylgruppe, einer verzweigten C3-10-Alkylgruppe, einer linearen C1-10-Alkoxygruppe, einer verzweigten C3-10-Alkoxygruppe, einer C2-10-Alkenylgruppe, einer C2-10-Alkenyloxygruppe, einer C2-10-Alkinylgruppe, einer C2-10-Alkinyloxygruppe, einer C3-10-Cycloalkylgruppe, einer C3-10-Cycloalkoxygruppe, einer C3-10-Cycloalkenylgruppe, einer C3-10-Cycloalkenyloxygruppe, einer C6-10-Arylgruppe und einer C6-10-Aryloxygruppe, und in der organischen Gruppe auch ein Fluoratom, ein Sauerstoffatom oder eine ungesättigte Bindung vorhanden sein kann, mit einer Maßgabe, dass mindestens eines von $R^5$ bis $R^7$ ein Fluoratom ist,
$M^{m+}$ ein Alkalimetallkation, ein Erdalkalimetallkation oder ein Onium-Kation ist, und
m eine ganze Zahl ist, die gleich einer Wertigkeit eines entsprechenden Kations ist; und
in der Formel [3]
$R_a$ ein Halogenatom, eine C1-20-Alkylgruppe, die mit einem Halogenatom substituiert sein kann, eine C5-20-Cycloalkylgruppe, die mit einem Halogenatom substituiert sein kann, eine C2-20-Alkenylgruppe, die mit einem Halogenatom substituiert sein kann, eine C2-20-Alkinylgruppe, die mit einem Halogenatom substituiert sein kann, eine C6-40-Arylgruppe, die mit einem Halogenatom substituiert sein kann, eine C2-40-Heteroarylgruppe, die mit einem Halogenatom substituiert sein kann, eine C1-20-Alkoxygruppe, die mit einem Halogenatom substituiert sein kann, eine C5-20-Cycloalkoxygruppe, die mit einem Halogenatom

substituiert sein kann, eine C2-20-Alkenyloxygruppe, die mit einem Halogenatom substituiert sein kann, eine C2-20-Alkinyloxygruppe, die mit einem Halogenatom substituiert sein kann, eine C6-40-Aryloxygruppe, die mit einem Halogenatom substituiert sein kann, oder eine C2-40-Heteroaryloxygruppe, die mit einem Halogenatom substituiert sein kann, ist,

$R_b$ bis $R_h$ jeweils unabhängig voneinander ein Wasserstoffatom, ein Halogenatom, eine C1-20-Alkylgruppe, die mit einem Halogenatom substituiert sein kann, eine C2-20-Alkenylgruppe, die mit einem Halogenatom substituiert sein kann, eine C2-20-Alkinylgruppe die mit einem Halogenatom substituiert sein kann, eine C1-20-Alkoxygruppe, die mit einem Halogenatom substituiert sein kann, eine C5-20-Cycloalkylgruppe, die mit einem Halogenatom substituiert sein kann, eine C6-40-Arylgruppe, die mit einem Halogenatom substituiert sein kann, oder eine C2-40-Heteroarylgruppe, die mit einem Halogenatom substituiert sein kann, sind, und

Y ein Sauerstoffatom oder ein Kohlenstoffatom ist, und, wenn Y ein Sauerstoffatom ist, $R_f$ und $R_g$ nicht vorhanden sind.

**2.** Nicht-wässrige Elektrolytlösung nach Anspruch 1, wobei in den allgemeinen Formeln [1] und [2], alle von $R^1$ bis $R^7$ ein Fluoratom sind.

**3.** Nicht-wässrige Elektrolytlösung nach Anspruch 1, wobei in der allgemeinen Formel [1] mindestens eines von $R^1$ bis $R^4$ ein Fluoratom ist, und mindestens eines der verbleibenden $R^1$ bis $R^4$ eine Gruppe ist, welche ausgewählt ist aus einer Alkylgruppe, einer Alkenylgruppe, einer Alkinylgruppe, einer Arylgruppe, einer Alkoxygruppe, einer Alkenyloxygruppe, einer Alkinyloxygruppe und einer Aryloxygruppe, die 6 oder weniger Kohlenstoffatome aufweisen und ein Fluoratom umfassen können.

**4.** Nicht-wässrige Elektrolytlösung nach Anspruch 1 oder 3, wobei in der allgemeinen Formel [1] mindestens eines von $R^1$ bis $R^4$ ein Fluoratom ist, und mindestens eines der verbleibenden $R^1$ bis $R^4$ eine Gruppe ist, welche ausgewählt ist aus einer Methylgruppe, einer Methoxygruppe, einer Ethylgruppe, einer Ethoxygruppe, einer n-Propylgruppe, einer Isopropylgruppe, einer n-Propoxygruppe, einer Isopropoxygruppe, einer Vinylgruppe, einer Allylgruppe, einer Allyloxygruppe, einer Ethinylgruppe, einer 2-Propinylgruppe, einer 2-Propinyloxygruppe, einer Phenylgruppe, einer Phenoxygruppe, einer Trifluormethylgruppe, einer Trifluormethoxygruppe, einer 2,2-Difluorethylgruppe, einer 2,2-Difluorethoxygruppe, einer 2,2,2-Trifluorethylgruppe, einer 2,2,2-Trifluorethoxygruppe, einer 2,2,3,3-Tetrafluoropropylgruppe, einer 2,2,3,3-Tetrafluoropropoxygruppe, einer 1,1,1,3,3,3-Hexafluorisopropylgruppe und einer 1,1,1,3,3,3-Hexafluoroisopropoxygruppe.

**5.** Nicht-wässrige Elektrolytlösung nach Anspruch 1, wobei in der allgemeinen Formel [2] mindestens eines von $R^5$ bis $R^7$ ein Fluoratom ist, und mindestens der verbleibenden $R^5$ bis $R^7$ eine Gruppe ist, welche ausgewählt ist aus einer Alkylgruppe, einer Alkenylgruppe, einer Alkinylgruppe, einer Arylgruppe, einer Alkoxygruppe, einer Alkenyloxygruppe, einer Alkinyloxygruppe und einer Aryloxygruppe, die 6 oder weniger Kohlenstoffatome aufweisen und ein Fluoratom umfassen können.

**6.** Nicht-wässrige Elektrolytlösung nach Anspruch 1 oder 5, wobei in der allgemeinen Formel [2] mindestens eines von $R^5$ bis $R^7$ ein Fluoratom ist, und mindestens eines der verbleibenden $R^5$ bis $R^7$ eine Gruppe ist, welche ausgewählt ist aus einer Methylgruppe, einer Methoxygruppe, einer Ethylgruppe, einer Ethoxygruppe, einer n-Propylgruppe, einer Isopropylgruppe, einer n-Propoxygruppe, einer Isopropoxygruppe, einer Vinylgruppe, einer Allylgruppe, einer Allyloxygruppe, einer Ethinylgruppe, einer 2-Propinylgruppe, einer 2-Propinyloxygruppe, einer Phenylgruppe, einer Phenoxygruppe, einer Trifluormethylgruppe, einer Trifluormethoxygruppe, einer 2,2-Difluorethylgruppe, einer 2,2-Difluorethoxygruppe, einer 2,2,2-Trifluorethylgruppe, einer 2,2,2-Trifluorethoxygruppe, einer 2,2,3,3-Tetrafluoropropylgruppe, einer 2,2,3,3-Tetrafluoropropoxygruppe, einer 1,1,1,3,3,3-Hexafluorisopropylgruppe und einer 1,1,1,3,3,3-Hexafluorisopropoxygruppe.

**7.** Nicht-wässrige Elektrolytlösung nach einem der Ansprüche 1 bis 6, wobei ein Gegenkation des durch die allgemeinen Formeln [1] und [2] dargestellten Salzes, das ein Imid-Anion aufweist, aus einer Gruppe bestehend aus einem Lithiumion, einem Natriumion, einem Kaliumion und einem Tetraalkylammoniumion ausgewählt ist.

**8.** Nicht-wässrige Elektrolytlösung nach Anspruch 1, wobei ein negatives Ion des Salzes, das ein Imid-Anion aufweist und durch die allgemeine Formel [1] dargestellt ist, aus der Gruppe bestehend aus den folgenden negativen Ionen ausgewählt ist:

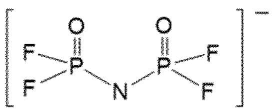
Compound No.1

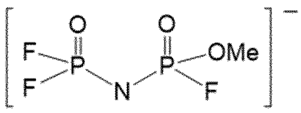
Compound No. 2

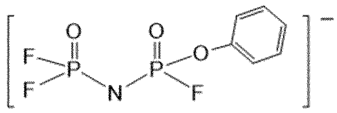
Compound No.3

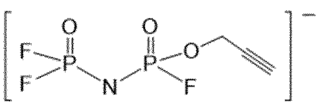
Compound No.4

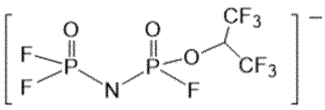
Compound No.5

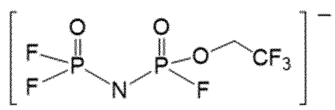
Compound No.6

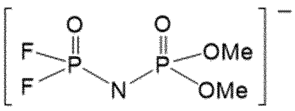
Compound No.7

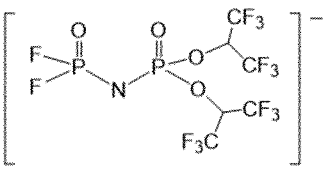
Compound No.8

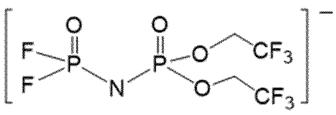
Compound No.9

**9.** Nicht-wässrige Elektrolytlösung nach Anspruch 8, wobei das negative Ion des Salzes, das ein Imid-Anion aufweist und durch die allgemeine Formel [1] dargestellt ist, aus der Gruppe bestehend aus den Verbindungen mit den Nummern 1, 2, 3 und 5 ausgewählt ist.

**10.** Nicht-wässrige Elektrolytlösung nach Anspruch 1, wobei ein negatives Ion des Salzes, das ein Imid-Anion aufweist und durch die allgemeine Formel [2] dargestellt ist, aus der Gruppe bestehend aus den folgenden negativen Ionen ausgewählt ist:

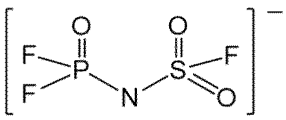
Compound No. 10

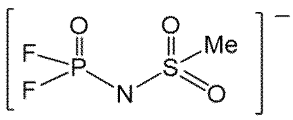
Compound No. 11

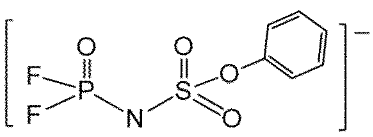
Compound No. 12

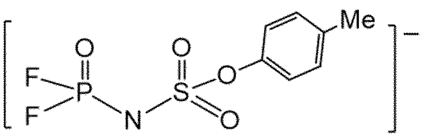
Compound No. 13

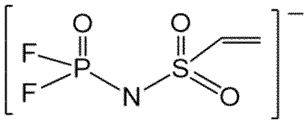
Compound No. 14

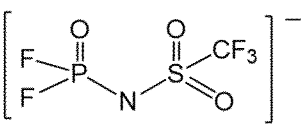
Compound No. 15

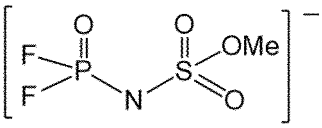
Compound No. 16

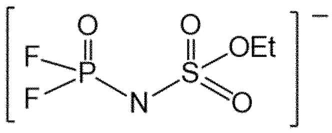
Compound No. 17

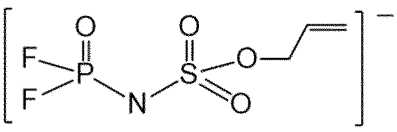
Compound No. 18

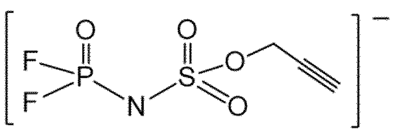
Compound No. 19

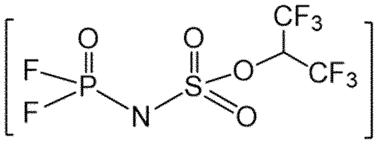

Compound No. 20

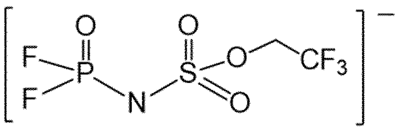

Compound No. 21

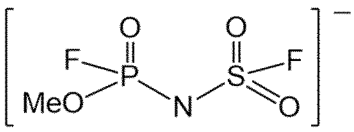

Compound No. 22

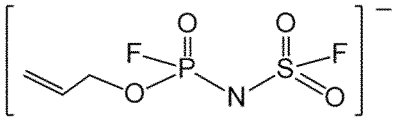

Compound No. 23

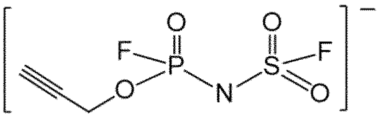

Compound No. 24

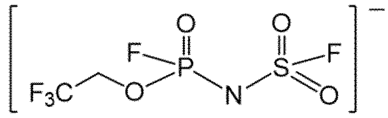

Compound No. 25

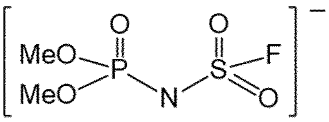

Compound No. 26

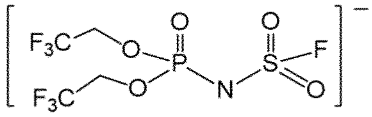

Compound No. 27

**11.** Nicht-wässrige Elektrolytlösung nach Anspruch 10, wobei das negative Ion des Salzes, das ein Imid-Anion aufweist und durch die allgemeine Formel [2] dargestellt ist, aus der Gruppe bestehend aus den Verbindungen mit den Nummern 10, 11, 14 und 15 ausgewählt ist.

**12.** Nicht-wässrige Elektrolytlösung nach einem der Ansprüche 1 bis 11, wobei $R_a$ der allgemeinen Formel [3] ein F-Atom, ein Cl-Atom, ein Br-Atom, ein I-Atom, eine Methylgruppe, eine Methoxygruppe, eine Ethylgruppe, eine Ethoxygruppe, eine n-Propylgruppe, eine n-Propoxygruppe, eine Isopropylgruppe, eine Isopropoxygruppe, eine 2-Propenylgruppe, eine 2-Propenyloxygruppe, eine 2-Propinylgruppe, eine n-Butylgruppe, eine tert-Butylgruppe, eine Trifluormethylgruppe, eine Trifluorethylgruppe, eine Trifluorethoxygruppe, eine Phenylgruppe, eine Phenoxygruppe, eine Naphthylgruppe, eine Perfluorphenylgruppe, eine Perfluorphenoxygruppe, eine Pyrrolylgruppe oder eine Pyridinylgruppe ist, und die $R_b$ bis $R_h$ jeweils unabhängig voneinander ein Wasserstoffatom, ein F-Atom, ein Cl-Atom, ein Br-Atom, ein I-Atom, eine Methylgruppe, eine Ethylgruppe, eine n-Propylgruppe, eine Isopropylgruppe, eine n-Butylgruppe, eine tert-Butylgruppe, eine Trifluormethylgruppe, eine Trifluorethylgruppe, eine Phenylgruppe, eine Naphthylgruppe, eine Trifluorphenylgruppe, eine Pyrrolylgruppe oder eine Pyridinylgruppe sind.

**13.** Nicht-wässrige Elektrolytlösung nach einem der Ansprüche 1 bis 11, wobei die durch die allgemeine Formel [3] dargestellte Sulfonatverbindung eine durch eine nachstehende allgemeine Formel [4] oder [5] dargestellte Sulfonatverbindung ist,

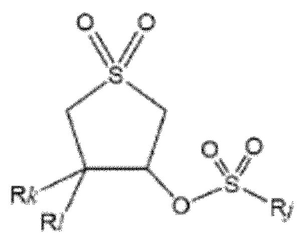

[4]

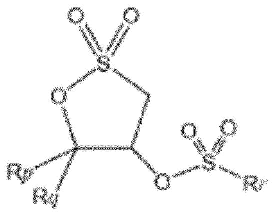

[5]

wobei

in der Formel [4]

$R_j$ ein Halogenatom, eine C1-20-Alkylgruppe, die mit einem Halogenatom substituiert sein kann, eine C5-20-Cycloalkylgruppe, die mit einem Halogenatom substituiert sein kann, eine C2-20-Alkenylgruppe, die mit einem Halogenatom substituiert sein kann, eine C2-20-Alkinylgruppe, die mit einem Halogenatom substituiert sein kann, eine C6-40-Arylgruppe, die mit einem Halogenatom substituiert sein kann, eine C2-40-Heteroarylgruppe, die mit einem Halogenatom substituiert sein kann, eine C1-20-Alkoxygruppe, die mit einem Halogenatom substituiert sein kann, eine C5-20-Cycloalkoxygruppe, die mit einem Halogenatom substituiert sein kann, eine C2-20-Alkenyloxygruppe, die mit einem Halogenatom substituiert sein kann, eine C2-20-Alkinyloxygruppe, die mit einem Halogenatom substituiert sein kann, eine C6-40-Aryloxygruppe, die mit einem Halogenatom substituiert sein kann, oder eine C2-40-Heteroaryloxygruppe, die mit einem Halogenatom substituiert sein kann, ist, und

$R_k$ und $R_l$ jeweils unabhängig voneinander ein Wasserstoffatom, ein Halogenatom, eine C1-20-Alkylgruppe, die mit einem Halogenatom substituiert sein kann, eine C2-20-Alkenylgruppe, die mit einem Halogenatom substituiert sein kann, eine C2-20-Alkinylgruppe die mit einem Halogenatom substituiert sein kann, eine C1-20-Alkoxygruppe, die mit einem Halogenatom substituiert sein kann, eine C5-20-Cycloalkylgruppe, die mit einem Halogenatom substituiert sein kann, eine C6-40-Arylgruppe, die mit einem Halogenatom substituiert sein kann, oder eine C2-40-Heteroarylgruppe, die mit einem Halogenatom substituiert sein kann, sind; und

in der Formel [5]

$R_r$ ein Halogenatom, eine C1-20-Alkylgruppe, die mit einem Halogenatom substituiert sein kann, eine C5-20-Cycloalkylgruppe, die mit einem Halogenatom substituiert sein kann, eine C2-20-Alkenylgruppe, die mit einem Halogenatom substituiert sein kann, eine C2-20-Alkinylgruppe, die mit einem Halogenatom substituiert sein kann, eine C6-40-Arylgruppe, die mit einem Halogenatom substituiert sein kann, eine C2-40-Heteroarylgruppe, die mit einem Halogenatom substituiert sein kann, eine C1-20-Alkoxygruppe, die mit einem Halogenatom substituiert sein kann, eine C5-20-Cycloalkoxygruppe, die mit einem Halogenatom substituiert sein kann, eine C2-20-Alkenyloxygruppe, die mit einem Halogenatom substituiert sein kann, eine C2-20-Alkinyloxygruppe, die mit einem Halogenatom substituiert sein kann, eine C6-40-Aryloxygruppe, die mit einem Halogenatom substituiert sein kann, oder eine C2-40-Heteroaryloxygruppe, die mit einem Halogenatom substituiert sein kann, ist, und $R_p$ und $R_q$ jeweils unabhängig voneinander ein Wasserstoffatom, ein Halogenatom, eine C1-20-Alkylgruppe, die mit einem Halogenatom substituiert sein kann, eine C2-20-Alkenylgruppe, die mit einem Halogenatom substituiert sein kann, eine C2-20-Alkinylgruppe, die mit einem Halogenatom substituiert sein kann, eine C1-20-Alkoxygruppe, die mit einem Halogenatom substituiert sein kann, eine C5-20-Cycloalkylgruppe, die mit einem Halogenatom substituiert sein kann, eine C6-40-Arylgruppe, die mit einem Halogenatom substituiert sein kann, oder eine C2-40-Heteroarylgruppe, die mit einem Halogenatom substituiert sein kann, sind.

**14.** Nicht-wässrige Elektrolytlösung nach Anspruch 13, wobei $R_k$ und $R_l$ der Formel [4] beide ein Wasserstoffatom sind.

**15.** Nicht-wässrige Elektrolytlösung nach Anspruch 13, wobei $R_p$ und $R_q$ der Formel [5] beide ein Wasserstoffatom sind.

**16.** Nicht-wässrige Elektrolytlösung nach Anspruch 13, wobei $R_j$ der allgemeinen Formel [4] ein F-Atom, ein Cl-Atom, ein Br-Atom, ein I-Atom, eine Methylgruppe, eine Ethylgruppe, eine n-Propylgruppe, eine Isopropylgruppe, eine n-Butylgruppe, eine tert-Butylgruppe, eine Trifluormethylgruppe, eine Trifluorethylgruppe, eine Methoxygruppe, eine 2-Propinylgruppe, eine Phenylgruppe, eine Naphthylgruppe, eine Trifluorphenylgruppe, eine Pyrrolylgruppe oder eine Pyridinylgruppe ist, und die $R_k$ und $R_l$ jeweils unabhängig voneinander ein Wasserstoffatom, ein F-Atom, ein Cl-Atom, ein Br-Atom, ein I-Atom, eine Methylgruppe, eine Ethylgruppe, eine n-Propylgruppe, eine Isopropylgruppe, eine n-Butylgruppe, eine tert-Butylgruppe, eine Trifluormethylgruppe, eine Trifluorethylgruppe, eine Phenylgruppe, eine Naphthylgruppe, eine Trifluorphenylgruppe, eine Pyrrolylgruppe oder eine Pyridinylgruppe sind.

**17.** Nicht-wässrige Elektrolytlösung nach Anspruch 13, wobei $R_r$ der allgemeinen Formel [5] ein F-Atom, ein Cl-Atom, ein Br-Atom, ein I-Atom, eine Methylgruppe, eine Ethylgruppe, eine n-Propylgruppe, eine Isopropylgruppe, eine n-Butylgruppe, eine tert-Butylgruppe, eine Trifluormethylgruppe, eine Trifluorethylgruppe, eine Methoxygruppe, eine 2-Propinylgruppe, eine Phenylgruppe, eine Naphthylgruppe, eine Trifluorphenylgruppe, eine Pyrrolylgruppe oder eine Pyridinylgruppe ist, und die $R_p$ und $R_q$ jeweils unabhängig voneinander ein Wasserstoffatom, ein F-Atom, ein Cl-Atom, ein Br-Atom, ein I-Atom, eine Methylgruppe, eine Ethylgruppe, eine n-Propylgruppe, eine Isopropylgruppe, eine n-Butylgruppe, eine tert-Butylgruppe, eine Trifluormethylgruppe, eine Trifluorethylgruppe, eine Phenylgruppe, eine Naphthylgruppe, eine Trifluorphenylgruppe, eine Pyrrolylgruppe oder eine Pyridinylgruppe sind.

**18.** Nicht-wässrige Elektrolytlösung nach einem der Ansprüche 1 bis 13, 15 und 17, wobei die durch die allgemeine Formel [3] dargestellte Sulfonatverbindung mindestens eine ist, welche aus den durch die nachstehenden Formeln [6] bis [23] dargestellten Verbindungen ausgewählt ist:

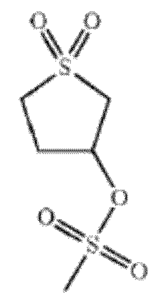
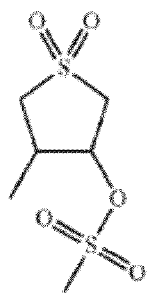
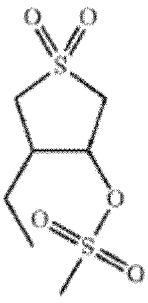
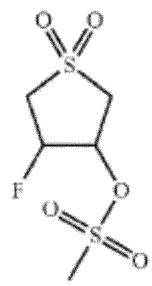
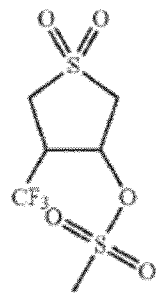

[6] [7] [8] [9] [10]

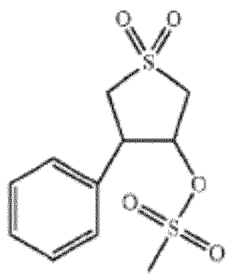
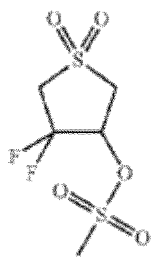
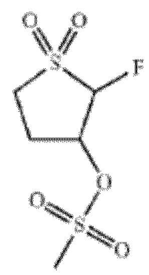
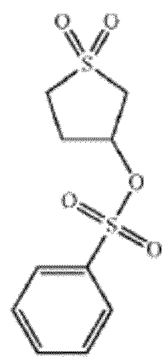

[11] [12] [13] [14]

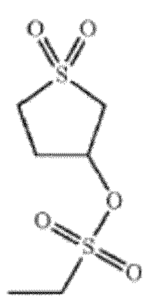
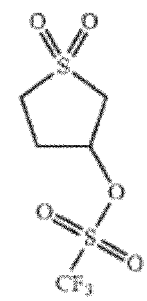
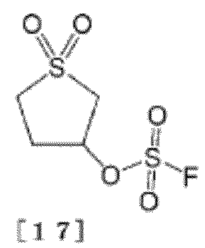
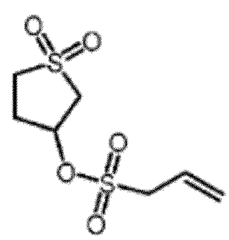

[15] [16] [17] [18]

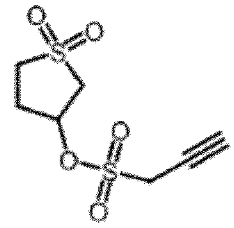

[19]

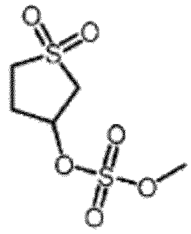

[20]

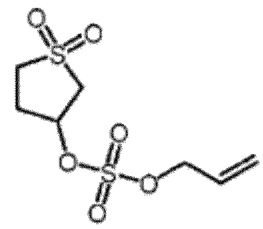

[21]

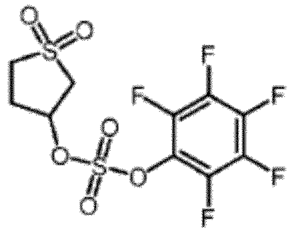

[22]

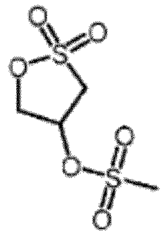

[23]

**19.** Nicht-wässrige Elektrolytlösung nach Anspruch 18, wobei die durch die allgemeine Formel [3] dargestellte Sulfonatverbindung aus den durch die Formeln [6] und [13] bis [23] dargestellten Verbindungen ausgewählt ist.

**20.** Nicht-wässrige Elektrolytlösung nach Anspruch 19, wobei die durch die allgemeine Formel [3] dargestellte Sulfonatverbindung aus den durch die Formeln [6], [13], [14], [16], [17], [19], [20] und [23] dargestellten Verbindungen ausgewählt ist.

**21.** Nicht-wässrige Elektrolytlösung nach Anspruch 19, wobei die durch die allgemeine Formel [3] dargestellte Sulfonatverbindung aus den durch die Formeln [6], [13], [14], [17] und [23] dargestellten Verbindungen ausgewählt ist.

**22.** Nicht-wässrige Elektrolytlösung nach einem der Ansprüche 1 bis 21, wobei die Menge des Bestandteils (I) bezogen auf eine Gesamtmenge der Bestandteile (I) bis (IV) 0,005 bis 12,0 Massenprozent beträgt.

**23.** Nicht-wässrige Elektrolytlösung nach einem der Ansprüche 1 bis 22, wobei die Menge des Bestandteils (II) bezogen auf eine Gesamtmenge der Bestandteile (I) bis (IV) 0,01 bis 10,0 Massenprozent beträgt.

**24.** Nicht-wässrige Elektrolytlösung nach Anspruch 1, zudem umfassend mindestens ein Additiv, welches ausgewählt ist aus der Gruppe bestehend aus Cyclohexylbenzol, Biphenyl, t-Butylbenzol, t-Amylbenzol, Fluorbenzol, Vinylencarbonat, Vinylethylencarbonat, Difluoranisol, Fluorethylencarbonat, 1,6-Diisocyanatohexan, Ethinylethylencarbonat, trans-Difluorethylencarbonat, Propansulton, Propensulton, Dimethylvinylencarbonat, 1,3,2-Dioxathiolan-2,2-dioxid, 4-Propyl-1,3,2-dioxathiolan-2,2-dioxid, Methylenmethandisulfonat, 1,2-Ethandisulfonsäureanhydrid, Tris(trimethylsilyl)borat, Succinonitril, (Ethoxy)pentafluorocyclotriphosphazen, Methansulfonylfluorid, Lithiumacrylat, Natriumacrylat, Lithiummethacrylat, Natriummethacrylat, Lithiummethylsulfat, Natriummethylsulfat, Lithiumethylsulfat, einem Gelbildner und einem vernetzenden Polymer.

**25.** Nicht-wässrige Elektrolytlösung nach Anspruch 1, wobei eine Gesamtheit an Alkalimetallsalzen vier oder mehr Arten von Alkalimetallsalzen umfasst.

**26.** Nicht-wässrige Elektrolytlösung nach Anspruch 1, wobei eine Gesamtheit an Alkalimetallsalzen fünf oder mehr Arten von Alkalimetallsalzen umfasst.

**27.** Sekundärbatterie mit nicht-wässrigem Elektrolyt, umfassend mindestens eine positive Elektrode, eine negative Elektrode und eine nicht-wässrige Elektrolytlösung nach einem der Ansprüche 1 bis 26.

**28.** Sekundärbatterie mit nicht-wässrigem Elektrolyt nach Anspruch 27, wobei ein Material der negativen Elektrode ausgewählt ist aus der Gruppe bestehend aus einem Lithiummetall, einer Legierung von Lithiummetall und eines weiteren Metalls, einer intermetallischen Verbindung, einem Kohlenstoffmaterial, einem Metalloxid, einem Metallnitrid, einem aktivierten Kohlenstoff und einem leitfähigen Polymer.

**29.** Sekundärbatterie mit nicht-wässrigem Elektrolyt nach Anspruch 28, wobei das Kohlenstoffmaterial künstlicher Graphit oder natürlicher Graphit ist.

**30.** Sekundärbatterie mit nicht-wässrigem Elektrolyt nach Anspruch 27, wobei ein Aktivmaterial der negativen Elektrode Graphit und $SiO_x$ umfasst.

**31.** Sekundärbatterie mit nicht-wässrigem Elektrolyt nach Anspruch 28, wobei das Kohlenstoffmaterial leicht graphitierbarer Kohlenstoff, schwer graphitierbarer Kohlenstoff (Hartkohlenstoff) mit einem Ebenenabstand der (002)-Ebene von 0,37 nm oder mehr oder Graphit mit einem Ebenenabstand der (002)-Ebene von 0,34 nm oder weniger ist.

**32.** Sekundärbatterie mit nicht-wässrigem Elektrolyt nach Anspruch 27, wobei ein Material der positiven Elektrode mindestens eines umfasst, welches ausgewählt ist aus der Gruppe bestehend aus lithiumhaltigen Übergangsmetall-Mischoxiden, lithiumhaltigen Übergangsmetall-Mischoxiden, worin eine Mehrzahl an Übergangsmetallen vermischt sind, lithiumhaltigen Übergangsmetall-Mischoxiden, worin ein Teil der Übergangsmetallen durch ein anderes Metall als die Übergangsmetalle ersetzt ist, Phosphorsäureverbindungen von Übergangsmetallen, $TiO_2$, $V_2O_5$ MoOs, $TiS_2$, FeS, leitfähigen Polymeren, aktiviertem Kohlenstoff, radikalbildenden Polymeren und Kohlenstoffmaterialien.

**33.** Sekundärbatterie mit nicht-wässrigem Elektrolyt nach Anspruch 27, wobei ein Material der positiven Elektrode mindestens eines umfasst, welches ausgewählt ist aus der Gruppe bestehend aus lithiumhaltigen Übergangsmetall-Mischoxiden und lithiumhaltigen Übergangsmetall-Mischoxiden, worin eine Mehrzahl an Übergangsmetallen, die aus Co, Mn und Ni ausgewählt sind, vermischt sind.

**34.** Sekundärbatterie mit nicht-wässrigem Elektrolyt nach Anspruch 32 oder 33, wobei das lithiumhaltige Übergangsmetall-Mischoxid ausgewählt ist aus der Gruppe bestehend aus $LiCoO_2$, $LiNiO_2$, $LiMnO_2$, $LiMn_2O_4$, $LiNi_{0,8}Co_{0,1}Mn_{0,1}O_2$ und $NaNi_{0,5}Ti_{0,3}Mn_{0,2}O_2$.

**35.** Sekundärbatterie mit nicht-wässrigem Elektrolyt nach Anspruch 32, wobei die Phosphorsäureverbindung von Übergangsmetallen ausgewählt ist aus der Gruppe bestehend aus $LiFePO_4$, $LiCoPO_4$ und $LiMnPO_4$.

**36.** Sekundärbatterie mit nicht-wässrigem Elektrolyt nach Anspruch 32, wobei das leitfähige Polymer ausgewählt ist aus der Gruppe bestehend aus Polyacetylen, Polyparaphenylen, Polyanilin und Polypyrrol.

**37.** Sekundärbatterie mit nicht-wässrigem Elektrolyt nach Anspruch 27, wobei ein Material der negativen Elektrode ein leitfähiges Material, welches ausgewählt ist aus der Gruppe bestehend aus Acetylenruß, Ketjen-Ruß, Kohlenstofffaser und Graphit, und ein Bindemittel, welches ausgewählt ist aus der Gruppe bestehend aus Polytetrafluorethylen, Polyvinylidendifluorid, SBR-Harz und Polyimid, umfasst.

**38.** Sekundärbatterie mit nicht-wässrigem Elektrolyt nach Anspruch 27, wobei ein Material der positiven Elektrode ein leitfähiges Material, welches ausgewählt ist aus der Gruppe bestehend aus Acetylenruß, Ketjen-Ruß, Kohlenstofffaser und Graphit, und ein Bindemittel, welches ausgewählt ist aus der Gruppe bestehend aus Polytetrafluorethylen, Polyvinylidendifluorid, SBR-Harz und Polyimid, umfasst.

**39.** Sekundärbatterie mit nicht-wässrigem Elektrolyt nach Anspruch 27, zudem umfassend einen Separator, wobei der Separator ein Vliesstoff oder eine poröse Folie ist, der/die aus Polypropylen, Polyethylen, Papier oder Glasfaser hergestellt ist.

**40.** Sekundärbatterie mit nicht-wässrigem Elektrolyt nach Anspruch 27, wobei ein Material der positiven Elektrode $LiNi_{0,8}Co_{0,1}Mn_{0,1}O_2$ oder $NaNi_{0,5}Ti_{0,3}Mn_{0,2}O_2$ umfasst.

**41.** Sekundärbatterie mit nicht-wässrigem Elektrolyt nach Anspruch 27, wobei ein Material der negativen Elektrode Graphit, der Silicium enthält, oder Hartkohlenstoff umfasst.

## Revendications

**1.** Solution d'électrolyte non aqueux, comprenant :

(I) au moins un choisi parmi les sels ayant un anion imide représenté par les formules générales (1) et (2) ci-dessous ;
(II) un composé sulfonate représenté par la formule générale (3) ci-dessous ;
(III) un solvant organique non aqueux ou un liquide ionique ;
et
(IV) un soluté,

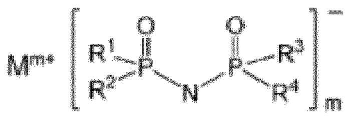

[1]

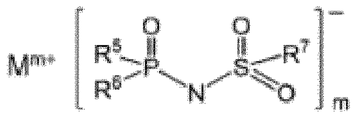

[2]

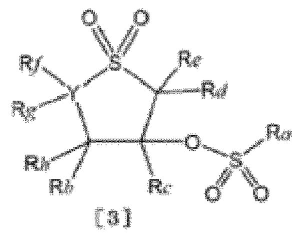

[3]

dans laquelle,

dans la formule générale (1),

$R^1$ à $R^4$ sont chacun indépendamment un atome de fluor ou un groupe organique choisi parmi un groupe alkyle linéaire en C1 à C10, un groupe alkyle ramifié en C3 à C10, un groupe alcoxy linéaire e C1 à C10, un groupe alcoxy ramifié en C3 à C10, un groupe alcényle en C2 à C10, un groupe alcényloxy en C2 à C10, un groupe alcynyle en C2 à C10, un groupe alcynyloxy en C2 à C10, un groupe cycloalkyle en C3 à C10, un groupe cycloalcoxy en C3 à C10, un groupe cycloalcényle en C3 à C10, un groupe cycloalcényloxy en C3 à C10, un groupe aryle en C6 à C10 et un groupe aryloxy en C6 à C10 et un atome de fluor, un atome d'oxygène ou une liaison insaturée peuvent exister dans le groupe organique, à la condition qu'au moins un de $R^1$ à $R^4$ soit un atome de fluor,

$M^{m+}$ est un cation métallique alcalin, un cation métallique alcalino-terreux ou un cation onium et

m est un nombre entier qui est le même qu'une valence d'un cation correspondant ;

dans la formule générale (2),

$R^5$ à $R^7$ sont chacun indépendamment un atome de fluor ou un groupe organique choisi parmi un groupe alkyle linéaire en C1 à C10, un groupe alkyle ramifié en C3 à C10, un groupe alcoxy linéaire en C1 à C10, un groupe alcoxy ramifié en C3 à C10, un groupe alcényle en C2 à C10, un groupe alcényloxy en C2 à C10, un groupe alcynyle en C2 à C10, un groupe alcynyloxy en C2 à C10, un groupe cycloalkyle en C3 à C10, un groupe cycloalcoxy en C3 à C10, un groupe cycloalcényle en C3 à C10, un groupe cycloalcényloxy en C3 à C10, un groupe aryle en C6 à C10 et un groupe aryloxy en C6 à C10 et un atome de fluor, un atome d'oxygène ou une liaison insaturée peuvent aussi exister dans le groupe organique, à la condition qu'au moins un de $R^5$ à $R^7$ soit un atome de fluor,

$M^{m+}$est un cation métallique alcalin, un cation métallique alcalino-terreux ou un cation onium et

m est un nombre entier qui est le même qu'une valence d'un cation correspondant ; et,

dans la formule (3),

$R_a$ est un atome d'halogène, un groupe alkyle en C1 à C20 qui peut être substitué avec un atome d'halogène, un groupe cycloalkyle en C5 à C20 qui peut être substitué avec un atome d'halogène, un groupe alcényle en C2 à C20 qui peut être substitué avec un atome d'halogène, un groupe alcynyle en C2 à C20 qui peut être substitué avec un atome d'halogène, un groupe aryle en C6 à C40 qui peut être substitué avec un atome d'halogène, un groupe hétéroaryle en C2 à C40 qui peut être substitué avec un atome d'halogène, un groupe alcoxy en C1 à C20 qui peut être substitué avec un atome d'halogène, un groupe cycloalcoxy

en C5 à C20 qui peut être substitué avec un atome d'halogène, un groupe alcényloxy en C2 à C20 qui peut être substitué avec un atome d'halogène, un groupe alcynyloxy en C2 à C20 qui peut être substitué avec un atome d'halogène, un groupe aryloxy en C6 à C40 qui peut être substitué avec un atome d'halogène ou un groupe hétéroaryloxy en C2 à C40 qui peut être substitué avec un atome d'halogène,

$R_b$ à $R_h$ sont chacun indépendamment un atome d'hydrogène, un groupe alkyle en C1 à C20 qui peut être substitué avec un atome d'halogène, un groupa alcényle en C2 à C20 qui peut être substitué avec un atome d'halogène, un groupe alcynyle en C2 à C20 qui peut être substitué avec un atome d'halogène, un groupe alcoxy en C1 à C20 qui peut être substitué avec un atome d'halogène, un groupe cycloalkyle en C5 à C20 qui peut être substitué avec un atome d'halogène, un groupe aryle en C6 à C40 qui peut être substitué avec un atome d'halogène ou un groupe hétéroaryle en C2 à C40 qui peut être substitué avec un atome d'halogène et

Y est un atome d'oxygène ou un atome de carbone et lorsque Y est un atome d'oxygène, $R_f$ et $R_g$ n'existent pas.

**2.** Solution d'électrolyte non aqueux selon la revendication 1, dans laquelle, dans les formules générales (1) et (2), tous de $R^1$ à $R^7$ sont un atome de fluor.

**3.** Solution d'électrolyte non aqueux selon la revendication 1, dans laquelle, dans la formule générale (1), au moins de $R^1$ à $R^4$ es un atome de fluor et au moins un des $R^1$ à $R^4$ restants est un groupe choisi parmi un groupe alkyle, un groupe alcényle, un groupe alcynyle, un groupe aryle, un groupe alcoxy, un groupe alcényloxy, un groupe alcynyloxy et un groupe aryloxy, qui ont 6 ou moins atomes de carbone et peuvent comprendre un atome de fluor.

**4.** Solution d'électrolyte non aqueux selon la revendication 1 ou 3, dans laquelle, dans la formule générale (1), au moins un de $R^1$ à $R^4$ est un atome de fluor et au moins un des $R^1$ à $R^4$ restants est un groupe choisi parmi un groupe méthyle, un groupe méthoxy, un groupe éthyle, un groupe éthoxy, un groupe n-propyle, un groupe isopropyle, un groupe n-propoxy, un groupe isopropoxy, un groupe vinyle, un groupe allyle, un groupe allyloxy, un groupe éthynyle, un groupe 2-propynyle, un groupe 2-propynyloxy, un groupe phényle, un groupe phénoxy, un groupe trifluorométhyle, un groupe trifluorométhoxy, un groupe 2,2-difluoroéthyle, un groupe 2,2-difluoroé-thoxy, un groupe 2,2,2-trifluoroéthyle, un groupe 2,2,2-trifluoroéthoxy, un groupe 2,2,3,3-tétrafluoropropyle, un groupe 2,2,3,3-tétrafluoropropoxy, un groupe 1,1,1,3,3,3-hexafluoroisopropyle et un groupe 1,1,1,3,3,3-hexafluo-roisopropoxy.

**5.** Solution d'électrolyte non aqueux selon la revendication 1, dans laquelle dans la formule générale (2), au moins un de $R^5$ à $R^7$ est un atome de fluor et au moins un des $R^5$ à $R^7$ restants est un groupe choisi parmi un groupe alkyle, un groupe alcényle, un groupe alcynyle, un groupe aryle, un groupe alcoxy, un groupe alcényloxy, un groupe alcynyloxy et un groupe aryloxy, qui ont 6 ou moins atomes de carbone et peuvent comprendre un atome de fluor.

**6.** Solution d'électrolyte non aqueux selon la revendication 1 ou 5, dans laquelle, dans la formule générale (2), au moins un de $R^5$ à $R^7$ est un atome de fluor et au moins un des $R^5$ à $R^7$ restants est un groupe choisi parmi un groupe méthyle, un groupe méthoxy, un groupe éthyle, un groupe éthoxy, un groupe n-propyle, un groupe isopropyle, un groupe n-propoxy, un groupe isopropoxy, un groupe vinyle, un groupe allyle, un groupe allyloxy, un groupe éthynyle, un groupe 2-propynyle, un groupe 2-propynyloxy, un groupe phényle, un groupe phénoxy, un groupe trifluorométhyle, un groupe trifluorométhoxy, un groupe 2,2-difluoroéthyle, un groupe 2,2-difluoroéthoxy, un groupe 2,2,2-trifluoroéthyle, un groupe 2,2,2-trifluoroéthoxy, un groupe 2,2,3,3-tétrafluoropropyle, un groupe 2,2,3,3-tétrafluoropropoxy, un groupe 1,1,1,3,3,3-hexafluoroisopropyle et un groupe 1,1,1,3,3,3-hexafluoroisopropoxy.

**7.** Solution d'électrolyte non aqueux selon l'une quelconque des revendications 1 à 6, dans laquelle un contre cation dudit sel ayant un anion imide représenté par les formules générales (1) et (2) est choisi dans un groupe constitué par un ion lithium, un ion sodium, un ion potassium et un ion tétraalkylammonium.

**8.** Solution d'électrolyte non aqueux selon la revendication 1, dans laquelle un ion négatif dudit sel ayant un anion imide et étant représenté par la formule générale (1) est choisi dans le groupe constitué par les ions négatifs suivants :

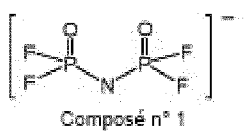
Composé n° 1

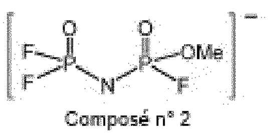
Composé n° 2

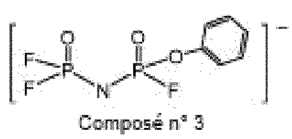
Composé n° 3

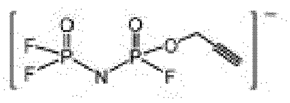
Composé n° 4

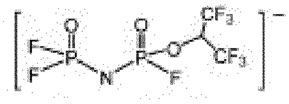
Composé n° 5

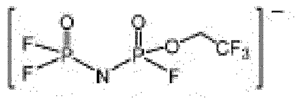
Composé n° 6

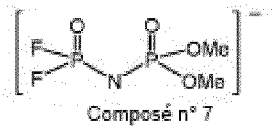
Composé n° 7

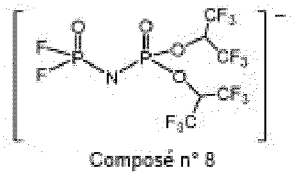
Composé n° 8

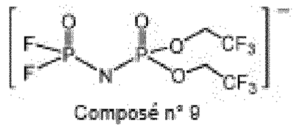
Composé n° 9

**9.** Solution d'électrolyte non aqueux selon la revendication 8, dans laquelle l'ion négatif dudit sel ayant un anion imide et étant représenté par la formule générale (1) est choisi dans le groupe constitué par lescomposés n° 1, 2, 3 et 5.

**10.** Solution d'électrolyte non aqueux selon la revendication 1, dans laquelle un ion négatif dudit sel ayant un anion imide et étant représenté par la formule générale (2) est choisi dans le groupe constitué par les ions négatifs suivants :

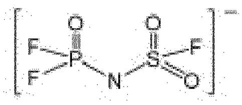
Composé n° 10

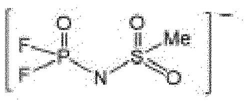
Composé n° 11

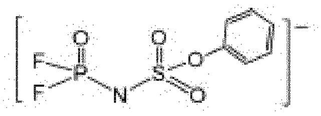
Composé n° 12

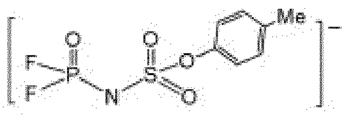
Composé n° 13

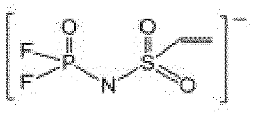
Composé n° 14

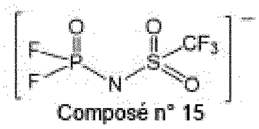
Composé n° 15

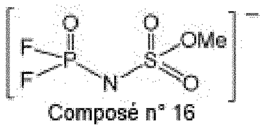
Composé n° 16

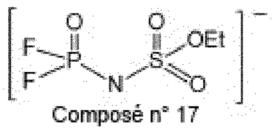
Composé n° 17

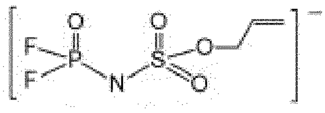
Composé n° 18

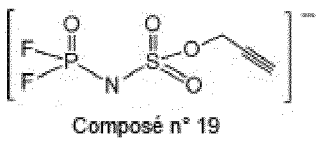
Composé n° 19

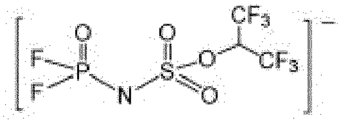
Composé n° 20

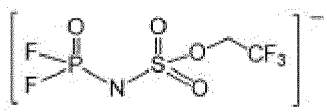
Composé n° 21

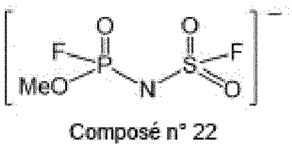
Composé n° 22

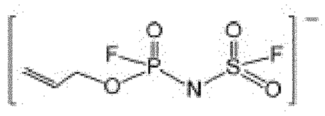
Composé n° 23

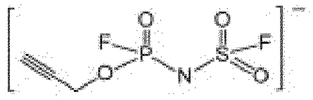

Composé n° 24

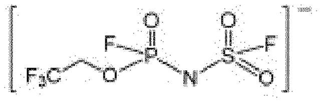

Composé n° 25

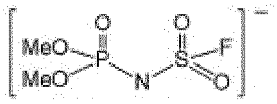

Composé n° 26

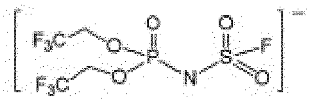

Composé n° 27

**11.** Solution d'électrolyte non aqueux selon la revendication 10, dans laquelle l'ion négatif dudit sel ayant un anion imide et étant représenté par la formule générale (2) est choisi dans le groupe constitué par les composés n° 10, 11, 14 et 15.

**12.** Solution d'électrolyte non aqueux selon l'une quelconque des revendications 1 à 11, dans laquelle $R_a$ de la formule générale (3) est un atome F, un atome Cl, un atome Br, un atome I, un groupe méthyle, un groupe méthoxy, un groupe éthyle, un groupe éthoxy, un groupe n-propyle, un groupe n-propoxy, un groupe isopropyle, un groupe isopropoxy, un groupe 2-propényle, un groupe 2-propényloxy, un groupe 2-propynyle, un groupe n-butyle, un groupe tert-butyle, un groupe trifluorométhyle, un groupe trifluoroéthyle, un groupe trifluoroéthoxy, un groupe phényle, un groupe phénoxy, un groupe naphtyle, un groupe perfluorophényle, un groupe perfluorophénoxy, un groupe pyrrolyle ou un groupe pyridinyle et les $R_b$ à $R_h$ sont chacun indépendamment un atome d'hydrogène, un atome F, un atome Cl, un atome Br, un atome I, un groupe méthyle, un groupe éthyle, un groupe n-propyle, un groupe isopropyle, un groupe n-butyle, un groupe tert-butyle, un groupe trifluorométhyle, un groupe trifluoroéthyle, un groupe phényle, un groupe naphtyle, un groupe trifluorophényle, un groupe pyrrolyle ou un groupe pyridinyle.

**13.** Solution d'électrolyte non aqueux selon l'une quelconque des revendications 1 à 11, dans laquelle le composé sulfonate représenté par la formule générale (3) est un composé sulfonate représenté par une formule générale (4) ou (5) ci-dessous.

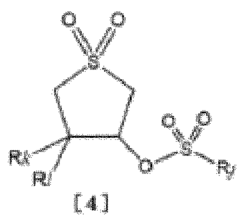

[4]

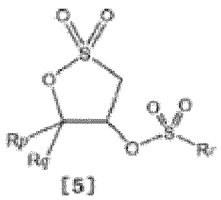

[5]

dans laquelle,

dans la formule (4),
$R_j$ est un atome d'halogène, un groupe alkyle en C1 à C20 qui peut être substitué avec un atome d'halogène, un groupe cycloalkyle en C5 à C20 qui peut être substitué avec un atome d'halogène, un groupe alcényle en C2 à C20 qui peut être substitué avec un atome d'halogène, un groupe alcynyle en C2 à C20 qui peut être substitué avec un atome d'halogène, un groupe aryle en C6 à C40 qui peut être substitué avec un atome d'halogène, un groupe hétéroaryle en C2 à C40 qui peut être substitué avec un atome d'halogène, un groupe alcoxy en C1 à C20 qui peut être substitué avec un atome d'halogène, un groupe cycloalcoxy en C5 à C20 qui peut être substitué avec un atome d'halogène, un groupe alcényloxy en C2 à C20 qui peut être substitué avec un atome d'halogène, un groupe alcynyloxy en C2 à C20 qui peut être substitué avec un atome d'halogène, un groupe aryloxy en C6 à C40 qui peut être substitué avec atome d'halogène ou un groupe hétéroaryloxy en

C2 à C40 qui peut être substitué avec un atome d'halogène et

$R_k$ et $R_l$ sont chacun indépendamment un atome d'hydrogène, un atome d'halogène, un groupe alkyle en C1 à C20 qui peut être substitué avec un atome d'halogène, un groupe alcényle en C2 à C20 qui peut être substitué avec un atome d'halogène, un groupe alcynyle en C2 à C20 qui peut être substitué avec un atome d'halogène , un groupe alcoxy en C1 à C20 qui peut être substitué avec un atome d'halogène, un groupe cycloalkyle en C5 à C20 qui peut être substitué avec un atome d'halogène, un groupe aryle en C6 à C40 qui peut être substitué avec un atome d'halogène ou un groupe hétéroaryle en C2 à C40 qui peut être substitué avec un atome d'halogène ; et,

dans la formule (5),

$R_r$ est un atome d'halogène, un groupe alkyle en C1 à C20 qui peut être substitué avec un atome d'halogène, un groupe cycloalkyle en C5 à C20 qui peut être substitué avec un atome d'halogène, un groupe alcényle en C2 à C20 qui peut être substitué avec un atome d'halogène, un groupe alcynyle en C2 à C20 qui peut être substitué avec un atome d'halogène, un groupe aryle en C6 à C40 qui peut être substitué avec un atome d'halogène, un groupe hétéroaryle en C2 à C40 qui peut être substitué avec un atome d'halogène, un groupe alcoxy en C1 à C20 qui peut être substitué avec un atome d'halogène, un groupe cycloalcoxy en C5 à C20 qui peut être substitué avec un atome d'halogène, un groupe alcényloxy en C2 à C20 qui peut être substitué avec un atome d'halogène, un groupe alcynyloxy en C2 à C20 qui peut être substitué avec un atome d'halogène, un groupe aryloxy en C6 à C40 qui peut être substitué avec un atome d'halogène ou un groupe hétéroaryloxy en C2 à C40 qui peut être substitué avec un atome d'halogène et $R_p$ et $R_q$ sont chacun indépendamment un atome d'hydrogène, un atome d'halogène, un groupe alkyle en C1 à C20 qui peut être substitué avec un atome d'halogène, un groupe alcényle en C2 à C20 qui peut être substitué avec un atome d'halogène, un groupe alcynyle en C2 à C20 qui peut être substitué avec un atome d'halogène, un groupe alcoxy en C1 à C20 qui peut être substitué avec un atome d'halogène, un groupe cycloalkyle en C5 à C20 qui peut être substitué avec un atome d'halogène, un groupe aryle en C6 à C40 qui peut être substitué avec un atome d'halogène ou un groupe hétéroaryle en C2 à C40 qui peut être substitué avec un atome d'halogène.

**14.** Solution d'électrolyte non aqueux selon la revendication 13, dans laquelle les deux $R_k$ et $R_l$ de la formule (4) sont un atome d'hydrogène.

**15.** Solution d'électrolyte non aqueux selon la revendication 13, dans laquelle les deux $R_p$ et $R_q$ de la formule (5) sont un atome d'hydrogène.

**16.** Solution d'électrolyte non aqueux selon la revendication 13, dans laquelle $R_j$ de la formule générale (4) est un atome F, un atome Cl, un atome Br, un atome I, un groupe méthyle, un groupe éthyle, un groupe n-propyle, un groupe isopropyle, un groupe n-butyle, un groupe tert-butyle, un groupe trifluorométhyle, un groupe trifluoroéthyle, un groupe méthoxy, un groupe 2-propynyle, un groupe phényle, un groupe naphtyle, un groupe trifluorophényle, un groupe pyrrolyle ou un groupe pyridinyle, et les $R_k$ et $R_l$ sont chacun indépendamment un atome d'hydrogène, un atome F, un atome Cl, un atome Br, un atome I, un groupe méthyle, un groupe éthyle, un groupe n-propyle, un groupe isopropyle, un groupe n-butyle, un groupe tert-butyle, un groupe trifluorométhyle, un groupe trifluoroéthyle, un groupe phényle, un groupe naphtyle, un groupe trifluorophényle, un groupe pyrrolyle ou un groupe pyridinyle.

**17.** Solution d'électrolyte non aqueux selon la revendication 13, dans laquelle $R_r$ de la formule générale (5) est un atome F, un atome Cl, un atome Br, un atome I, un groupe méthyle, un groupe éthyle, un groupe n-propyle, un groupe isopropyle, un groupe n-butyle, un groupe tert-butyle, un groupe trifluorométhyle, un groupe trifluoroéthyle, un groupe méthoxy, un groupe 2-propynyle, un groupe phényle, un groupe naphtyle, un groupe trifluorophényle, un groupe pyrrolyle ou un groupe pyridinyle, et les $R_p$ et $R_q$ sont chacun indépendamment un atome d'hydrogène, un atome F, un atome Cl, un atome Br, un atome I, un groupe méthyle, un groupe éthyle, un groupe n-propyle, un groupe isopropyle, un groupe n-butyle, un groupe tert-butyle, un groupe trifluorométhyle, un groupe trifluoroéthyle, un groupe phényle, un groupe naphtyle, un groupe trifluuorophényle, un groupe pyrrolyle ou un groupe pyridinyle.

**18.** Solution d'électrolyte non aqueux selon l'une quelconque des revendications 1 à 13, 15 et 17, dans laquelle le composé sulfonate représenté par la formule générale (3) est au moins un choisi parmi les composés représentés par les formules (6) à (23) ci-dessous.

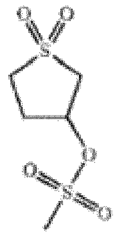
[6]
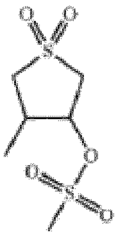
[7]
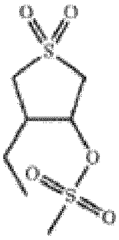
[8]
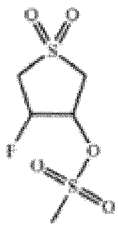
[9]
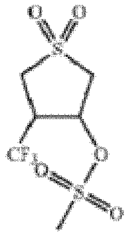
[10]

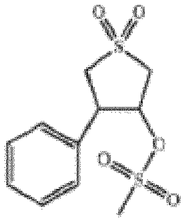
[11]
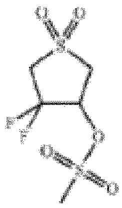
[12]
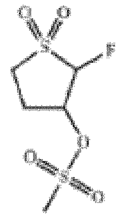
[13]
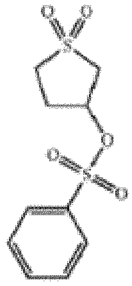
[14]

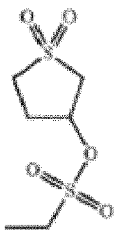
[15]
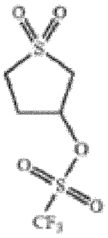
[16]
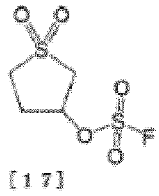
[17]
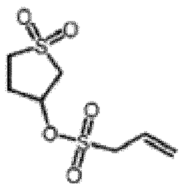
[18]

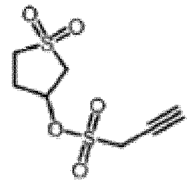
[19]
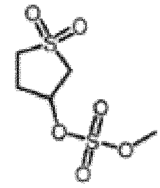
[20]
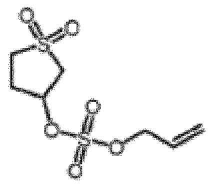
[21]

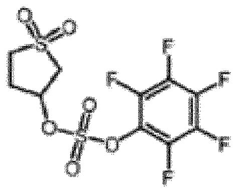
[22]
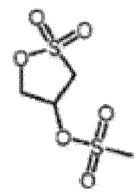
[23]

**19.** Solution d'électrolyte non aqueux selon la revendication 18, dans laquelle le composé sulfonate représenté par la formule générale (3) est choisi parmi les composés représentés par les formules (6) et (13) à (23).

**20.** Solution d'électrolyte non aqueux selon la revendication 19, dans laquelle le composé sulfonate représenté par la formule générale (3) est choisi parmi les composés représentés par les formules (6), (13), (14), (16), (17), (19), (20) et (23).

**21.** Solution d'électrolyte non aqueux selon la revendication 19, dans laquelle le composé sulfonate représenté par la formule générale (3) est choisi parmi les composés représentés par les formules (6), (13), (14), (17) et (23).

**22.** Solution d'électrolyte non aqueux selon l'une quelconque des revendications 1 à 21, dans laquelle la quantité du composant (I) par rapport à une quantité totale des composés (I) à (IV) est de 0,005 à 12 % en masse.

**23.** Solution d'électrolyte non aqueux selon l'une quelconque des revendications 1 à 22, dans laquelle la quantité du composant (II) par rapport à une quantité totale des composés (I) à (IV) est de 0,01 à 10 % en masse.

**24.** Solution d'électrolyte non aqueux selon la revendication 1, comprenant en outre au moins un additif choisi dans le groupe constitué par le cyclohexyl-benzène, le biphényle, le t-butylbenzène, le t-amylbenzène, le fluorobenzène, le carbonate de vinylène, le carbonate de vinyléthylène, le difluoroanisole, le carbonate de fluoroéthylène, le 1,6-diisocyanatohexane, le carbonate d'éthynyléthylène, le carbonate de trans-difluoroéthylène, le propane sultone, le propène sultone, le carbonate de diméthylvinylène, le 1,3,2-dioxathiolane-2,2-dioxyde, le 4-propyl-1,3,2-dioxathiolane-2,2-dioxyde, le méthanedisulfonate de méthylène, l'anhydride 1,2-éthanedisulfonique, le tris(triméthylsilyl)borate, le succinonitrile, l'(éthoxy)pentafluorocyclotriphosphazène, le fluorure de méthanesulfonyle, l'acrylate de lithium, l'acrylate de sodium, le méthacrylate de lithium, le méthacrylate de sodium, le sulfate de lithium méthyle, le sulfate de sodium méthyle, le sulfate de lithium éthyle, un agent gélifiant et un polymère de réticulation.

**25.** Solution d'électrolyte non aqueux selon la revendication 1, dans laquelle un total de sels métalliques alcalins comprend quatre types ou plus de sels métalliques alcalins.

**26.** Solution d'électrolyte non aqueux selon la revendication 1, dans laquelle un total des sels métalliques alcalins comprend cinq types ou plus de sels métalliques alcalins.

**27.** Batterie secondaire à électrolyte non aqueux, comprenant au moins une électrode positive, une électrode négative et une solution d'électrolyte non aqueux selon l'une quelconque des revendications 1 à 26.

**28.** Batterie secondaire à électrolyte non aqueux selon la revendication 27, dans laquelle un matériau de l'électrode négative est choisi dans le groupe constitué par un métal lithium, un alliage de métal lithium et d'un autre métal, un composé intermétallique, un matériau carboné, un oxyde métallique, un nitrure de métal, un charbon actif et un polymère conducteur.

**29.** Batterie secondaire à électrolyte non aqueux selon la revendication 28, dans laquelle ledit matériau carboné est du graphite artificiel ou du graphite naturel.

**30.** Batterie secondaire à électrolyte non aqueux selon la revendication 27, dans laquelle un matériau actif de ladite électrode négative comprend du graphite et $SiO_x$.

**31.** Batterie secondaire à électrolyte non aqueux selon la revendication 28, dans laquelle ledit matériau carboné est du carbone facilement graphitable, du carbone difficilement graphitable (carbone dur) ayant un espacement de plan du plan (002) de 0,37 nm ou plus ou du graphite ayant un espacement de plan du plan (002) de 0,34nm ou moins.

**32.** Batterie à électrolyte non aqueux selon la revendication 27, dans laquelle un matériau de ladite électrode positive comprend au moins un choisi dans le groupe constitué par des oxydes composites de métal de transition contenant du lithium, des oxydes composites de métal de transition contenant du lithium une pluralité de métaux de transition étant mélangés, des oxydes composites de métal de transition contenant du lithium une partie des métaux de transition étant remplacée avec un métal différent des métaux de transition, des composés d'acide phosphorique de métaux de transition, $TiO_2$, $V_2O_5$, $MoO_3$, $TiS_2$, FeS, des polymères conducteurs, du charbon actif, des polymères produisant un radical et des matériaux carbonés.

**33.** Batterie secondaire à électrolyte non aqueux selon la revendication 27, dans laquelle un matériau de ladite électrode positive comprend au moins un choisi dans le groupe constitué par les oxydes composites de métal de transition contenant du lithium et les oxydes composites de métal de transition contenant du lithium une pluralité de métaux de transition choisis parmi Co, Mn et Ni étant mélangés.

**34.** Batterie secondaire à électrolyte non aqueux selon la revendication 32 ou 33, dans laquelle ledit oxyde composite de métal de transition contenant du lithium est choisi dans le groupe constitué par $LiCoO_2$, $LiNiO_2$, $LiMnO_2$, $LiMn_2O_4$, $LiNi_{0,8}Co_{0,1}Mn_{0,1}O_2$ et $NaNi_{0,5}Ti_{0,3}Mn_{0,2}O_2$.

**35.** Batterie secondaire à électrolyte non aqueux selon la revendication 32, dans laquelle ledit composé acide phosphorique de métaux de transition est choisi dans le groupe constitué par $LiFePO_4$, $LiCoPO_4$ et $LiMnPO_4$.

**36.** Batterie secondaire à électrolyte non aqueux selon la revendication 32, dans laquelle ledit polymère conducteur est choisi dans le groupe constitué par le polyacétylène, le polyparaphénylène, la polyaniline et le polypyrrole.

**37.** Batterie secondaire à électrolyte non aqueux selon la revendication 27, dans laquelle un matériau de ladite électrode négative comprend un matériau conducteur choisi dans le groupe constitué par le noir d'acétylène, le noir de Ketjen, de la fibre de carbone et du graphite et un liant choisi dans le groupe constitué par le polytétrafluoroéthylène, le difluorure de polyvinylidène, la résine SBR et le polyimide.

**38.** Batterie secondaire à électrolyte non aqueux selon la revendication 27, dans laquelle un matériau de ladite électrode positive comprend un matériau conducteur choisi dans le groupe constitué par le noir d'acétylène, le noir de Ketjen, de la fibre de carbone et du graphite et un liant choisi dans le groupe constitué par le polytétrafluoroéthylène, le difluorure de polyvinylidène, la résine SBR et le polyimide.

**39.** Batterie secondaire à électrolyte non aqueux selon la revendication 27 comprenant en outre un séparateur, ledit séparateur étant un tissu non tissé ou une feuille poreuse constituée de polypropylène, de polyéthylène, de papier ou de fibre de verre.

**40.** Batterie secondaire à électrolyte non aqueux selon la revendication 27, dans laquelle un matériau de l'électrode positive comprend $LiNi_{0,8}Co_{0,1}Mn_{0,1}O_2$ ou $NaNi_{0,5}Ti_{0,3}Mn_{0,2}O_2$.

**41.** Batterie secondaire à électrolyte non aqueux selon la revendication 27, dans laquelle un matériau de ladite électrode négative comprend du graphite contenant du silicium ou du carbone dur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170271715 A
- WO 2011024251 A
- JP 2013051122 A
- EP 3349290 A1
- EP 3261166 A1
- WO 2017111143 A1
- JP 2010254554 A
- CN 101654229 A
- CN 102617414 A
- WO 2014034043 A
- JP 2002151077 A
- JP 2009137834 A
- US 7135252 B
- JP 2008270201 A
- WO 2013118661 A
- JP 2013030284 A
- WO 2004100293 A
- JP 2008016424 A
- WO 2004042851 A
- WO 2007083155 A
- JP 2007018883 A
- JP 2009176752 A